# EUROPÄISCHE PATENTSCHRIFT

(11) **EP 3 760 047 B1**
(45) Veröffentlichungstag und Bekanntmachung des Hinweises auf die Patenterteilung: **25.12.2024**
(21) Anmeldenummer: 20182716.9
(22) Anmeldetag: 26.06.2020
(51) Int. Cl.: A22C 7/00, B30B 1/18, B30B 9/28, B30B 9/30

(54) **PRESSEINRICHTUNG**
PRESSING DEVICE
DISPOSITIF DE PRESSE

(30) Priorität: 04.07.2019 DE 102019118048; 02.09.2019 DE 102019123487; 15.06.2020 DE 102020115748
(43) Veröffentlichungstag der Anmeldung: 06.01.2021
(60) Teilanmeldung: 24212111.9
(73) Patentinhaber: Textor Maschinenbau GmbH, 87787 Wolfertschwenden (DE)
(72) Erfinder: Zecher, Steffen, 35460 Staufenberg (DE); Schneider, Patrick, 35457 Lollar (DE); Rother, Ingo, 35236 Breidenbach (DE); Schaub, Joachim, 35116 Hatzfeld-Reddinghausen (DE); Nispel, Thomas, 35232 Dautphetal (DE); Schmeiser, Jörg, 87487 Wiggensbach (DE); Ruedin, Pedro, 9014 St. Gallen (CH); Mayer, Josef, 87766 Memmingerberg (DE); Müller, Fabian, 87488 Betzigau (DE); Hehle, Matthias, 87448 Waltenhofen (DE); Seidel, Markus, 87743 Egg an der Günz (DE)
(74) Vertreter: Manitz Finsterwald Patent- und Rechtsanwaltspartnerschaft mbB

(56) Entgegenhaltungen:
- EP-A1- 1 570 979
- WO-A1-98/10918
- WO-A2-2005/027667
- DE-A1- 1 507 976
- DE-A1- 102008 011 375
- JP-A- 2010 089 148
- JP-A- H10 277 796
- US-A- 2 043 366
- US-A- 2 250 649
- US-A- 3 326 120
- US-A- 3 706 209
- US-A1- 2016 213 055

## Beschreibung

Die Erfindung betrifft eine Presseinrichtung zum Pressen von Fleischprodukten, insbesondere gefrorenen und/oder angefrorenen Fleischprodukten, bevorzugt Frischfleischprodukten und/oder Bacon, mit einer sich entlang einer Längsachse erstreckenden Presskammer, in welche ein zu pressendes Produkt einbringbar ist, wobei die Presskammer zumindest ein Gegenelement und wenigstens ein in Richtung des Gegenelements verfahrbares Kontaktelement umfasst, die derart zusammenwirken, dass das in die Presskammer eingebrachte Produkt zwischen dem Gegenelement und dem Kontaktelement komprimierbar ist.

Ferner werden ein verfahrbares Kontaktelement für eine derartige Presseinrichtung, ein System zum Pressen und Weitergeben von Fleischprodukten mit einer Presseinrichtung zum Pressen der Produkte und ein Verfahren zum Pressen und Bearbeiten von Fleischprodukten offenbart.

Derartige Presseinrichtungen können verwendet werden, um Naturfleischprodukte zu komprimieren und dabei insbesondere in eine gewünschte Form zu bringen, sodass das Produkt in einer vorgesehenen oder erforderlichen Form weiteren Bearbeitungsschritten zugeführt oder nach dem Pressen in einer wunschgemäßen und beispielsweise möglichst gleichartigen Form an einen Verbraucher geliefert bzw. verkauft werden kann. Beispielsweise kann es vorgesehen sein, von einem Fleischprodukt und insbesondere von einem Frischfleischprodukt und/oder von Bacon in einem insbesondere letzten Schritt der Verarbeitung vor einem Verpacken Scheiben abzutrennen und aus diesen Scheiben Portionen zu bilden, die zumindest eine Scheibe umfassen. Dabei kann es gewünscht sein, zumindest im Wesentlichen gleiche Scheibengrößen, ein gleichmäßiges Scheiben- bzw. Portionsgewicht sowie eine für einen Kunden ansprechende Form der Portionen mit beispielsweise annähernd gleichartigen Scheiben zu erzeugen. Solche Portionen können in der Folge an eine Verpackungsmaschine übergeben und in dafür vorgesehene Verpackungsmulden eingelegt werden, wobei auch dabei einerseits eine optisch ansprechende Füllung der Verpackungen angestrebt werden kann und andererseits die Abmessungsgrenzen der Verpackungsmulden einzuhalten sind. Um dies zu ermöglichen, können natürliche Fleischprodukte mit zunächst asymmetrischer Form und insbesondere als Naturprodukt in den Verarbeitungsprozess eingeführter Bacon vor dem Abtrennen der Scheiben mittels einer Presseinrichtung in eine symmetrische und zumindest im Wesentlichen quaderförmige Form gepresst werden.

Beispielsweise offenbart DE 15 07 976 A1 nach dem Oberbegriff des Anspruchs 1 und des Anspruchs 2 eine Vorrichtung zum Formen von Fleisch, welche einen mittels einer hydraulischen Pumpe bewegbaren Kolben aufweist, um ein Produkt in einer von einem Formoberteil und einem Formunterteil gebildeten Form komprimieren zu können. Dabei ist das Formoberteil mittels eines hydraulischen Zylinders relativ zu dem Formunterteil bewegbar, um die Form öffnen und ein Produkt einlegen zu können.

In WO 98/10918 A1 ist eine Presse zur hochpräzisen Verarbeitung von Mikroelektronikelementen beschrieben, welche einen Spindeltrieb zum Bewegen der Komponenten der Presse aufweist.

Aus JP H10 277796 A ist ferner eine Presse zur Verarbeitung vorgeformter Gegenstände bekannt, welche während des Pressens einer vorbestimmten Kraft ausgesetzt und erhitzt werden.

In US 3 706 209 A ist wiederum eine Presse zur Verarbeitung von Fleisch- oder Fischprodukten beschrieben, bei welcher ein Produkt in einer gekühlten Druckkammer mittels eines hydraulisch angetriebenen Kolbens komprimiert werden kann.

Ferner zeigt DE 2008 011 375 A1 eine Antriebseinrichtung für eine Presse, bei welcher ein vertikal mittels eines Servomotors bewegbarer Stößel vorgesehen ist, wobei durch die Bewegung des Stößels ein Werkzeugoberteil angetrieben werden kann. Zudem weist die Antriebseinrichtung ein Messsystem auf, um Verkippungen des Stößels detektieren zu können, und es sind zwei weitere Servomotoren mit dem Stößel verbunden, um etwaige Verkippungen ausgleichen zu können.

EP 1 570 979 A1 beschreibt einen Antrieb für eine Gesenkbiegepresse und auch JP 2010 089 148 A betrifft eine Presse, wobei bei diesen Pressen ein jeweiliger schneller Servomotor vorgesehen ist, um ein Presswerkzeug abzusenken und in Kontakt mit einem zu bearbeitenden Werkstück zu bringen, während die darauffolgende Bearbeitung des Werkstücks mittels eines langsam arbeitenden Servomotors erfolgt.

Insbesondere um ein Abtrennen von Scheiben von einem solchen Fleischprodukt zu erleichtern, kann das Fleischprodukt gefroren und/oder angefroren einer Schneidvorrichtung zugeführt werden, welche dazu ausgebildet ist, mittels eines sich bewegenden und insbesondere rotierenden und/oder umlaufenden Messers Scheiben von den Produkten abzutrennen. Eine solche Schneidvorrichtung kann beispielsweise als Hochgeschwindigkeitsslicer ausgebildet sein, wobei derartige Schneidvorrichtungen einen hohen Produktdurchsatz mit mehreren hundert bis einigen tausend Schnitten pro Minute erreichen können. Um bei derart hohen Schneidgeschwindigkeiten und den damit einhergehenden Schneidkräften möglichst präzise Schritte erreichen zu können, kann es vorgesehen sein, die Produkte in gefrorenem oder zumindest angefrorenem Zustand bzw. mit einem Gefrierrand in die Schneidvorrichtung zu führen, um eine stabile Kante für das Eindringen des Messers zu bilden und einen möglichst klaren Schnitt durch das Produkt zu erreichen. Auch das Ablegen bzw. Fallen der abgetrennten Scheiben in einen Bereich, in welchem aus den Scheiben Portionen gebildet werden, kann dadurch in kontrollierbarer Weise erfolgen. Entsprechend kann es häufig notwendig sein, die aufzuschneidenden Produkte auch bereits in gefrorenem und/oder angefrorenem Zustand in einem vorhergehenden Schritt mittels einer Presseinrichtung zu pressen und/oder zu formen.

Bei derartigen Naturfleischprodukten ergibt sich die Problematik, dass diese beispielsweise in ihrer Größe, Form bzw. Kontur oder sonstigen Eigenschaften variieren können. Insbesondere können dabei die am Markt zu erzielenden Preise für Schlachtvieh und die entsprechenden Fleischprodukte, insbesondere für Frischfleischprodukte und/oder Bacon, verschiedene Größen der zu erhaltenden Produkte bedingen. Beispielsweise kann in Zeiten hoher erzielbarer Preise eine Vielzahl solcher Produkte abgesetzt und zur Verfügung gestellt werden, sodass insbesondere eine verhältnismäßig große Zahl kleinerer und magerer Stücke zu verarbeiten und währenddessen zu pressen ist. In Zeiten niedriger Marktpreise wird hingegen in der Regel länger mit einem Absatz gewartet, sodass die Fleischprodukte vorwiegend größer sind und einen höheren Fettgehalt aufweisen. Um solchen Veränderungen zu begegnen, die auch rein zufallsbedingt bei verschieden Naturprodukten auftreten können, ist es meist notwendig, verschiedene Presseinrichtungen für jeweilige Produkte zur Verfügung zu stellen und zu bestimmten Zeiten bzw. für Produkte einer bestimmten Größe vornehmlich zu verwenden.

Darüber hinaus ergibt sich die Schwierigkeit, einen solchen Pressvorgang möglichst präzise steuern zu müssen, da die zu pressenden Produkte eine insbesondere auch produktabhängige Verformbarkeit aufweisen können und sich gerade bei gefrorenen und/oder angefrorenen Produkten bei einer Anwendung einer zu hohen Presskraft Risse bilden können, die zu einer Unbrauchbarkeit des Produktes sowohl zum Verkauf als auch zu einem darauffolgenden Bearbeitungsschritt wie einem Schneiden der Produkte in Scheiben führen können. Dabei ist man häufig darauf angewiesen, die Position, in welche das Kontaktelement zum Pressen des Produktes verfahren wird, auf Erfahrungswerten basierend vorzugeben, was jedoch in Anbetracht der variierenden Produkteigenschaften und insbesondere der variierenden Produktgrößen häufig zu nicht optimalen Resultaten des Pressvorgangs oder sogar einer Beschädigung des Produktes führen kann.

Es ist daher eine Aufgabe der Erfindung, eine Presseinrichtung zum Pressen von Fleischprodukten zu schaffen, die einen flexiblen Einsatz zur wunschgemäßen Bearbeitung verschiedener Produkte und insbesondere Produkte verschiedener Größe sowie eine möglichst einfache und präzise Möglichkeit zur Überwachung und Steuerung des Pressprozesses bietet.

Diese Aufgabe wird gelöst durch eine Presseinrichtung mit den Merkmalen der Ansprüche 1 und 2.

Die Presseinrichtung ist dabei zu einem Pressen von Fleischprodukten vorgesehen. Insbesondere können solche Fleischprodukte in gefrorenem und/oder angefrorenem Zustand, beispielsweise mit einer gefrorenen Oberfläche bzw. einem Gefrierrand, mittels der Presseinrichtung zu verarbeiten sein. Dabei kann es sich bei den zu pressenden bzw. gepressten Fleischprodukten insbesondere um Frischfleisch und/oder um Bacon handeln, wobei diese Produkte sowohl in gefrorenem und/oder in angefrorenem Zustand als auch vollständig ungefroren mittels der Presseinrichtung komprimiert und/oder geformt werden können.

Grundsätzlich kann das Gegenelement, mit welchem das verfahrbare Kontaktelement zusammenwirkt, als ein feststehendes Wandelement ausgebildet sein, wobei es gleichermaßen vorgesehen sein kann, auch das Gegenelement zum Zweck des Pressens eines in die Presskammer eingebrachten Produktes in Richtung des Kontaktelementes zu verfahren. Auch ein Gegenelement kann somit grundsätzlich als ein verfahrbares Kontaktelement ausgebildet sein. Durch das Verfahren des Kontaktelementes in Richtung des Gegenelementes, unabhängig davon, ob das Gegenelement feststehend oder bewegbar ist, kann das eingebrachte Produkt zwischen diesen beiden Elementen komprimiert werden.

Die Presskammer kann eine ebene Auflagefläche für das Produkt bereitstellen, auf welcher das Produkt während des Pressens aufliegt. Diese Auflagefläche kann insbesondere in der Horizontalen orientiert sein, um ein gravitationsbedingtes Bewegen des Produktes in der Presskammer zu verhindern. Die Längsachse der Presskammer weist dabei senkrecht zu den äußeren Begrenzungen der Presskammer in Richtung deren größter Erstreckung in der Ebene dieser Auflagefläche. Für eine Presskammer mit rechteckigem Grundriss verläuft die Längsachse folglich parallel zu den langen Seiten und senkrecht zu den kurzen Seiten.

Der Servomotor zum Verfahren des Kontaktelementes kann einen grundsätzlich beliebig ausgebildeten Elektromotor mit einem Rotor, beispielsweise einen Gleichstrommotor, einen Asynchronmotor oder einen Synchronmotor, aufweisen und umfasst insbesondere eine Messeinrichtung, welche es ermöglicht, jederzeit die genaue Position bzw. die Drehstellung und/oder den Drehwinkel des Rotors zu bestimmen. Dabei kann diese Positionsmessung beispielsweise über einen Drehgeber erfolgen, wozu insbesondere ein Resolver, ein Inkrementalgeber oder ein Absolutwertgeber vorgesehen sein kann.

Ferner kann der Servomotor insbesondere ein Bestandteil eines Servoantriebs zum Verfahren des Kontaktelementes sein, wobei der Servoantrieb zusätzlich zu dem Servomotor einen Servoumrichter mit Leistungselektronik und Regelung umfassen kann. Dadurch kann ein gezieltes Verfahren des Kontaktelementes ermöglicht werden, wobei der Servomotor insbesondere positionsgeregelt, momentengeregelt und/oder geschwindigkeitsgeregelt sein kann.

Indem die Presseinrichtung einen Servomotor bzw. einen Servoantrieb umfasst, mittels dessen das Kontaktelement verfahrbar ist, können somit eine präzise und flexible Steuerung und Durchführung des Pressvorgangs erreicht werden. Zunächst können Positionen, in denen das Kontaktelement im Zuge eines Pressens eines Produktes angeordnet werden soll, präzise vorgegeben und mittels des Servomotors angesteuert werden, wobei gleichermaßen jederzeit eine präzise Information über eine momentane Position eines Kontaktelementes erhalten werden kann. Insbesondere ermöglichen derartige Servomotoren jedoch eine kontrollierte Prozesssteuerung ohne eine feste Vorgabe von Positionen bzw. Endpositionen, in welche das Kontaktelement verfahren werden soll, da der an einem solchen Servomotor wirkende Motorstrom, insbesondere bei hohem und positionsunabhängigem Wirkungsgrad der angehängten Mechanik, in jeder Position des Kontaktelementes einen exakten Rückschluss auf die auf das Kontaktelement wirkende Gegenkraft und entsprechend die Kraft, mit welcher das Produkt gepresst wird, erlaubt. Dies ermöglicht es, ohne jegliche Verwendung weiterer Sensoren stets eine präzise Information über die angewandten Presskräfte zu gewinnen und das jeweilige Kontaktelement flexibel so weit zu verfahren, bis die gewünschte oder notwendige Presskraft auf das Produkt wirkt. Somit kann unabhängig von der jeweiligen Produktgröße stets ein an das jeweilige Produkt angepasster Pressvorgang durchgeführt werden, indem das Kontaktelement bei einem Pressen eines kleineren Produktes in diejenige, im Vergleich zu einem größeren Produkt näher an dem Gegenelement gelegene, Position verfahren wird, in welcher die gewünschte oder notwendige Presskraft registriert wird. Ferner ist es möglich, den Pressvorgang unter Berücksichtigung weiterer, beispielsweise zuvor ermittelter Eigenschaften des Produktes durchzuführen und beispielsweise auch Eigenschaften wie den Fett- und/oder Salzgehalt des Produktes während des Pressvorgangs zu berücksichtigen.

Um einen exakten Rückschluss auf die aufgebrachte Presskraft aus dem ermittelten Motorstrom ziehen zu können, kann der Servomotor insbesondere über einen Linearantrieb mit dem Kontaktelement verbunden sein, bei welchem der Gesamtwirkungsgrad hinsichtlich einer Übersetzung der von dem Servomotor generierten Antriebsdrehbewegung in eine lineare Verfahrbewegung des Kontaktelements positionsunabhängig im Wesentlichen konstant ist. Insbesondere kann dazu ein Linearantrieb vorgesehen sein, mittels dessen einen Wirkungsgrad von einem Motorstromeingang zu einem Presskraftausgang über den gesamten Verfahrweg des Kontaktelements von konstant über 70% erreicht werden kann. Ferner können Linearantriebe mit einem Wirkungsgrad über 80% oder über 90% vorgesehen sein. Dadurch kann auch erreicht werden, dass drehrichtungsabhängige Stromschwankungen in einem verhältnismäßig geringen Bereich bleiben.

Um einen möglichst hohen Wirkungsgrad erreichen zu können, kann das Kontaktelement über einen reibungsarmen Linearantrieb mit dem Servomotor verbunden sein. Beispielsweise kann der Servomotor über einen oder mehrere Spindeltriebe, insbesondere mit wälzgelagerten Spindeln, mit dem Kontaktelement verbunden sein, um einen hohen und positionsunabhängigen Wirkungsgrad erreichen zu können. Alternativ zu Spindeltrieben können beispielsweise Zahnstangen-, Ketten- und/oder Zahnriemenantriebe eingesetzt werden, um eine von dem Servomotor generierte Drehung mit einem hohen Wirkungsgrad in eine lineare Bewegung des Kontaktelements zu übersetzen.

Zwar können bei herkömmlichen Pressen, die beispielsweise einen Kurbelantrieb oder einen Hydraulikantrieb zur Bewegung eines Kontaktelements aufweisen können, grundsätzlich, beispielsweise am Totpunkt eines Kurbelantriebs, höhere Kräfte als mit einem Servomotor erreicht werden, wobei beispielsweise Kräfte entsprechend einer Gewichtskraft von 40 t möglich sein können. Da die Übersetzung zwischen der auf das Produkt übertragenen Presskraft und dem Motorstrom bei solchen Antrieben jedoch beispielsweise abhängig von der Streckung eines Kniehebels ist und starke Gradienten aufweist, sind dabei zur Prozessüberwachung zunächst eine aufwendige und komplexe Sensorik notwendig, um beispielsweise den momentan wirkenden Druck ermitteln zu können. Dennoch ist es häufig aufgrund der in Richtung eines Totpunktes stark und schnell ansteigenden übertragenen Kräfte nicht möglich, eine ausreichend präzise Prozesssteuerung zu erreichen, sodass auf ein Verfahren des Kontaktelementes in eine auf Erfahrungswerten basierende Position zurückgegriffen werden muss, was insbesondere eine flexible und an jeweilige Produkte angepasste Prozessdurchführung erschwert bzw. nicht erreichbar macht. Ferner können die in Richtung eines Totpunktes stark ansteigenden wirkenden Kräfte dazu führen, bei einer nur geringfügig falsch eingestellten Position das Produkt derart zu beschädigen, dass es für eine weitere Verarbeitung oder einen Verkauf unbrauchbar wird.

Im Zuge der Erfindung wurde erkannt, dass zum Erreichen optimaler Resultate bei einem Pressen von Fleischprodukten, insbesondere gefrorenen und/oder angefrorenen Produkten mit einer Temperatur von -20°C an einer äußeren Oberfläche, Presskräfte von etwa 1 N/mm² ausreichend sind, um die jeweils gewünschte Formgebung zu erreichen. Entsprechend können optimale Resultate bereits mit deutlich geringeren Presskräften von maximal etwa 16 t Gewichtskraft für die zu pressenden Fleischprodukte ausreichend sein, welche mittels eines eine präzise Prozesssteuerung erlaubenden Servomotors erreicht werden können. Die Leistung eines solchen Servomotors kann dabei etwa 1 kW bis 5 kW betragen, wobei es vorgesehen sein kann, das Kontaktelement mit etwa 10 mm/s während des Pressens zu verfahren.

Der Einsatz eines Servomotors zum Verfahren des Kontaktelementes ermöglicht es folglich, flexibel beliebig große Produkte mit einer einzigen Presseinrichtung zu bearbeiten und in eine gewünschte Form zu bringen, um die Produkte weiteren Bearbeitungsschritten zuzuführen oder in einer vorgesehenen Form zum Verkauf anbieten zu können. Insbesondere kann es auch vorgesehen sein, bereits vor dem Einbringen oder unmittelbar nach dem Einbringen eines Produktes in die Presskammer Eigenschaften des Produktes wie dessen Größe, dessen Oberflächenstruktur, dessen Gewicht oder dessen Salz- und/oder Fettgehalt zu bestimmen und während des Pressens zu berücksichtigen. Dabei ermöglicht der Einsatz des Servomotors zum Verfahren des Kontaktelements eine ausreichend präzise Steuerung, so dass eine eventuelle Vielzahl von Informationen über das Produkt auch tatsächlich optimal zur Anpassung des Pressvorgangs genutzt werden kann.

Ferner ermöglicht das präzise Verfahren des Kontaktelements mittels eines Servomotors auch, das Produkt in eine möglichst vorteilhafte Form, insbesondere für weitere Verarbeitungsschritte zu bringen. Ist es beispielsweise vorgesehen, das Produkt nach dem Pressen mittels einer Schneidevorrichtung, insbesondere mittels eines Hochgeschwindigkeitsslicers, in Scheiben zu schneiden, kann eine solche Aufschneidevorrichtung häufig eine Produktzufuhr aufweisen, welche die Produkte einem Schneidbereich zuführt, in welchem von den Produkten mittels eines sich bewegenden, insbesondere umlaufenden und/oder rotierenden, Messers, Scheiben abgetrennt werden. Dabei können die Produkte beispielsweise in einem hinteren Bereich von einem Produkthalter gehalten und geführt werden, um die Führung in den Schneidbereich steuern und gegebenenfalls in mehreren Spuren individuell durchführen zu können. Entsprechend kann bei einem solchen Schneidvorgang ein Produktrest verbleiben, in welchem der Produkthalter eingreift und welcher daher nicht zum Abtrennen von Scheiben geeignet ist. Um den prozentualen Anteil eines solchen Produktrestes möglichst gering zu halten und einen möglichst großen Teil des Produktes für ein Abtrennen von Scheiben und Bilden von Portionen nutzen zu können, kann es beispielsweise vorgesehen sein, dem Produkt im Zuge des Pressens eine möglichst große Länge zu verleihen, sodass der Produkthalter in einen lediglich geringen prozentualen Anteil des Produktes eingreift.

Um dies zu erreichen, kann das Produkt über seine Breite beispielsweise mit annähernd maximal möglicher Presskraft komprimiert werden. Dabei ist eine präzise Steuerung des Pressvorgangs erforderlich, um eine kritische Presskraft, bei welcher eine Beschädigung des Produktes, beispielsweise eine Rissbildung, auftritt, nicht zu überschreiten. Durch die Möglichkeit, aus dem an dem Servomotor bzw. aus dem den Servomotor umfassenden Servoantrieb registrierten Motorstrom unabhängig von der Position des Kontaktelementes präzise Rückschlüsse auf die wirkenden Presskräfte zu ziehen und den Pressvorgang entsprechend zu steuern, können derartig optimierte Resultate des Pressvorgangs erreicht werden.

Ferner kann es vorgesehen sein, ein Produkt in eine Form mit einer möglichst großen Höhe zu bringen, um in einem folgenden Schneidvorgang das Fallen der abgetrennten Scheiben in einen Bereich, in welchem aus den Scheiben Portionen gebildet werden, zu präzisieren bzw. zu verbessern. Auch hierbei kann ein Verfahren des Kontaktelementes bis zu einer annähernd maximalen Presskraft erfolgen, um eine Ausdehnung des Produktes in die Höhe bei gleichzeitiger Komprimierung in zumindest einer anderen Raumrichtung zu erreichen.

Grundsätzlich kann es auch vorgesehen sein, eine gewünschte Endposition für das Kontaktelement vorzugeben, in welche dieses im Zuge des Pressens verfahren werden soll, um das Produkt beispielsweise wunschgemäß in dieser Richtung zu komprimieren. Die Verwendung eines Servomotors ermöglicht es dabei, die momentan wirkenden Presskräfte zu berücksichtigen und das Verfahren des Kontaktelementes beispielsweise bereits vor einem Erreichen der gewünschten Endposition zu stoppen, wenn bei einem weiteren Verfahren eine Beschädigung des Produktes droht. Durch die vorgegebene Endposition können gleichartige Produkte, beispielsweise Produkte einer Charge, zunächst in die vorgegebene und dadurch stets zumindest annähernd gleiche Form gepresst werden, wobei der Pressvorgang durch die Berücksichtigung der wirkenden Presskräfte dennoch an das jeweilige gepresste Produkt angepasst erfolgen kann. Gelangt beispielsweise innerhalb einer Charge ein für diese Charge ungewöhnlich großes Produkt in die Presskammer, kann auch dieses Produkt ohne die Notwendigkeit einer Anpassung der Einstellungen der Presseinrichtung oder die Gefahr einer Beschädigung des Produktes flexibel verarbeitet werden.

Wie bereits erwähnt, ergeben sich diese Möglichkeiten zur präzisen und flexiblen Prozesssteuerung und Prozessdurchführung aus der Nutzung eines Servomotors zum Verfahren des Kontaktelementes und der damit verbundenen exakten Information über die Position des Kontaktelementes bzw. die Position und/oder die Drehstellung bzw. den Drehwinkel des Rotors des Elektromotors. Diese Information, die beispielsweise mittels einer von dem Servomotor umfassten Messeinrichtung mit einem Drehgeber gewonnen werden kann, steht weder bei den bereits erwähnten Möglichkeiten zum Verfahren eines Kontaktelementes mittels eines Kurbel- oder Hydraulikantriebs noch bei einer bloßen Nutzung eines Elektromotors, der kein Servomotor bzw. nicht Teil eines Servoantriebs ist, zur Verfügung. Zudem ermöglicht es das Antreiben des Kontaktelementes mit einem Servomotor, Presskräfte präzise und positionsunabhängig anhand des Motorstroms zu bestimmen, um auch solche Informationen bei der Prozesssteuerung und Prozessdurchführung berücksichtigen zu können. Dazu kann der Servomotor insbesondere über einen Linearantrieb mit dem Kontaktelement verbunden sein, welcher einen positionsunabhängigen und insbesondere hohen Wirkungsgrad bei der Übersetzung der von dem Servomotor generierten Drehbewegung in eine lineare Bewegung bietet.

Die Presskammer kann quaderförmig aufgebaut sein, wobei das Produkt während des Pressens auf einer ebenen Fläche aufliegt. Das Kontaktelement kann dabei beispielsweise als Längsstempel ausgebildet sein, welcher in Richtung der durch die Längsachse der Presskammer definierten Richtung verfahrbar ist, um das eingebrachte Produkt in diese Richtung zu komprimieren. Gleichermaßen kann es vorgesehen sein, dass das Kontaktelement als Breitenstempel senkrecht zu dieser Richtung und in der Ebene der Fläche verfahrbar ist, in welcher das Produkt aufliegt, um eine Komprimierung und Formgebung in dieser Richtung bzw. in der Breite zu erreichen. Ferner kann das Kontaktelement in einer Richtung, die normal zu der Ebene steht, in welcher das Produkt aufliegt, verfahren werden, wobei ein solches Kontaktelement insbesondere als Vertikalstempel vertikal nach unten verfahren werden kann. Grundsätzlich kann es auch vorgesehen sein, die Auflagefläche des Produktes selbst als Kontaktelement auszubilden, was entsprechend normal zu dieser Ebene und insbesondere vertikal nach oben verfahrbar ist.

Die Presskammer kann zumindest drei solcher verfahrbarer Kontaktelemente aufweisen, um das eingebrachte Produkt in sämtlichen Raumrichtungen und insbesondere quaderförmig pressen bzw. verformen zu können. Dabei kann das Produkt insbesondere in einer horizontalen Ebene aufliegen und mittels eines vertikal nach unten verfahrbaren Kontaktelements in dieser Richtung komprimiert werden.

Insbesondere zum Pressen von Bacon können das Kontaktelement sowie das Gegenelement ebene Flächen aufweisen, die insbesondere aus Kunststoff gefertigt sein können und an welchen das Produkt während des Pressens anliegt, um diesem eine im Wesentlichen quaderförmige Form zu geben. Ferner kann es vorgesehen sein, das Kontaktelement und/oder das Gegenelement bzw. mit dem Kontaktelement und/oder dem Gegenelement verbundene Flächen, an welchen das Produkt während des Pressens anliegt, entnehmbar bzw. austauschbar in der Presskammer anzuordnen, um die Flexibilität der Presseinrichtung zu erweitern und beispielsweise wunschgemäß Produkte in verschiedene Formen pressen zu können.

Beispielsweise kann das Kontaktelement bzw. können die Kontaktelemente mit austauschbaren Aufsätzen verbunden sein, welche Flächen bilden, an denen das Produkt während des Pressens anliegt, wobei verschiedene Aufsätze mit verschiedenartigen Flächen, beispielsweise ebenen oder gekrümmten, vorgesehen sein können, um das Produkt wunschgemäß in verschiedene Formen zu bringen. Ferner ermöglicht die modulare Entnehmbarkeit der einzelnen Komponenten eine einfache Reinigung dieser und insbesondere der Flächen, an welchen das Produkt während des Pressens anliegt, um den im Zuge der Verarbeitung von Fleischprodukten, insbesondere von Frischfleischprodukten, erforderlichen Hygieneanforderungen entsprechen zu können.

Weitere Ausführungsformen sind der Beschreibung, den abhängigen Ansprüchen und den Zeichnungen zu entnehmen.

Bei einigen Ausführungsformen kann das Kontaktelement mit zumindest einem Linearantrieb, insbesondere Spindeltrieb, verbunden sein, wobei der Servomotor dazu ausgebildet ist, den zumindest einen Linearmotor, insbesondere Spindeltrieb, anzutreiben.

Über den Linearmotor bzw. Spindeltrieb kann somit eine von dem Servomotor generierte Antriebsleistung auf das Kontaktelement übertragen werden, um dieses zu verfahren. Beispielsweise kann der Servomotor eine Spindel eines solchen Spindeltriebs in Rotation versetzen, auf welcher eine Spindelmutter läuft, die mit dem Kontaktelement verbunden ist, so dass die Bewegung der Spindelmutter auf das Kontaktelement übertragen werden kann. Indem ein solcher Spindeltrieb direkt die von dem Servomotor erzeugte Rotation aufnimmt und in eine lineare Bewegung des Kontaktelements ohne weitere Übersetzungsstufen oder Bewegungskomponenten überträgt, kann in einer beliebigen Position des Kontaktelements bzw. der Spindelmutter aus dem an dem Servomotor wirkenden Motorstrom auf eine auf das Kontaktelement wirkende Gegenkraft und entsprechend eine auf das Produkt wirkende Presskraft geschlossen werden. Entsprechend kann der Pressvorgang insbesondere unter Berücksichtigung des gemessenen Motorstroms präzise und flexibel in Abhängigkeit von dem jeweiligen gepressten Produkt und insbesondere dessen Größe gesteuert und durchgeführt werden, wobei die notwendigen bzw. optimalen Presskräfte zuverlässig auf das jeweilige Produkt übertragen werden können.

Grundsätzlich kann das Kontaktelement über einen beliebigen Linearantrieb mit dem Servomotor verbunden sein, welcher eine Umsetzung einer von dem Servomotor erzeugten Rotation in ein lineares Verfahren des Kontaktelements ermöglicht. Insbesondere können dabei Antriebe vorgesehen sein, mittels derer eine möglichst reibungsarme und direkt proportionale Umsetzung einer von dem Servomotor erzeugten Drehbewegung in eine lineare Bewegung erreicht werden kann, wobei der Wirkungsgrad von einem Motorstromeingang zu einem Presskraftausgang eines solchen Antriebs insbesondere positionsunabhängig und über den gesamten Verfahrweg des Kontaktelements konstant sein kann. Beispielsweise kommen dazu Spindeltriebe, Zahnstangen-, Ketten- und/oder Zahnriemenantriebe in Betracht.

Durch das Verbinden des Kontaktelements mit dem Servomotor über einen Linearantrieb, der eine direkt proportionale Umsetzung der von dem Servomotor generierten Drehbewegung einer Motorwelle bzw. einer Getriebewelle in eine lineare Verfahrbewegung des Kontaktelements ermöglicht, kann insbesondere ein positionsunabhängiges Bestimmen der mittels des Kontaktelements erzeugten Presskraft durch ein Messen des Motorstroms des Servomotors erfolgen. Insbesondere kann dabei der Wirkungsgrad eines solchen Antriebs von einem Motorstromeingang zu einem Presskraftausgang im gesamten Verfahrweg des Kontaktelements konstant sein, so dass der gemessene Motorstrom unmittelbar zur Prozesssteuerung verwendet werden kann, um ein Produkt beispielsweise unter Anwendung einer stets konstanten Presskraft bearbeiten zu können. Zudem kann das Überschreiten einer maximalen Presskraft, welches zu einer Beschädigung des gepressten Produkts führen könnte, durch ein solches Überprüfen des Motorstroms zuverlässig und ohne die Notwendigkeit komplexer Sensorik verhindert werden. Das Verwenden reibungsarmer Antriebe kann ferner das Erreichen eines hohen Wirkungsgrades ermöglichen.

Ferner kann es vorgesehen sein, dass das Kontaktelement mit mehreren, insbesondere zwei, drei oder vier, Linearantrieben, insbesondere Spindeltrieben, verbunden ist, welche mittels des Servomotors antreibbar sind. Dies ermöglicht es, eine lineare Bewegung an mehreren Punkten auf das Kontaktelement zu übertragen, um eine gleichmäßige Führung des Kontaktelements zu erreichen. Einem etwaigen Verkippen bzw. Verkeilen aufgrund von während des Pressens auftretenden Drehmomenten bei einer beispielsweise lediglich mittig in Bezug auf das Kontaktelement erfolgenden Antriebsübertragung kann somit entgegengewirkt werden.

Insbesondere kann dabei bei einem senkrecht zu der Auflagefläche, auf welcher das Produkt während des Pressens aufliegt, und insbesondere in vertikaler Richtung nach unten verfahrbaren Kontaktelement bzw. einem Vertikalstempel eine Verbindung mit vier Spindeltrieben vorgesehen sein, die an jeweiligen Ecken des insbesondere rechteckig ausgebildeten Kontaktelements angreifen. Dabei kann ein solches Kontaktelement insbesondere von unten herabgezogen werden, wobei das vertikal bewegbare Kontaktelement mit vier an dessen Ecken angeordneten hohlen Stangen verbunden sein kann, die in einem unteren Bereich fest mit einer Spindelmutter eines jeweiligen Spindeltriebs verbunden sind. Die Spindeln, auf denen die jeweiligen Spindelmuttern laufen, können dabei insbesondere innerhalb von vier vertikalen Säulen einer Basis der Presseinrichtung, welche die Presseinrichtung trägt, angeordnet und drehfest mit einer von dem Servomotor angetriebenen Scheibe, insbesondere einer Riemenscheibe, verbunden sein.

Ein in der Ebene, in welcher das Produkt während des Pressens aufliegt, jedoch senkrecht zu der Längsachse der Presskammer verfahrbares Kontaktelement kann insbesondere mittels zweier Spindeltriebe angetrieben werden, die an entlang der Längsachse gegenüberliegenden Enden des Kontaktelements angreifen.

Ein Kontaktelement, welches entlang der Längsachse der Presskammer verfahrbar ist, kann hingegen insbesondere lediglich mittels eines Spindeltriebs angetrieben werden. Aufgrund der in der Regel schmalen Ausdehnung der zu pressenden Produkte, auch zu pressender Naturprodukte wie Bacon, senkrecht zu der Längsachse wirken auf ein in dieser Richtung verfahrbares Kontaktelement in der Regel allenfalls geringe Dreh- bzw. Kippmomente, sodass eine Antriebsübertragung an einem Punkt ausreichend sein kann, um eine zuverlässige und geradlinige Führung des betreffenden Kontaktelementes entlang der Längsachse zu erreichen. Eine unnötige Anordnung weiterer Spindeltriebe mit der damit verbundenen Nutzung des lediglich begrenzt zur Verfügung stehenden Bauraums kann somit vermieden werden.

Ferner trägt eine solche Übertragung des Antriebes mittels einer verschiedenen Anzahl an Spindeltrieben bzw. Linearantrieben auf in verschiedener Richtung verfahrbare Kontaktelemente den jeweiligen gewünschten bzw. notwendigen erzeugbaren Presskräften Rechnung. So können bei einem in vertikaler Richtung verfahrbaren Kontaktelement beispielsweise Presskräfte entsprechend einer Gewichtskraft von etwa 16 t, einem senkrecht zu der Längsachse und zu der Vertikalen verfahrbaren Kontaktelement Presskräfte entsprechend einer Gewichtskraft von etwa 8 t und bei einem entlang der Längsachse der Presskammer verfahrbaren Kontaktelement Presskräfte entsprechend einer Gewichtskraft von etwa 3 t erforderlich sein und durch die vorstehend beschriebene Anordnung erreicht werden.

Die mehreren Linearantriebe, insbesondere Spindeltriebe, können über ein Synchronisationselement, insbesondere über einen Zahnriemen, miteinander verbunden sein, wobei der Servomotor dazu ausgebildet sein kann, das Synchronisationselement anzutreiben, und wobei das Synchronisationselement dazu ausgebildet sein kann, eine von dem Servomotor empfangene Antriebsleistung gleichmäßig auf die mehreren Linearantriebe, insbesondere Spindeltriebe, zu übertragen.

Durch ein solches Synchronisationselement kann erreicht werden, dass die an verschiedenen Punkten des Kontaktelements angreifenden Spindeltriebe bzw. Linearantriebe das Kontaktelement gleichmäßig linear verfahren. Einem etwaigen Kippen oder Verkanten des Kontaktelementes während des Verfahrens aufgrund einer mangelnden Synchronisation und beispielsweise einer im Vergleich zu den weiteren Spindeltrieben beschleunigten Bewegung eines an einer Ecke des Kontaktelementes angreifenden Spindeltriebs, was in Anbetracht der notwendigen Presskräfte zu erheblichen Beschädigungen des Kontaktelements führen kann, kann somit entgegengewirkt werden. Ferner können die mehreren Spindeltriebe mittels eines einzigen und gemeinsamen Servomotors angetrieben werden, indem der Servomotor das Synchronisationselement direkt antreiben kann und dieses die empfangene Antriebsleistung gleichmäßig auf die mehreren Spindeltriebe überträgt. Dies kann insbesondere eine kompakte Bauweise und eine Reduktion notwendiger Bauteile ermöglichen, wobei eine zuverlässige Synchronisation insbesondere mittels eines angetriebenen Zahnriemens in einfacher Weise erreicht werden kann. Beispielsweise können die Spindeln der mehreren Spindeltriebe dazu drehfest mit jeweiligen Riemenscheiben verbunden sein, welche mittels eines von dem Servomotor angetriebenen Zahnriemens in Rotation versetzt werden, wobei das Kontaktelement mit den auf den jeweiligen Spindeln laufenden Spindelmuttern verbunden sein und dadurch verfahren werden kann.

Darüber hinaus bietet der Einsatz eines Zahnriemens als Synchronisationselement weitere Funktions- und Robustheitsvorteile, insbesondere da im Falle eines Reißens des Zahnriemens keine unbestimmten Kräfte auf den Antrieb des Kontaktelementes und die Bewegungsmechanik der Presse wirken. In einem solchen Fall wird lediglich unmittelbar der Kraftfluss zu den Spindeln unterbrochen und diese bleiben durch ihre konstruktiv bedingte Selbsthemmung in ihrer Position.

Beispielsweise können die mehreren Linearantriebe über genau ein Synchronisationselement, insbesondere genau einen Zahnriemen, miteinander verbunden sein. Grundsätzlich können jedoch auch mehrere Synchronisationselemente vorgesehen sein, die mit einem jeweiligen Teil der mehreren Linearantriebe verbunden sein können, wobei der Servomotor dazu ausgebildet sein kann, die mehreren Synchronisationselemente anzutreiben. Dadurch können die mehreren Synchronisationselemente synchron zueinander von dem Servomotor angetrieben werden, so dass auch bei der Verwendung mehrerer Synchronisationselemente eine von dem Servomotor generierte Antriebsleistung gleichmäßig auf sämtliche der mehreren Linearantriebe übertragen werden kann. Beispielsweise kann dazu ein mittig zwischen mehreren, insbesondere zwei, drei oder vier, Spindeltrieben angeordneter Servomotor mehrere Synchronisationselemente, insbesondere zwei Zahnriemen, antreiben, die eine Getriebewelle und/oder ein Motorwelle des Servomotors mit den Spindeltrieben verbinden. Durch das Verbinden des Servomotors mit den mehreren Spindeltrieben über mehrere Synchronisationselemente können insbesondere auf die Getriebewelle und/oder die Motorwelle des Servomotors wirkende Radialkräfte ausgeglichen werden.

Insbesondere kann somit genau ein Synchronisationselement zum Verbinden der mehreren Linearantriebe, insbesondere Spindeltriebe, vorgesehen sein, oder es können genau zwei Synchronisationselemente zum Verbinden der mehreren Linearantriebe, insbesondere Spindeltriebe, vorgesehen sein.

Alternativ dazu kann es auch vorgesehen sein, die mehreren Spindeltriebe zum Verfahren eines Kontaktelementes mit gesonderten und zugeordneten Servomotoren anzutreiben, so dass beispielsweise ein mittels vierer Spindeltriebe verfahrbares Kontaktelement, die z.B. in jeweiligen Ecken des Kontaktelements angreifen, mittels vierer Servomotoren verfahren werden kann. Dies kann es insbesondere ermöglichen, verhältnismäßig hohe Presskräfte zu erreichen, wobei die notwendige Synchronisation der Servomotoren im Vergleich zu einer Nutzung eines einzigen Servomotors und einer einfachen und zuverlässigen Synchronisation der Spindeltriebe erschwert sein kann, sodass eine erhöhte Gefahr einer Beschädigung des Kontaktelements, beispielsweise bei einem Ausfall eines der Servomotoren, bestehen kann.

Bei einigen Ausführungsformen kann die Presskammer eine im Wesentlichen in einer Horizontalebene ausgerichtete Auflagefläche aufweisen, auf welcher das eingebrachte Produkt aufliegt, wobei der Servomotor unterhalb der Auflagefläche angeordnet sein kann. Die Ausrichtung der Auflagefläche im Wesentlichen in einer Horizontalebene kann eine stabile Positionierung des zu pressenden Produktes in der Presskammer ermöglichen, ohne dass gravitationsbedingte Bewegungen des Produktes auftreten. Dabei kann die Auflagefläche von einer stabilen Stahlplatte gebildet sein, welche insbesondere in einer Haltestruktur beispielsweise auf mehreren Streben gehalten sein kann, um eine stabile Fachwerkstruktur zu bilden und die während des Pressens auftretenden Kräfte zuverlässig aufnehmen zu können.

Indem der Servomotor unterhalb der Auflagefläche angeordnet ist, kann ein Eintreten von Verschmutzungen in das Innere der Presskammer und insbesondere eine Verschmutzung des gepressten bzw. zu pressenden Produktes, beispielsweise durch von dem Servomotor herablaufendes Öl, verhindert werden. Eine etwaige Kontamination der Presskammer oder der Produkte kann somit vermieden werden, um den hohen Hygieneanforderungen in Bezug auf eine Verarbeitung von Fleischprodukten entsprechen zu können. Insbesondere kann dabei ein in vertikaler Richtung herabfahrendes Kontaktelement von einem Servomotor nach unten gezogen werden, der unterhalb der Auflagefläche der Presskammer angeordnet ist. Gleichermaßen können auch Servomotoren zum Verfahren von Kontaktelementen, die in horizontaler Richtung verfahrbar sind, unterhalb der Auflagefläche angeordnet werden, um einen Eintritt von Verschmutzungen in die Presskammer zu verhindern.

Grundsätzlich ist es jedoch auch möglich, den Servomotor bzw. zumindest einen Servomotor einer mehrere Servomotoren aufweisenden Presseinrichtung oberhalb bzw. zumindest teilweise oberhalb einer solchen Auflagefläche anzuordnen. Gleiches gilt für damit gekoppelte Synchronisierungselemente, Getriebe oder Antriebsmechaniken bzw. Antriebselemente.

Der Servomotor kann mit einer Auswerte- und Steuereinrichtung verbunden sein, welche zu einem Auswerten von Signalen des Servomotors und einem Steuern des Servomotors in Abhängigkeit der ausgewerteten Signale ausgebildet ist. Insbesondere kann eine solche Auswerte- und Steuereinrichtung den an dem Servomotor wirkenden Motorstrom entweder selbst messen oder ein entsprechendes Motorstromsignal von dem Servomotor bzw. einem den Servomotor umfassenden Servoantrieb empfangen und dazu ausgebildet sein, daraus die von dem Kontaktelement übertragenen Presskräfte zu ermitteln. Ferner können die Position eines Rotors des Servomotors bzw. dessen Drehstellung, eine Drehzahl, eine Winkelbeschleunigung, eine Spannung und/oder eine Stromstärke bestimmt und bei der Steuerung des Pressvorgangs genutzt werden. Dies kann es beispielsweise ermöglichen, das Kontaktelement exakt bis zu dem Punkt zu verfahren, an dem eine gewünschte und vorgegebene Presskraft auf das Produkt wirkt, die insbesondere auch flexibel an ein jeweiliges Produkt angepasst im Voraus vorgegeben und/oder ermittelt werden kann. Ferner kann es vorgesehen sein, dass für die erforderlichen bzw. optimalen Presskräfte relevante Eigenschaften des Produktes vor dessen Einbringen in die Presskammer bestimmt werden und die Auswerte- und Steuereinrichtung daran angepasste Presskräfte automatisch ermittelt.

Beispielsweise kann die Auswerte- und Steuereinrichtung dazu mit einer Messeinrichtung verbunden sein, welche dazu ausgebildet ist, vor dem Pressen zumindest eine Eigenschaft der Produkte zu ermitteln. Eine solche Messeinrichtung kann insbesondere eine Kamera und eine Bildauswerteeinrichtung umfassen, mittels derer die Größe der Produkte vor dem Einbringen in die Presskammer bestimmt werden kann. Diese Information kann an die Auswerte- und Steuereinrichtung übermittelt werden, welche dazu ausgebildet sein kann, automatisch an dieses Produkt bzw. dessen Größe angepasste Parameter für den Pressvorgang, insbesondere angepasste Presskräfte und/oder Endpositionen des Kontaktelementes, zu bestimmen und den folgenden Pressvorgang mit den ermittelten Parametern durchzuführen.

Ferner kann es vorgesehen sein, dass die Auswerte- und Steuereinrichtung den Servomotor bereits vor dem Einbringen des Produktes zu einem Verfahren des Kontaktelementes ansteuert, um das Kontaktelement möglichst nahe an dem Produkt zu positionieren, sobald dieses in die Presskammer eingebracht ist. Dadurch kann die Zeit, bis das Kontaktelement in Berührung mit dem eingebrachten Produkt gelangt und eine Presswirkung entfalten kann, minimiert werden, sodass der Pressvorgang unter Berücksichtigung der jeweiligen Produktma-ße möglichst schnell erfolgen kann.

Insbesondere kann das Kontaktelement dabei bereits vor dem Einbringen eines relativ kleinen Produktes in Richtung des jeweiligen Gegenelementes verfahren werden. Ebenso kann beispielsweise nach einem Pressen eines relativ kleinen Produktes ein an ein nachfolgendes größeres Produkt angepasster und dafür ausreichender Raum in der Presskammer bereitgestellt werden. Dabei ist es jedoch nicht erforderlich, das Kontaktelement oder die Kontaktelemente nach einem Pressvorgang in jeweilige Anfangspositionen zurückzufahren, sondern auch das Zurückfahren kann angepasst an das folgende Produkt erfolgen. Somit kann sowohl bei einem grö-ßeren als auch einem kleineren nachfolgenden Produkt erreicht werden, dass das Kontaktelement nach dem Einbringen des Produktes in die Presskammer unmittelbar in Berührung mit dem Produkt gelangt und eine angepasste Presswirkung entfalten kann.

Die Auswerte- und Steuereinrichtung kann zu einem automatischen Steuern des Pressvorgangs ausgebildet sein und/oder die Auswerte- und Steuereinrichtung kann eine Schnittstelle aufweisen, über welche ein Nutzer Befehle und/oder Parameter zur Steuerung des Pressvorgangs eingeben kann. Insbesondere kann ein Nutzer so Parameter oder Sollwerte von Parametern, beispielsweise bei einem Chargen- oder Produktwechsel, vorgeben, um ein optimales Resultat des Pressvorgangs erreichen zu können.

Ferner kann es vorgesehen sein, dass die Auswerte- und/oder Steuereinrichtung anhand der Position des Kontaktelements und insbesondere anhand der Positionen mehrerer verfahrbarer Kontaktelemente das Volumen des gepressten Produktes bestimmt. Die präzise Positionierbarkeit des Kontaktelements mittels des Servomotors kann somit eine weitere Möglichkeit zur Steuerung des Pressvorgangs bieten, um ein Produkt beispielsweise auf ein gewünschtes Volumen bzw. gewünschte Ausmaße in jeweiligen Richtungen zu komprimieren. Insbesondere kann dabei auch eine indirekte Steuerung der Presskräfte erfolgen, indem beispielsweise ein Produkt, dessen Größe vor bzw. gegebenenfalls unmittelbar vor dem Pressvorgang in der Presskammer ermittelt wurde, unter Berücksichtigung dessen maximaler Verformbarkeit, die beispielsweise bei 10% bis 30% liegen kann, gepresst werden kann. Ein Nutzer kann somit beispielsweise gewünschte prozentuale Verformungen der Produkte, insbesondere auch für verschiedene Richtungen, angeben oder solche Verformungen können von der Auswerte- und/oder Steuereinrichtung ermittelt werden, wobei diese Vorgaben flexibel für verschiedene Produkte unabhängig von deren Größe umgesetzt werden können.

Grundsätzlich kann die Verbindung des Servomotors mit einer solchen Auswerte- und Steuereinrichtung ermöglichen, den Pressvorgang direkt unter Berücksichtigung der Signale des Servomotors zu steuern und diesen gewissermaßen zur Ermittlung der Prozessparameter zu verwenden, ohne dass eine weitere Sensorik, beispielsweise zur Bestimmung der Presskräfte, notwendig ist. Auf derartige Sensorelemente kann folglich verzichtet werden und die dem Servomotor entnehmbaren Informationen können gezielt und intelligent genutzt werden. Durch den Verzicht auf weitere Sensorik können insbesondere auch die Komplexität der Presseinrichtung sowie gegebenenfalls deren notwendiger Bauraum und die Herstellungskosten verringert werden.

Es kann vorgesehen sein, dass das Kontaktelement einen Pneumatikzylinder aufweist, wobei der Pneumatikzylinder dazu ausgebildet ist, das Kontaktelement vor dem Pressen in Richtung des Gegenelements zu positionieren. Ein solcher, zusätzlich zu dem während des Pressens verwendeten Servomotor vorgesehener Pneumatikzylinder ermöglicht es, das Kontaktelement äußerst schnell zu verfahren, sofern keine großen Gegenkräfte zu überwinden sind. Beispielsweise kann das Kontaktelement dadurch vor dem Pressen angepasst an die Größe des zu pressenden Produktes positioniert werden, um den von dem Servomotor zu überbrückenden Weg, bis das Kontaktelement in Berührung mit dem Produkt gelangt und eine Presswirkung entfalten kann, zu verkürzen. Insbesondere kann dies erfolgen, wenn die Größe des Produktes in einem vorhergehenden Schritt mittels einer Messeinrichtung bestimmt und an eine Auswerte- und Steuereinrichtung gemeldet wurde, die zu einem Steuern des Servomotors und des Pneumatikzylinder ausgebildet ist. Durch eine derartige Vorpositionierung des Kontaktelements kann die notwendige Zeit zum Pressen des eingebrachten Produkts verringert und entsprechend der Produktdurchsatz erhöht werden. Insbesondere kann eine solche Vorpositionierung bei einem Kontaktelement erfolgen, welches entlang der Längsachse der Presskammer verschiebbar ist.

Ferner ist ein solcher Pneumatikzylinder gemäß einem Aspekt der Erfindung dazu vorgesehen, ein gepresstes Produkt nach dem Pressvorgang mittels des Kontaktelements aus der Presskammer hinauszuschieben und beispielsweise weiteren Bearbeitungsschritten zuzuführen. Auch ein solches Hinausschieben kann aufgrund der geringen zu überwindenden Kräfte mittels des Pneumatikzylinders äußerst schnell erfolgen. Dazu kann der Pneumatikzylinder eine Druckplatte antreiben und gemeinsam mit dem Kontaktelement während des Pressens verfahrbar sein, um das an der Druckplatte anliegende Produkt ausgehend von der während des Pressens erreichten Endposition des Kontaktelementes aus der Presskammer hinauszuschieben. Insbesondere kann es dabei vorgesehen sein, ein Produkt entlang der Längsachse der Presskammer aus dieser hinauszuschieben, so dass insbesondere ein entlang der Längsachse verfahrbares Kontaktelement einen derartigen Pneumatikzylinder aufweisen kann.

Gleichermaßen kann es vorgesehen sein, mittels eines solchen, eine Druckplatte antreibenden Pneumatikzylinders ein in die Presskammer eingebrachtes Produkt zunächst vorzupositionieren und beispielsweise in Kontakt mit dem Gegenelement zu bringen, mit welchem das Kontaktelement zusammenwirkt. Nach dieser beschleunigten Vorpositionierung des Produktes kann der Pressvorgang durch ein Verfahren des Kontaktelementes mit dem Servomotor beginnen.

Alternativ zu einer Ausbildung des Kontaktelements mit einem Pneumatikzylinder ist gemäß einem Aspekt der Erfindung vorgesehen, dass das Kontaktelement mit einem Servomotor verbunden ist, welcher dazu ausgebildet ist, das Kontaktelement vor dem Pressen in Richtung des Gegenelements zu positionieren. Dazu ist ein weiterer Servomotor vorgesehen. Zudem ist das Kontaktelement über eine schnelle Servoachse und eine langsame Servoachse antreibbar, wobei die schnelle Servoachse, welche entsprechend geringere Kräfte entfalten kann, zu einer schnellen Vorpositionierung des Produktes vor dem eigentlichen Pressvorgang dient, indem das Produkt in Richtung des Gegenelements ausgerichtet wird. Der eigentliche Pressvorgang, welcher das Aufbringen größerer Kräfte erfordert, erfolgt hingegen über die langsamere und dadurch kräftigere Servoachse. Nach dem Pressen wird wiederum die schnelle Servoachse dazu verwendet, das Produkt aus der Presskammer auszustoßen und beispielsweise weiteren Bearbeitungsschritten zuzuführen.

Das Verwenden eines solchen Servomotors mit einer schnellen Servoachse kann auch beim Vorpositionieren und/oder Ausstoßen des Produkts ein genaues Überprüfen einer momentanen Position des Produkts ermöglichen. Dadurch kann die kräftigere Achse beispielsweise nach dem Vorpositionieren in einem Eilgang schnell in Kontakt zu dem in der Presskammer mittels der schnellen Servoachse vorpositionierten Produkt verfahren und erst nach dem Erreichen des Produktes die Geschwindigkeit reduzieren, um das Kontaktelement während des Pressens verlangsamt anzutreiben und den Pressvorgang mit der erforderlichen Kraft durchzuführen. Durch diese exakte Kenntnis der Position des vorpositionierten Produkts kann somit insbesondere die Taktzeit bzw. die Zeit, die für einen Pressvorgang erforderlich ist, reduziert und der Produktdurchsatz dadurch erhöht werden. Ferner kann es eine solche Positionsbestimmung auch ermöglichen, die Position des Produktes während eines Ausstoßens aus der Presskammer zu überwachen, um eine möglichst kontrollierte und präzise Übergabe an weitere Bearbeitungsschritte erreichen zu können. Beispielsweise können die langsamere und/oder die schnelle Servoachse einen Spindeltrieb und/oder einen linearen Riemenantrieb umfassen.

Eine Messeinrichtung zum Ermitteln der Größe des Produktes kann beispielsweise eine Kamera, einen Scanner, ein Röntgengerät oder eine Wärmebildkamera aufweisen.

Bei einigen Ausführungsformen kann die Presskammer einen sich in Richtung deren Längsachse erstreckenden seitlichen Einlass aufweisen, durch welchen das zu pressende Produkt in die Presskammer einbringbar ist, wobei das Gegenelement und/oder das Kontaktelement dazu ausgebildet sein können, den seitlichen Einlass selektiv freizugeben oder zu versperren.

Die Presskammer kann dabei eine Auflagefläche für das zu pressende Produkt bereitstellen, innerhalb derer die Längsachse verläuft, wobei der seitliche Einlass an einer Außenbegrenzung der Presskammer, die insbesondere senkrecht zu der Auflagefläche ausgerichtet sein kann, angeordnet ist. Beispielsweise kann der seitliche Einlass eine im Wesentlichen rechteckige Öffnung in einer solchen Außenbegrenzung bilden, durch welche das zu pressende Produkt in die Presskammer einbringbar ist. Indem sich der seitliche Einlass entlang der Längsachse der Presskammer erstreckt, ist dieser folglich bei einer Presskammer mit rechteckigem Grundriss an einer langen Außenseite dieser Presskammer angeordnet.

Indem der seitliche Einlass sich in Richtung der Längsachse der Presskammer erstreckt, kann ein Produkt, wie beispielsweise ein Bacon, welches eine relativ längere Längsseite und eine relativ schmalere Stirnseite aufweist, aus seitlicher Richtung über die Längsachse bzw. durch eine Parallelverschiebung dazu in die Presskammer eingebracht werden. Um das Produkt in die Presskammer einzubringen, ist folglich lediglich die der schmalen Ausdehnung des Produktes senkrecht zu der Längsachse entsprechende Wegstrecke zu überwinden, so dass dieses Einbringen möglichst schnell erfolgen kann und die Zykluszeit zum Einbringen und Pressen eines Produktes verringert werden kann.

Ferner ist es möglich, eine solche Presseinrichtung als Teil eines Systems oder einer Verarbeitungslinie zum Verarbeiten von Fleischprodukten vorzusehen, entlang derer die Produkte in einer Förderrichtung verschiedenen Arbeitsstationen, beispielsweise der Presseinrichtung, zugeführt werden. Indem das Produkt seitlich und insbesondere senkrecht zu einer solchen Förderrichtung in die Presseinrichtung einbringbar ist, kann die Presseinrichtung seitlich versetzt in Bezug auf die Förderrichtung zu den weiteren Komponenten der Verarbeitungslinie, wie z.B. einem Zuführband zum Führen der Produkte an die Presseinrichtung, angeordnet werden und dadurch die Erstreckung der gesamten Verarbeitungslinie entlang der Förderrichtung verringert werden. Insbesondere kann dadurch ein Servomotor, welcher ein entlang der Längsachse der Presskammer und entsprechend in Förderrichtung der Verarbeitungslinie verfahrbares Kontaktelement antreibt, in Förderrichtung hinter dem Kontaktelement und entsprechend hinter dem seitlichen Einlass angeordnet werden. Prinzipiell kann somit der für diesen Servomotor in Förderrichtung vorzusehende Bauraum bezogen auf die Gesamterstreckung der Verarbeitungslinie eingespart werden. Insbesondere ist dieser in Förderrichtung eingesparte Bauraum von Relevanz, da derartige Verarbeitungslinien sich in der Regel vornehmlich in Förderrichtung erstrecken, wobei der in der Praxis zur Verfügung stehende Raum in einer Richtung, beispielsweise in einer Produktionshalle, in der Regel begrenzt ist. Eine Verlagerung der Presseinrichtung seitlich zu der Förderrichtung kann somit den Aufbau und die Einsatzmöglichkeiten der Verarbeitungslinie vereinfachen.

Auf einer dem seitlichen Einlass gegenüberliegenden Seite kann ein Schaltschrank zur Steuerung der Presseinrichtung vorgesehen sein. Auch dieser Schaltschrank kann folglich außerhalb einer Förderrichtung einer Verarbeitungslinie positioniert werden, so dass deren Ausdehnung in Förderrichtung begrenzt werden kann. Insbesondere kann ein solcher Schaltschrank auch modular gestaltet sein, so dass ein Kunde diesen flexibel und möglicherweise selbst in einem von der Presseinrichtung getrennten Raum vorsehen kann.

Indem das Gegenelement und/oder das Kontaktelement dazu ausgebildet sein können, den seitlichen Einlass selektiv freizugeben oder zu versperren, kann ein Produkt folglich durch diesen Einlass zunächst in die Presskammer eingebracht werden, woraufhin nach einem Versperren des seitlichen Einlasses ein Pressen des Produktes auch in dieser Richtung erfolgen kann.

Es kann vorgesehen sein, dass das Gegenelement und/oder das Kontaktelement in im Wesentlichen vertikaler Richtung bewegbar sind, um den seitlichen Einlass selektiv freizugeben oder zu versperren, wobei das Gegenelement und/oder das Kontaktelement insbesondere mittels eines Pneumatikzylinders vertikal bewegbar sein können. Dabei kann die Bewegung des jeweiligen Elementes zum selektiven Freigeben oder Versperren des seitlichen Einlasses zumindest in einer vertikalen Ebene verlaufen, wobei insbesondere ausschließlich eine vertikale Bewegung vorgesehen sein kann. Entsprechend erfolgt die Bewegung zum selektiven Freigeben oder Versperren des seitlichen Einlasses senkrecht zu der Richtung, in welcher das mit dem den seitlichen Einlass versperrenden Gegenelement zusammenwirkende Kontaktelement bzw. das den seitlichen Einlass versperrende Kontaktelement während des Pressens verfahren wird, so dass diese beiden Bewegungen entkoppelt werden können.

Um die notwendige Bewegung des jeweiligen Elements zum selektiven Freigeben oder Versperren des seitlichen Einlasses möglichst schnell durchführen zu können, kann diese mittels eines Pneumatikzylinders erfolgen, welcher das jeweilige Element im Wesentlichen vertikal und somit senkrecht zu der Richtung, in welcher das Kontaktelement verfahren wird, bewegen kann. Ein ausschließlich in vertikaler Richtung erfolgendes Bewegen des jeweiligen Elements ermöglicht es, für diese Bewegung lediglich einen geringen Raum vorzusehen und das Element durch einen möglichst schmalen Spalt führen zu können. Dieser Spalt kann dabei insbesondere durch die klar definierte Bewegung präzise an die Ausdehnung des jeweiligen Elements angepasst werden, so dass der Spalt durch das Element während des Pressvorgangs exakt und im Wesentlichen ohne jeglichen Freiraum verschlossen werden kann, um einen möglichst glatten Übergang und ein Austreten von Produktteilen oder Flüssigkeiten aus der Presskammer zuverlässig zu verhindern.

Insbesondere kann es vorgesehen sein, dass der seitliche Einlass mittels eines Gegenelements, welches während des Pressvorgangs nicht verfahren wird, selektiv freigegeben oder versperrt wird. Ein solches Gegenelement kann beispielsweise als ebenes Wandelement ausgebildet sein und mit einem Pneumatikzylinder verbunden sein, so dass in einfacher Weise eine vertikale Bewegung durch einen Spalt erreicht werden kann. Entsprechend können die Bewegungen des Kontaktelementes während des Pressens und die dazu senkrechte Bewegung des Gegenelementes zum selektiven Freigeben oder Versperren des seitlichen Einlasses entkoppelt und durch jeweilige Elemente ausgeführt werden, sodass für beide Elemente lediglich Bewegungen entlang einer Richtung erforderlich sind.

Es kann vorgesehen sein, dass die Presseinrichtung einen Einfuhrabschnitt aufweist, auf welchen das zu pressende Produkt auflegbar ist, und wobei die Presseinrichtung eine Einbringeinrichtung aufweist, welche dazu ausgebildet ist, das zu pressende Produkt durch den seitlichen Einlass in die Presskammer einzubringen, insbesondere einzuschieben.

Insbesondere kann ein solcher Einfuhrabschnitt durch ein Förderband gebildet werden, auf welches die Produkte auflegbar sind bzw. auf welche die Produkte nach vorhergehenden Bearbeitungsschritten geführt werden, wobei die Einbringeinrichtung insbesondere als ein Schieber ausgebildet sein kann, welcher das Produkt von dem Förderband seitlich durch den seitlichen Einlass in die Presskammer einschiebt. Wiederum kann durch dieses seitliche Einschieben die Erstreckung einer Verarbeitungslinie in einer Förderrichtung, in welcher die Produkte vornehmlich gefördert werden, verringert werden, indem die Presse seitlich versetzt zu dieser Förderrichtung angeordnet wird. Dennoch kann aufgrund der Ausbildung der Presseinrichtung mit einer verhältnismäßig geringen Anzahl an Bauteilen auch eine schmale Bauweise mit einer Breite von beispielsweise etwa 1,5 m senkrecht zu der Förderrichtung erreicht werden.

Ein durch ein in Förderrichtung bewegbares Förderband ausgebildeter Einfuhrabschnitt kann es darüber hinaus ermöglichen, ein eventuell nicht zu pressendes Produkt durch einen Vorzug des Förderbandes an der Presseinrichtung vorbeizuführen und zu weiteren Bearbeitungsschritten oder in einen Ausschussbereich zu verlagern. Dies ermöglicht einen flexiblen Einsatz der Presseinrichtung in Verarbeitungslinien, mittels derer verschiedenste Produkte bearbeitet werden können, wobei die Produkte wahlweise mittels der Einbringeinrichtung bzw. mittels eines Schiebers in die Presskammer eingebracht und gepresst werden können oder an dieser vorbeigeführt werden können. Als mangelhaft erkannte Produkte können ferner gegebenenfalls in einfacher Weise durch einen Vorzug des Förderbandes ausgesondert werden, ohne zuvor gepresst zu werden.

Bei einigen Ausführungsformen kann die Presskammer einen Längsausgang aufweisen, durch welchen das gepresste Produkt entlang der durch die Längsachse der Presskammer definierten Richtung aus der Presskammer führbar ist, wobei das Gegenelement und/oder das Kontaktelement dazu ausgebildet sein können, den Längsausgang selektiv freizugeben oder zu versperren.

Wiederum kann dieser Längsausgang folglich während des Pressens versperrt sein, wozu insbesondere ein während des Pressvorgangs unbewegtes Gegenelement vorgesehen sein kann. Daraufhin kann der Längsausgang freigegeben werden, um das Produkt aus der Presskammer hinaus zu fördern und beispielsweise weiteren Bearbeitungsschritten zuführen zu können.

Insbesondere kann die Presskammer einen seitlichen Einlass aufweisen, durch welchen das Produkt in die Presskammer einbringbar ist, und einen Längsausgang, durch welchen das Produkt aus der Presskammer führbar ist. Dabei kann die Presseinrichtung insbesondere Teil eines Systems oder einer Verarbeitungslinie sein, innerhalb welcher die Produkte entlang einer Förderrichtung geführt werden, wobei das Produkt senkrecht zu dieser Förderrichtung in die Presskammer einbringbar ist und entlang dieser Förderrichtung aus der Presskammer führbar ist. Die Presseinrichtung kann folglich seitlich versetzt zu der Förderrichtung angeordnet werden, um die Ausdehnung der gesamten Verarbeitungslinie in dieser Richtung verringern und das Einbringen der Produkte beschleunigen zu können, wobei das Produkt nach dem Pressen weiter entlang der Förderrichtung geführt werden kann.

Es kann vorgesehen sein, dass das Gegenelement und/oder das Kontaktelement im Wesentlichen in vertikaler Richtung bewegbar sind, um den Längsausgang selektiv freizugeben oder zu versperren, wobei das Gegenelement und/oder das Kontaktelement insbesondere mittels eines Pneumatikzylinders vertikal bewegbar sein können.

Wiederum kann das jeweilige Element folglich senkrecht zu der Richtung, in der das Kontaktelement verfahren wird, bewegt werden, um den Längsausgang selektiv freizugeben oder zu versperren und die Bewegungen können entkoppelt werden. Insbesondere kann der Längsausgang dabei mittels eines Gegenelements selektiv freigegeben oder versperrt werden, welches zur Freigabe des Längsausgangs nach unten verfahren wird, um einen Spalt, welcher diese Bewegung ermöglicht, zu versperren. Das Produkt kann entsprechend durch den Längsausgang geführt werden, ohne dass es an den Begrenzungen eines Spalts anstößt und eventuell Produktteile durch ein Abschürfen an den Kanten des Spaltes in diesen gelangen. Das herabgefahrene, den Längsausgang freigebende Gegenelement kann somit eine ebene Auflagefläche, auf welche das Produkt während des Pressens aufliegt, erweitern, um das Produkt zumindest im Wesentlichen spaltfrei durch den Längsausgang befördern zu können. Insbesondere kann das Produkt dabei mittels eines entlang der Längsachse verfahrbaren Kontaktelementes durch den Längsausgang geschoben werden, wobei das Kontaktelement dazu insbesondere einen Pneumatikzylinder aufweisen kann bzw. mit einem solchen verbunden sein kann. Alternativ zu einem Pneumatikzylinder kann zum Ausstoßen des Produkts auch ein Servomotor vorgesehen sein, der beispielsweise mit einem Riemenantrieb verbunden sein kann.

Das Kontaktelement kann in die durch die Längsachse der Presseinrichtung definierte Richtung verfahrbar sein und/oder das Kontaktelement kann in im Wesentlichen vertikaler Richtung verfahrbar sein und/oder das Kontaktelement kann senkrecht zu der durch die Längsachse der Presseinrichtung definierten Richtung und senkrecht zu der Vertikalen verfahrbar sein. Grundsätzlich kann, wie bereits erwähnt, das beschriebene, mittels eines Servomotors angetriebene Kontaktelement somit derart verfahrbar sein, dass das in die Presskammer eingebrachte Produkt in einer jeweiligen der Raumrichtungen komprimierbar ist.

Die Presseinrichtung kann drei verfahrbare Kontaktelemente aufweisen, die mit jeweiligen Gegenelementen zusammenwirken, wobei die drei Kontaktelemente insbesondere mittels jeweiliger Servomotoren verfahrbar sein können.

Insbesondere kann die Presseinrichtung dabei drei verfahrbare Kontaktelemente aufweisen, die ein Komprimieren des Produkts und ein wunschgemäßes Formen in sämtlichen der drei Raumrichtungen ermöglichen. Um ein möglichst präzises Verfahren der jeweiligen Kontaktelemente zu erreichen, kann jedes dieser Kontaktelemente zumindest mittels eines jeweiligen Servomotors verfahrbar sein. Insbesondere kann zumindest ein Servomotor pro Bewegungsachse eines jeweiligen Kontaktelements, entlang derer dieses während des Pressens verfahren wird, vorgesehen sein. Grundsätzlich kann es jedoch auch vorgesehen sein, mehrere der Kontaktelemente mittels eines einzigen Servomotors zu verfahren, wobei optional mittels einer Kupplung Kräfte eines zentralen Antriebs bzw. Servomotors auf die jeweiligen Kontaktelemente übertragen bzw. betriebsangepasst abgegriffen werden können.

Bei einigen Ausführungsformen kann die Presseinrichtung eine Haltestruktur aufweisen, innerhalb derer die Presskammer gelagert ist. Diese Haltestruktur kann insbesondere rahmen-, gitter- bzw. käfigartig ausgebildet sein und dazu dienen, die während des Pressens auftretenden Kräfte aufzunehmen, wozu die Haltestruktur aus Metall bzw. Stahl und insbesondere als ein Frästeil gefertigt sein kann. Beispielsweise kann diese Haltestruktur eine aus Stahl gefertigte Grundplatte tragen, welche eine Auflagefläche für das zu pressende Produkt bildet. Diese Grundplatte kann von mehreren Streben der Haltestruktur getragen sein, so dass eine stabile Fachwerkstruktur entsteht. Ferner kann die Haltestruktur beispielsweise in Richtung der Längsachse einen keilförmig nach hinten laufenden Abschnitt aufweisen, welcher ein entlang der Längsachse verfahrbares Kontaktelement umgibt und dessen Antrieb bzw. den antreibenden Servomotor trägt und abstützt. Gleichermaßen können ein Einfuhrabschnitt, auf welchen in die Presskammer einzubringende Produkte auflegbar sind, sowie eine die Produkte in die Presskammer einbringende Einbringeinrichtung von der Haltestruktur getragen sein.

Die Haltestruktur kann von einer Basis der Presseinrichtung getragen sein.

Bei einigen Ausführungsformen kann die Presskammer einen seitlichen Einlass, durch welchen das zu pressende Produkt in die Presskammer einbringbar ist, und einen Längsausgang aufweisen, durch welchen das gepresste Produkt entlang der durch die Längsachse der Presskammer definierten Richtung aus der Presskammer führbar ist, wobei der Längsausgang durch ein erstes Gegenelement und der seitliche Einlass durch ein zweites Gegenelement selektiv versperrbar oder freigebbar sind, wobei zwischen der Haltestruktur und dem ersten Gegenelement und/oder zwischen der Haltestruktur und dem zweiten Gegenelement ein Zwischenrahmen zur Aufnahme und Weiterleitung der Presskräfte auf die Haltestruktur angeordnet ist. Insbesondere können dabei sowohl die Haltestruktur als auch der Zwischenrahmen als präzise Frästeile ausgebildet sein, wobei es die Zweiteilung ermöglicht, einen Spalt, der zum selektiven Freigeben des seitlichen Einlasses bzw. des Längsausgangs notwendig ist, möglichst gering zu gestalten. Dazu kann der Zwischenrahmen insbesondere mit der Haltestruktur verschraubt sein.

Der Zwischenrahmen kann zwei sich schräg nach unten erstreckende Drehmomentstützen aufweisen, die mit der Haltestruktur verbunden sind. Während des Pressens kann an dem Zwischenrahmen insbesondere ein den seitlichen Einlass und/oder den Längsausgang versperrendes Gegenelement anliegen, in Richtung dessen ein jeweiliges Kontaktelement verfahren wird, so dass die Presskräfte auf das Gegenelement wirken. Diese Presskräfte können über den Zwischenrahmen auf die stabile Haltestruktur weitergeleitet werden, wobei aufgrund der rahmenartigen Ausbildung des Zwischenrahmens und dessen rahmenartiger Verbindung mit der Haltestruktur Drehmomente wirken können, welche durch die zusätzlichen Drehmomentstützen aufgenommen und auf die Haltestruktur geleitet werden können.

Die Presseinrichtung kann ferner einen Pneumatikzylinder für das Ausstoßen des Produktes nach dem Pressen aus der Presskammer aufweisen. Insbesondere kann dieser Pneumatikzylinder an einem entlang der Längsachse verfahrbaren Kontaktelement ausgebildet und gemeinsam mit diesem während des Pressens verfahren werden, wobei mit dem Zylinder eine weitere Druckplatte verbunden sein kann, mittels derer das Produkt durch den Längsausgang aus der Presskammer bewegt werden kann. Dadurch kann erreicht werden, dass der Servomotor bzw. eine damit verbundene Spindel nicht den gesamten Weg zum Ausstoßen des Produktes aus der Presskammer bewältigen muss, sondern dieses Ausstoßen mittels des Pneumatikzylinders erfolgen kann.

Wie vorstehend bereits erläutert, kann es auch vorgesehen sein, dass die Presseinrichtung einen Servomotor für das Ausstoßen des Produkts aus der Presskammer nach einem Abschließen des Pressvorgangs aufweist. Insbesondere kann dabei ein entlang der Längsachse verfahrbares Kontaktelement wahlweise über eine schnelle Servoachse und eine langsame Servoachse verfahrbar sein, wobei die schnelle Servoachse dazu dienen kann, ein in die Presskammer eingebrachtes Produkt in Längsrichtung vor dem Pressen vorzupositionieren und/oder nach dem Pressen auszustoßen, während die langsame Servoachse dazu vorgesehen sein kann, das Kontaktelement während des eigentlichen Pressvorgang zu verfahren.

Eine derartige Presseinrichtung ermöglicht folglich einen äußerst flexiblen Einsatz, wobei der Pressvorgang insbesondere auf jeweilige Produkte und deren Größen flexibel angepasst werden kann. Indem das Kontaktelement durch einen Servomotor verfahren wird, kann ferner ohne die Notwendigkeit komplexer Sensorik eine präzise und kontrollierte Prozesssteuerung sowie ein wunschgemäßer Pressvorgang erreicht werden.

Ferner kann ein verfahrbares Kontaktelement für eine Presseinrichtung zum Pressen von Fleischprodukten, insbesondere gefrorenen und/oder angefrorenen Fleischprodukten, bevorzugt Frischfleischprodukten und/oder Bacon, insbesondere für eine Presseinrichtung wie hierin offenbart, ein Basisteil, ein Aufsatzteil, ein Querverschiebeteil und ein Höhenteil aufweisen, die an jeweiligen Verbindungsstellen miteinander verbunden sind und an einer Seite des Kontaktelements eine Kontaktfläche für ein Produkt während des Pressens bilden, wobei die Kontaktfläche entlang einer ersten Erstreckungsrichtung eine wirksame Länge und entlang einer zu der ersten Erstreckungsrichtung senkrecht stehenden zweiten Erstreckungsrichtung eine wirksame Breite aufweist, wobei die wirksame Länge und die wirksame Breite der Kontaktfläche veränderbar sind.

Ein solches verfahrbares Kontaktelement bzw. dessen Kontaktfläche, an welcher das Produkt während des Pressens zumindest teilweise anliegt, kann entsprechend in zwei Dimensionen flexibel an die Größe eines zu pressenden Produktes bzw. die gewünschte oder vorgesehene Form des Produktes nach dem Pressvorgang angepasst werden. Dazu kann sowohl die wirksame Länge als auch die wirksame Breite der Kontaktfläche angepasst werden.

Dies ermöglicht es, flexibel verschiedene Produkte und insbesondere Produkte verschiedener Größe in eine Presskammer einer Presseinrichtung einzubringen und dort durch ein Verfahren des Kontaktelementes zu komprimieren, wobei durch die Anpassung der Kontaktfläche des Kontaktelementes gewissermaßen auch die Dimension der Presskammer an das jeweilige Produkt angepasst werden kann. Folglich können verschiedenste Produkte bei gleichbleibender Qualität und mit gleichbleibenden Resultaten mittels einer solchen Presseinrichtung mit einem in zwei Dimensionen veränderbaren Kontaktelement gepresst werden. Es ist daher nicht notwendig, wie bei herkömmlichen Presseinrichtungen, für verschiedene Produkte bzw. Produkte verschiedener Größen auch jeweilige speziell darauf ausgerichtete Presseinrichtungen vorzusehen. Auch eine eventuelle Vorsortierung der Produkte in vorgeschalteten Bearbeitungsschritten, beispielsweise um die Produkte jeweiligen passenden Presseinrichtungen zuzuführen, kann entfallen und die zu einer solchen Sortierung erforderliche Zeit kann eingespart werden.

Insbesondere kann ein solches Kontaktelement mit einer veränderbaren Kontaktfläche in einer Presseinrichtung als dasjenige Kontaktelement vorgesehen sein, welches entlang einer Längsachse einer Presskammer der Presseinrichtung verfahrbar ist, um ein in die Presskammer eingebrachtes Produkt in dieser Richtung zu komprimieren. Dabei kann die wirksame Länge der Kontaktfläche senkrecht zu der Längsachse der Presskammer ausgerichtet sein und die wirksame Breite einer Höhe des Kontaktelements bzw. dessen Kontaktfläche in vertikaler Richtung entsprechen. Insbesondere kann die zweite Erstreckungsrichtung senkrecht zu einer horizontal ausgerichteten Auflagefläche des Produktes in vertikaler Richtung verlaufen.

Gleichermaßen kann es vorgesehen sein, in anderen Richtungen als entlang der Längsachse einer Presskammer verfahrbare Kontaktelemente mit in zwei Dimensionen veränderbaren Kontaktflächen vorzusehen. Insbesondere können auch ein senkrecht zu einer solchen Längsachse verfahrbares Kontaktelement und/oder ein in vertikaler Richtung verfahrbares Kontaktelement derartig ausgebildet sein und eine Presseinrichtung kann ein Kontaktelement mit einer veränderbaren Kontaktfläche oder mehrere Kontaktelemente mit einer jeweiligen veränderbaren Kontaktfläche aufweisen.

Die Kontaktfläche eines solchen Kontaktelementes kann somit insbesondere auf die wirksame Länge eingestellt werden, die für ein jeweiliges Produkt passend ist und beispielsweise dessen gewünschter Breite nach dem Pressvorgang entsprechen kann. Dabei kann die Kontaktfläche des Kontaktelements durch eine Ausübung eines Druckes veränderbar sein. Entsprechend kann es beispielsweise vorgesehen sein, die wirksame Länge und/oder die wirksame Breite der Kontaktfläche zunächst durch ein jeweiliges entlang der ersten Erstreckungsrichtung bzw. entlang der zweiten Erstreckungsrichtung verfahrbares Kontaktelement einer Presseinrichtung wunschgemäß einzustellen, woraufhin das an das jeweilige Produkt angepasste Kontaktelement zum Zwecke eines Komprimierens des Produktes verfahren werden kann.

Beispielsweise kann es bei einem derartig ausgebildeten Kontaktelement mit einer veränderbaren Kontaktfläche, welches zu einem Verfahren entlang der Längsachse einer vorstehend beschriebenen Presseinrichtung bzw. deren Presskammer ausgebildet ist, vorgesehen sein, dass die wirksame Länge in einem Bereich von etwa 180 mm bis 230 mm veränderbar ist, insbesondere in einem Bereich von etwa 190 mm bis 230 mm. Die wirksame Breite kann dabei insbesondere in einem Bereich von etwa 30 mm bis 50 mm veränderbar sein.

Bei herkömmlichen Kontaktelementen, die allenfalls eine Veränderbarkeit in der Höhe bzw. in einer Dimension aufweisen können, kann ein Produkt hingegen ausschließlich mit einer durch das Kontaktelement unveränderlich vorgegebenen Erstreckung senkrecht zu dessen Verfahrrichtung komprimiert werden. Dabei kann ein senkrecht zu dem betreffenden Kontaktelement verfahrbares Kontaktelement lediglich in eine durch diese Erstreckung vorgegebene Position gebracht werden, ohne dass eine Anpassung an das Produkt erfolgen kann. Eine solche flexible Anpassung kann hingegen durch das hierin offenbarte Kontaktelement mit einer in zwei Dimensionen veränderbaren Kontaktfläche ermöglicht werden.

Es kann vorgesehen sein, dass das Kontaktelement in Richtung einer maximalen wirksamen Länge und/oder in Richtung einer maximalen wirksamen Breite vorgespannt ist, so dass das Kontaktelement entgegen dieser Vorspannung, beispielsweise durch ein entlang der ersten Erstreckungsrichtung und/oder der zweiten Erstreckungsrichtung verfahrbares Kontaktelement, zur Veränderung der wirksamen Länge und/oder der wirksamen Breite der Kontaktfläche zusammengedrückt werden kann. Durch die Vorspannung in Richtung der maximalen wirksamen Länge bzw. der maximalen wirksamen Breite kann dabei der sich zwischen dem Rand der Kontaktfläche und einem Druck ausübenden Element bildende Spalt zuverlässig verschlossen werden. Insbesondere kann eine solche Vorspannung in einfacher Weise mittels einer jeweiligen Feder bzw. mehrerer jeweiliger Federn erzeugt werden.

Die von dem Basisteil, dem Aufsatzteil, dem Querverschiebeteil und dem Höhenteil gebildete Kontaktfläche kann abschnittsweise uneben verlaufen, um ein Ineinandergreifen und ein relatives Verschieben der Teile zueinander zu ermöglichen.

Bei einigen Ausführungsformen können die jeweiligen Verbindungsstellen des Basisteils, des Aufsatzteils, des Querverschiebeteils und des Höhenteils derart gestaltet sein, dass der während eines Pressens auf die Kontaktfläche wirkende Druck eine Abdichtung bzw. eine Verstärkung der Abdichtung der Verbindungsstellen bewirkt. Insbesondere können dabei an den Verbindungsstellen elastisch verformbare Dichtelemente vorgesehen sein, welche durch einen während des Pressens auf die Kontaktfläche wirkenden Druck die Verbindungsstellen abdichtend verformbar sind, und/oder das Basisteil, das Aufsatzteil, das Querverschiebeteil und/oder das Höhenteil können zumindest einen elastisch verformbaren Dichtabschnitt aufweisen, welcher durch einen während des Pressens auf die Kontaktfläche wirkenden Druck die Verbindungsstellen abdichtend verformbar ist.

Um eine solche Abdichtung zu erreichen, können an den Verbindungsstellen beispielsweise gewölbte und elastisch rückfedernd ausgebildete Dichtelemente vorgesehen sein, die sich bei einer Beaufschlagung mit Druck in Richtung eines zwischen zwei jeweiligen Teilen des Kontaktelementes entstehenden Spaltes verformen, um diesen abzudichten. Einem eventuellen Durchtritt von Produktteilen oder Flüssigkeit kann somit entgegengewirkt werden. Gleichermaßen kann eine Abdichtung der Verbindungsstellen erreicht werden, indem zumindest eines der Teile und insbesondere mehrere der Teile des Kontaktelementes einen verformbaren Dichtabschnitt aufweisen, welcher bei einer Beaufschlagung mit Druck in Richtung eines Spaltes zwischen den jeweiligen Teilen verformbar ist und diesen abdichtet. Insbesondere kann ein solcher Dichtabschnitt eines Teiles zumindest ein anderes Teil in der Kontaktfläche teilweise überlappen, um die gewünschte Abdichtung auf einfache Art bei einer Beaufschlagung mit Druck erreichen zu können.

An den Rändern der Kontaktfläche können Dichtelemente vorgesehen sein, welche dazu ausgebildet sind, durch einen auf die Kontaktfläche und die Dichtelement während des Pressens wirkenden Druck eine Verbindung der Kontaktfläche zu weiteren Flächen abzudichten. Beispielsweise kann die Kontaktfläche während eines Pressens zwischen einem weiteren verfahrbaren Kontaktelement und dem damit zusammenwirkenden Gegenelement bewegt werden, wobei zwischen den Rändern der Kontaktfläche und diesen Elementen ein Spalt verbleiben kann. Dabei können die Dichtelemente beispielsweise elastisch und gewölbt geformt sein, um während des Pressens in Richtung der senkrecht zu der Verfahrrichtung des Kontaktelements bzw. der Kontaktfläche angeordneten Elemente bzw. deren Flächen gepresst zu werden und den Spalt abzudichten. Ein solcher Spalt kann insbesondere sowohl durch eine Vorspannung des Kontaktelements in Richtung einer maximalen wirksamen Länge und/oder einer maximal wirksamen Breite sowie durch an den Rändern angeordnete Dichtelemente während eines Pressvorgangs abgedichtet werden.

Es kann vorgesehen sein, dass das Querverschiebeteil relativ zu dem Basisteil entlang der ersten Erstreckungsrichtung verschiebbar ist. Durch diese Verschiebung des Querverschiebeteils entlang der ersten Erstreckungsrichtung kann folglich die wirksame Länge des Presselements veränderbar sein. Insbesondere kann so die Ausdehnung eines entlang einer Längsachse einer Presskammer verschiebbaren Kontaktelements senkrecht zu dieser Längsachse und parallel zu einer Auflagefläche für das Produkt an die Ausdehnung des Produkts in dieser Richtung bzw. die gewünschte Ausdehnung des Produkts in dieser Richtung nach dem Pressen angepasst werden.

Dabei kann das Basisteil in Richtung der ersten Erstreckungsrichtung und in Richtung der zweiten Erstreckungsrichtung an jeweiligen während des Pressens unbewegten Gegenelementen in einer Presskammer einer Presseinrichtung angeordnet sein. Entsprechend kann es vorgesehen sein, das Basiselement während des Einsatzes des Kontaktelementes zum Pressen von Produkten relativ zu den anderen Teilen unbewegt zu belassen, während die weiteren Teile, beispielsweise durch weitere Kontaktelemente der Presseinrichtung, entlang zumindest einer der ersten Erstreckungsrichtung und/oder der zweiten Erstreckungsrichtung relativ zu dem Basiselement bewegbar vorgesehen sein können.

Es kann vorgesehen sein, dass das Querverschiebeteil entlang der ersten Erstreckungsrichtung in Richtung einer maximalen wirksamen Länge vorgespannt ist. Das Kontaktelement bzw. dessen Kontaktfläche weist somit grundsätzlich eine maximale wirksame Länge auf, die durch eine Anwendung von Druck, insbesondere durch einen im Zuge eines Pressens eines Produktes verfahrenes weiteres Kontaktelement aufgewendeten Druck, im Sinne einer Verkleinerung angepasst werden kann, sodass auch die Kontaktfläche eine Verkleinerung erfährt. Die Vorspannung des Querverschiebeteils in Richtung der maximalen wirksamen Länge bewirkt dabei insbesondere eine Abdichtung des Spalts, welcher sich zwischen der Kontaktfläche und dem Druck auf die Kontaktfläche ausübenden Element bildet. Einem Austritt von Produktteilen bzw. von Flüssigkeit durch diesen Spalt kann somit entgegengewirkt werden.

Das Aufsatzteil kann gemeinsam mit dem Querverschiebeteil entlang der ersten Erstreckungsrichtung relativ zu dem Basisteil verschiebbar sein und das Aufsatzteil kann relativ zu dem Querverschiebeteil und dem Basisteil entlang der zweiten Erstreckungsrichtung verstellbar sein. Entsprechend kann das Aufsatzteil sowohl entlang der ersten als auch entlang der zweiten Erstreckungsrichtung verstellbar sein, so dass das Aufsatzteil insgesamt in zwei Dimensionen verstellbar ist. Durch eine Verschiebung des Aufsatzteils gemeinsam mit dem Querverschiebeteil kann somit zunächst die wirksame Länge der Kontaktfläche angepasst werden, wobei eine Verstellung des Aufsatzteils entlang der zweiten Erstreckungsrichtung auch eine Veränderung der wirksamen Breite der Kontaktfläche in dem Bereich, in dem sich das Aufsatzteil entlang der ersten Erstreckungsrichtung erstreckt, ermöglicht.

Das Höhenteil kann relativ zu dem Basisteil und dem Querverschiebeteil entlang der zweiten Erstreckungsrichtung verstellbar sein. Auch durch eine Bewegung des Höhenteils kann somit die wirksame Breite der Kontaktfläche in dem Bereich, indem sich das Höhenteil entlang der ersten Erstreckungsachse erstreckt, verändert werden.

Die wirksame Länge der Kontaktfläche ist grundsätzlich durch die Positionen des Querverschiebeteils und des Basisteils bestimmt, wobei die wirksame Länge durch ein Verschieben des Querverschiebeteils angepasst und insbesondere ausgehend von einer maximalen wirksamen Länge verringert werden kann. Gleichermaßen ergibt sich die wirksame Breite der Kontaktfläche aus der Erstreckung des Basisteils und des Querverschiebungsteils in Richtung der zweiten Erstreckungsrichtung und der Positionierung entlang der zweiten Erstreckungsrichtung des Aufsatzteils und des Höhenteils. Das Aufsatzteil und das Höhenteil können dabei in einer Maximalposition eine maximale wirksame Breite der Kontaktfläche definieren, welche durch ein Verstellen des Aufsatzteils und des Höhenteils entlang der zweiten Erstreckungsrichtung verringerbar sein kann.

Folglich kann das Kontaktelement vierteilig ausgebildet sein und ein relativ zu den anderen Teilen während eines Pressens unbewegtes Basisteil aufweisen. Ferner können ein in einer Dimension, entlang der ersten Erstreckungsrichtung, bewegbares Querverschiebeteil und ein in einer Dimension, entlang der zweiten Erstreckungsrichtung, verstellbares Höhenteil vorgesehen sein. Das verbleibende Aufsatzteil kann in zwei Dimensionen, entlang der ersten Erstreckungsachse gemeinsam mit dem Querverschiebeteil und entlang der zweiten Erstreckungsrichtung, verstellbar sein. Diese Ausbildung ermöglicht es, die Kontaktfläche flexibel in zwei Dimensionen an die Anforderungen eines jeweiligen Produktes anzupassen.

Bei einigen Ausführungsformen können das Aufsatzteil und das Höhenteil entlang der zweiten Erstreckungsrichtung verstellbar und in Richtung einer maximalen wirksamen Breite vorgespannt sein und es kann zumindest ein Synchronisationselement vorgesehen sein, welches dazu ausgebildet ist, eine Verstellung des Aufsatzteils und Höhenteils entlang der zweiten Erstreckungsrichtung zu synchronisieren. Wiederum kann durch die Vorspannung somit die wirksame Breite von einer maximalen wirksamen Breite ausgehend verringert und an ein jeweiliges Produkt angepasst werden, wobei durch das Synchronisationselement eine gleichmäßige Verringerung dieser wirksamen Breite bei einer Verstellung des Aufsatzteils und des Höhenteils erreicht werden kann.

Insbesondere können das Aufsatzteil und das Höhenteil eine jeweilige, sich senkrecht zu der Kontaktfläche erstreckende Druckfläche aufweisen, wobei die wirksame Breite der Kontaktfläche durch ein Ausüben eines Drucks auf die Druckflächen veränderbar sein kann. Die wirksame Breite kann dabei eine Erstreckung der Kontaktfläche in vertikaler Richtung bestimmen, sodass die wirksame Breite durch einen in vertikaler Richtung nach unten verfahrbares weiteres Kontaktelement einer Presseinrichtung angepasst werden kann.

Unterhalb der jeweiligen Druckflächen können mehrere Kniehebelgelenke ausgebildet sein, welche über zugeordnete Lenkerelemente miteinander verbunden sein können. Dies ermöglicht es, die Druckflächen während einer Veränderung der wirksamen Breite der Kontaktfläche gleichmäßig und geradlinig entlang der zweiten Erstreckungsrichtung zu bewegen und etwaigen Auslenkungen der Druckflächen im Sinne eines Verkippens entgegenzuwirken, die gegebenenfalls in Anbetracht der während eines Pressens wirkenden Kräfte zu Beschädigungen des Kontaktelementes oder einer Presseinrichtung führen können.

Die Bewegungen des Höhenteils und des Aufsatzteils entlang der zweiten Erstreckungsrichtung zur Veränderung der wirksamen Breite der Kontaktfläche können synchronisiert erfolgen. Dazu können beispielsweise die vorstehend genannten Druckflächen, insbesondere nach einem Verschieben des Aufsatzteils gemeinsam mit dem Querverschiebeteil, abschnittsweise übereinanderliegend angeordnet sein, sodass eine auf eine der Druckflächen wirkende Kraft in Richtung der zweiten Erstreckungsachse auf die andere der Druckflächen übertragen werden kann. Insbesondere kann ein Abschnitt, in welchem die Druckflächen übereinanderliegen, dabei zentral in Bezug auf die erste Erstreckungsrichtung angeordnet sein.

Die erwähnten Vorspannungen der jeweiligen Teile können insbesondere und in einfacher Weise mittels Federn erzeugt werden, wobei auch sonstige und insbesondere steuerbare Elemente dazu vorgesehen sein können. Insbesondere kann mittels eines steuerbaren Elementes eine gewünschte und vorgegebene oder vorgebbare Vorspannung erzeugt werden, um eine zuverlässige und ausreichende Abdichtung zwischen der Kontaktfläche und an deren Rändern anliegenden weiteren Elementen erreichen zu können.

Ein derartiges Kontaktelement mit einer in zwei Dimensionen veränderbaren Kontaktfläche für ein zu pressendes Fleischprodukt ermöglicht folglich, das Kontaktelement flexibel an die Dimensionen des Produktes anzupassen und verschiedene Produkte und insbesondere Produkte verschiedener Größe flexibel und wunschgemäß zu pressen und zu formen. Insbesondere bei relativ kleinen Produkten kann dadurch ein wunschgemäßes Pressen der Produkte in eine Form mit einer verhältnismäßig großen Höhe erreicht werden, die ein kontrolliertes Abtrennen von Scheiben in einem eventuell später vorgesehenen Aufschneidevorgang der Produkte, im Zuge dessen von den Produkten Scheiben abgetrennt und Portionen aus diesen gebildet werden können, ermöglichen kann.

Ferner kann eine Presseinrichtung zum Pressen von Fleischprodukten, insbesondere gefrorenen und/oder angefrorenen Fleischprodukten, bevorzugt Frischfleischprodukten und/oder Bacon, insbesondere eine Presseinrichtung wie hierin offenbart, eine sich entlang einer Längsachse erstreckenden Presskammer umfassen, in welche ein zu pressendes Produkt einbringbar ist, wobei die Presskammer zumindest ein Gegenelement und wenigstens ein in Richtung des Gegenelements verfahrbares Kontaktelement mit einem Basisteil, einem Aufsatzteil, einem Querverschiebeteil und einem Höhenteil, die miteinander verbunden sind und an einer Seite des Kontaktelements eine Kontaktfläche für ein Produkt während des Pressens bilden, wobei die Kontaktfläche entlang einer ersten Erstreckungsrichtung eine wirksame Länge und entlang einer zu der ersten Erstreckungsrichtung senkrecht stehenden zweiten Erstreckungsrichtung eine wirksame Breite aufweist, wobei die wirksame Länge und die wirksame Breite der Kontaktfläche veränderbar sind, wobei das Kontaktelement ferner insbesondere wie vorstehend offenbart ausgebildet ist.

Eine solche Presseinrichtung weist folglich zumindest ein Kontaktelement mit einer in zwei Dimensionen veränderbaren Kontaktfläche für das zu pressende Produkt auf, so dass eine flexible und optimierte Anpassung an das jeweilige zu pressende Produkt erreicht werden kann. Ferner kann ein solches Kontaktelement insbesondere auch wie vorstehend beschrieben mittels eines Servomotors angetrieben werden, um einen besonders präzisen und kontrolliert steuerbaren Pressvorgang bei flexibler Dimensionierung der Kontaktfläche erreichen zu können.

Ferner kann ein System zum Pressen und Weitergeben von Fleischprodukten, insbesondere gefrorenen und/oder angefrorenen Fleischprodukten, bevorzugt Frischfleischprodukten und/oder Bacon, mit einer Presseinrichtung zum Pressen der Produkte umfassen, insbesondere einer Presseinrichtung wie hierin offenbart und bevorzugt mit einer Presseinrichtung wie hierin offenbart, die ein Kontaktelement mit in zwei Dimensionen veränderbarer Kontaktfläche wie hierin offenbart aufweist, wobei der Presseinrichtung eine Fördereinrichtung nachgelagert ist, die dazu ausgebildet ist, die gepressten Produkte in zumindest zwei Spuren entlang einer Förderrichtung zu transportieren, wobei zwischen der Presseinrichtung und der Fördereinrichtung in Bezug auf die Förderrichtung eine Verteileinrichtung mit einer Produktauflagefläche für zumindest ein Produkt angeordnet ist, welche dazu ausgebildet ist, die gepressten Produkte auf die zumindest zwei Spuren der Förderreinrichtung zu verteilen.

Dabei kann die Presseinrichtung Teil einer Verarbeitungslinie sein, entlang derer die Produkte vornehmlich in Förderrichtung transportiert und in mehreren Schritten verarbeitet werden. Beispielsweise kann es vorgesehen sein, die gepressten Produkte darauffolgend einer Aufschneidevorrichtung, insbesondere einem Hochgeschwindigkeitsslicer, zuzuführen und von den Produkten Scheiben abzutrennen, aus denen Portionen gebildet werden, die zumindest eine Scheibe umfassen. Um dabei den Produktdurchsatz erhöhen zu können, kann es vorgesehen sein, ein solches Aufschneiden der Produkte mehrspurig durchzuführen, so dass beispielsweise zwei Produkte gleichzeitig in einen Schneidbereich einer Schneidvorrichtung geführt und im Wesentlichen zeitgleich von den jeweiligen Produkten Scheiben abgetrennt werden können. Auch sonstige Bearbeitungsschritte, beispielsweise ein Verpacken der gepressten Produkte oder der daraus gebildeten Portionen mittels einer Verpackungsmaschine, können mehrspurig erfolgen.

Die Verteileinrichtung ermöglicht es dabei, die Produkte nach dem Pressen flexibel auf die zumindest zwei Spuren der Fördereinrichtung zu verteilen, welche die Produkte in der Folge weiter entlang der Förderrichtung transportieren und insbesondere mehrspurig durchgeführten Bearbeitungsschritten wie einem Aufschneiden der Produkte mittels einer Aufschneidevorrichtung zuführen kann.

Die Produktauflagefläche der Verteileinrichtung kann als eine Gleitfläche ausgebildet und/oder von einem Förderband gebildet sein, auf welchem die Produkte aufliegen und welches dazu ausgebildet ist, die Produkte in Richtung der Fördereinrichtung bzw. in Förderrichtung zu transportieren. Dabei kann die Produktauflagefläche beispielsweise senkrecht zu der Förderrichtung verfahrbar sein, um ein auf der Produktauflagefläche aufliegendes Produkt wahlweise an eine jeweilige der zumindest zwei Spuren der Fördereinrichtung übergeben zu können. Eine Übergabe eines Produktes an die Fördereinrichtung kann dabei beispielsweise durch einen Vorzug in Förderrichtung eines die Auflagefläche bildenden Förderbandes erreicht werden, während es auch möglich ist, ein auf einer Gleitfläche aufliegendes Produkt beispielsweise mittels eines Schiebeelements in Förderrichtung auf die Fördereinrichtung aufzuschieben.

Die Verteileinrichtung kann einen senkrecht zu der Förderrichtung bewegbaren Schieber und einen senkrecht zu der Förderrichtung feststehenden Anschlag aufweisen, wobei der bewegbare Schieber und der Anschlag zusammenwirken, um das Produkt senkrecht zu der Förderrichtung auf der Auflagefläche zu positionieren. Durch diese Positionierung des Produktes senkrecht zu der Förderrichtung kann erreicht werden, dass das Produkt in der Folge mit einer vorgegebenen Position senkrecht zu der Förderrichtung an die Fördereinrichtung übergeben und beispielsweise daraufhin zentriert in einer jeweiligen Spur der Fördereinrichtung transportiert werden kann.

Bei einigen Ausführungsformen kann die Verteileinrichtung wenigstens eine Wägezelle umfassen, welche dazu ausgebildet ist, das Gewicht des zumindest einen auf der Produktauflagefläche aufliegenden Produktes zu bestimmen.

Grundsätzlich kann es vorgesehen sein, dass die Produktauflagefläche Raum für mehrere nebeneinander angeordnete Produkte bereitstellt und diese gleichzeitig einer Spur oder verschiedenen Spuren der Fördereinrichtung übergibt. Ebenso kann es vorgesehen sein, dass lediglich ein Produkt gleichzeitig auf der Auflagefläche der Verteileinrichtung aufliegt und zunächst einer der Spuren der Fördereinrichtung übergeben wird, bevor ein folgendes Produkt auf die Verteileinrichtung bzw. deren Produktauflagefläche gebracht und in der Folge an die Fördereinrichtung weitergegeben wird.

Indem die Verteileinrichtung wenigstens eine Wägezelle aufweisen kann, kann mit lediglich einer einzigen Komponente des Systems sowohl eine Verteilung der Produkte auf mehrere Spuren der Fördereinrichtung und eine spurbezogene Ausrichtung der Produkte als auch ein Wiegen der Produkte erfolgen. Die notwendige Ausdehnung der Verarbeitungslinie in Förderrichtung kann dadurch minimiert werden, indem ein beispielsweise andernfalls gesondert vorzusehendes Wägeband eingespart werden kann. Auch die Zahl der Bandübergänge, über welche die Produkte transportiert werden, kann somit reduziert werden.

Ferner ermöglicht die in die Verteileinrichtung integrierte Wägezelle des Produktes, die Verteilung der Produkte unmittelbar in Abhängigkeit von dem ermittelten Produktgewicht durchzuführen. Beispielsweise kann es vorgesehen sein, die Spuren der Fördereinrichtung hinsichtlich des Gesamtgewichts der in den Spuren transportierten Produkte möglichst gleichmäßig zu füllen, so dass ein mittels der Wägezelle erfasstes relativ zu den vorhergehend übergebenen Produkten schweres Produkt beispielsweise einer Spur zugeordnet werden kann, in der bis dahin Produkte eines verhältnismäßig geringen Gesamtgewichtes transportiert wurden.

Insbesondere kann es vorgesehen sein, dass die Fördereinrichtung die gepressten Produkte in mehreren Spuren an eine Aufschneidevorrichtung übergibt, welche dazu ausgebildet ist, mehrspurig von den zugeführten Produkten Scheiben abzutrennen und aus den abgetrennten Scheiben Portionen zu bilden. Insbesondere dabei kann es vorgesehen bzw. gewünscht sein, im Zuge des Verarbeitungsprozesses in beiden Spuren Portionen mit einem möglichst gleichen Gesamtgewicht zu erzeugen, sodass gerade bei einer solchen Weiterbearbeitung der gepressten Produkte eine Sortierung auf die Spuren der Fördereinrichtung in Abhängigkeit von dem Produktgewicht erfolgen kann.

Die Wägezelle kann dazu ausgebildet sein, das Gewicht des zumindest einen auf der Produktauflagefläche aufliegenden Produktes an lediglich einem Kontaktpunkt zu bestimmen. Dabei kann die Wägezelle dazu ausgebildet sein, neben der in vertikaler Richtung wirkenden Gewichtskraft auch etwaige Dreh- oder Kippmomente zu erfassen, die aufgrund einer nicht exakt balancierten Positionierung des Produktes an dem lediglich einen Kontaktpunkt entstehen können. Dadurch kann trotz der Auflage des Produktes an nur einem Kontaktpunkt eine präzise Bestimmung des Gewichtes erfolgen.

Indem lediglich ein Kontaktpunkt vorgesehen sein kann, an welchem die Wägezelle das Produktgewicht bestimmt, kann eine kompakte und raumsparende Ausbildung der Wägezelle erreicht werden. Insbesondere kann die Wägezelle gemeinsam mit der Produktauflagefläche senkrecht zu der Förderrichtung verfahrbar sein, um das Gewicht des zumindest einen aufliegenden Produktes in jeder Position und insbesondere auch während eines Verfahrens der Produktauflagefläche bestimmen zu können.

Bei einigen Ausführungsformen kann die Wägezelle mit einer Steuereinrichtung verbunden sein, welche dazu ausgebildet ist, die Verteileinrichtung zu steuern, wobei die Steuereinrichtung insbesondere dazu ausgebildet sein kann, die Produktauflagefläche in Abhängigkeit von dem bestimmten Gewicht des zumindest einen aufliegenden Produktes senkrecht zu der Förderrichtung zu bewegen. Insbesondere kann die Steuereinrichtung dazu ausgebildet sein, die Produktauflagefläche senkrecht zu der Fördereinrichtung zu bewegen und dadurch eine Verteilung des aufliegenden Produktes auf eine der nachfolgenden Spuren der Fördereinrichtung zu erreichen. Indem die Wägezelle direkt mit der Steuereinrichtung verbunden sein kann, kann diese Verteilung der Produkte insbesondere in Abhängigkeit von dem bestimmten Gewicht des zumindest einen aufliegenden Produktes erfolgen, so dass beispielsweise die mehreren Spuren der Fördereinrichtung mit Produkten eines annähernd gleichen Gesamtgewichtes im Zuge des Verarbeitungsprozesses beladen werden können.

Bei einigen Ausführungsform kann die Verteileinrichtung ein in Förderrichtung endlos umlaufendes Förderband aufweisen, welches die Produktauflage bildet, wobei das Förderband von einem Tragelement getragen sein kann, und wobei das Tragelement in einer Führung senkrecht zu der Förderrichtung verschiebbar gelagert sein kann. Dabei kann das Tragelement in der Führung senkrecht zu der Förderrichtung bewegt werden, um das die Produktauflagefläche bildende Förderband in Richtung einer jeweiligen Spur der Fördereinrichtung auszurichten, so dass das Produkt durch einen Vorzug des Förderbandes in Förderrichtung auf die jeweilige Spur der Fördereinrichtung gebracht werden kann. Insbesondere kann die Führung dabei zumindest ein Führungsrohr, insbesondere zwei Führungsrohre, aufweisen, auf welchen das Tragelement senkrecht zu der Förderrichtung bewegbar gelagert ist.

Es kann vorgesehen sein, dass das Förderband zumindest zeitweise beschleunigt angetrieben wird, um das Produkt an eine der Spuren der Fördereinrichtung zu übergeben. Grundsätzlich kann es, um ein Wiegen des Produktes innerhalb der Verteileinrichtung zu ermöglichen, vorgesehen sein, das Förderband zumindest für einen bestimmten Zeitraum unbeschleunigt und entsprechend entweder unbewegt oder mit konstanter Geschwindigkeit bewegt vorzusehen. Dies kann es ermöglichen, das Gewicht des zumindest einen auf der Produktauflagefläche aufliegenden Produktes möglichst präzise und ohne die Notwendigkeit eines Ausgleichs durch eine beschleunigte Bewegung des Produktes bedingter Kräfte zu ermitteln. Dabei kann es ausreichend sein, eine solche unbeschleunigte Bewegung bzw. ein Ruhen des Produktes für etwa 25 ms vorzusehen, innerhalb derer das Wiegen mittels der Wägezelle erfolgen kann.

Indem das Förderband insbesondere nach dem Wiegen beschleunigt bewegt werden kann, kann ein schnelles Übergeben der Produkte an die nachfolgende Fördereinrichtung erreicht werden. Insbesondere können die gepressten Produkte durch diese beschleunigte Übergabe einem folgenden Bearbeitungsschritt, der im Vergleich zu dem Pressen mittels der der Verteileinrichtung vorgelagerten Presseinrichtung verlangsamt, jedoch in zumindest zwei Spuren durchgeführt wird, kontinuierlich und ohne Zeitverlust zugeführt werden.

Bei einigen Ausführungsformen kann die Verteileinrichtung mehrere in Förderrichtung endlos umlaufende Einzelriemen und/oder mehrere zueinander beabstandete Bandgurte aufweisen, welche die Produktauflagefläche bilden, wobei unterhalb der Produktauflagefläche ein Hebeelement angeordnet sein kann, welches dazu ausgebildet ist, das auf der Produktauflagefläche aufliegende Produkt anzuheben, wobei das Hebelelement insbesondere mit einer Wägezelle zum Wiegen des Produktes verbunden sein kann.

Ein solches Hebeelement kann beispielsweise rechenartig ausgebildet sein, so dass das Hebeelement zwischen den umlaufenden Einzelriemen oder den beabstandeten Bandgurten hindurchgreifen kann, um ein aufliegendes Produkt anzuheben. Indem mit dem Hebeelement eine Wägezelle verbunden sein kann, kann das Wiegen des Produktes erfolgen, während das Produkt mittels des Hebeelements angehoben ist, so dass das Wiegen unbeeinflusst von einer Bewegung der Verteileinrichtung erfolgen kann. Insbesondere können Einzelriemen bzw. die Bandgurte entsprechend dauerhaft umlaufen, ohne dass eine Unterbrechung deren Bewegung zu einem Wiegen des Produktes erforderlich ist.

Wiederum kann die Wägezelle das Gewicht des angehobenen Produktes insbesondere an lediglich einem Kontaktpunkt ermitteln, wobei die Wägezelle dazu ausgebildet sein kann, etwaige Kippmomente des entsprechend gegebenenfalls nicht vollkommen stabil und ausbalanciert auf dem einen Kontaktpunkt aufliegenden Produktes zu erfassen und bei der Ermittlung des Gewichtes zu berücksichtigen. Dabei können das Hebeelement sowie ein zu dessen Antrieb notwendiger Motor unterhalb der Produktauflagefläche angeordnet sein, so dass der dort ohnehin zur Verfügung stehende Bauraum zur Anordnung dieser Komponenten genutzt werden kann.

Die Verteileinrichtung kann dazu ausgebildet sein, die Produktauflagefläche senkrecht zu der Förderrichtung über eine in Bezug auf diese Bewegung außenliegende Spur der Fördereinrichtung hinaus zu bewegen. Dies kann es ermöglichen, ein auf der Produktauflage aufliegendes Produkt nicht an die Fördereinrichtung zu übergeben, sondern beispielsweise in einen Ausschussbereich zu fördern. Insbesondere kann dies erfolgen, wenn mittels einer in die Verteileinrichtung integrierten Wägezelle ein Gewicht ermittelt wurde, welches das Produkt als mangelhaft und beispielsweise für einen folgenden Bearbeitungsschritt unbrauchbar kennzeichnet. Ebenso kann es vorgesehen sein, unmittelbar nach dem Pressen mittels einer Messeinrichtung ein Qualitätskriterium wie den Fett- und/oder Salzgehalt eines Produktes oder dessen Oberflächenbeschaffenheit zu bestimmen und ein aufgrund dieser ermittelten Eigenschaften als mangelhaft erkanntes Produkt auszusondern.

Insbesondere kann eine solche Messeinrichtung eine Kamera und eine Bildauswerteeinrichtung aufweisen, mittels derer die Oberflächenstruktur eines gepressten Produktes analysiert werden kann, sodass beispielsweise mit einer zu großen Kraft gepresste und Risse aufweisende Produkte ausgesondert werden können. Die Information über dieses aufgrund eines mangelhaften Pressvorgangs ausgesonderten Produktes kann an eine Auswerte- und Steuereinrichtung der Presseinrichtung gemeldet werden, mit welcher die Messeinrichtung und/oder die Verteileinrichtung verbunden sein können, welche dazu ausgebildet sein kann, den Pressvorgang für weitere Produkte unter Berücksichtigung dieser Information anzupassen. Beispielsweise können Vorgaben für die zu erreichenden Presskräfte daraufhin korrigiert werden. Darüber hinaus kann die Messeinrichtung ein Röntgengerät, einen Produktscanner, eine Wärmebildkamera und/oder ein Impedanzmessgerät aufweisen.

Bei einigen Ausführungsformen kann der Fördereinrichtung eine Aufschneidevorrichtung, insbesondere ein Hochgeschwindigkeitsslicer, nachgelagert sein, wobei die Fördereinrichtung dazu ausgebildet sein kann, die Produkte an eine Produktzufuhr zu übergeben, welche dazu ausgebildet ist, die Produkte einem Schneidbereich zuzuführen, in welchem mittels eines sich bewegenden, insbesondere rotierenden und/oder umlaufenden, Messers von den Produkten Scheiben abgetrennt werden. Ferner kann die Fördereinrichtung dazu ausgebildet sein, die Produkte einem Schneidbereich einer Aufschneidevorrichtung, insbesondere eines Hochgeschwindigkeitsslicers, zuzuführen, in welchem mittels eines sich bewegenden, insbesondere rotierenden und/oder umlaufenden, Messers von den Produkten Scheiben abgetrennt werden.

Entsprechend kann es vorgesehen sein, dass die Fördereinrichtung beispielsweise von einem oder mehreren Förderbändern gebildet wird, welche die Spuren der Fördereinrichtung bilden und die Produkte an eine nachfolgende Produktzufuhr einer Aufschneidevorrichtung und insbesondere eines Hochgeschwindigkeitsslicers übergeben. Dabei kann die Fördereinrichtung auch mehrere in Förderrichtung aufeinanderfolgende Förderbänder für jede der Spuren umfassen. Ebenso ist es möglich, dass die Verteileinrichtung die Produkte direkt auf die Spuren einer Produktzufuhr eines Hochgeschwindigkeitsslicers bzw. einer sonstigen Aufschneidevorrichtung auflädt, so dass die Fördereinrichtung eine solche Produktzufuhr bilden kann.

Es kann vorgesehen sein, dass an dem Übergang zwischen der Verteileinrichtung und der Fördereinrichtung eine Scaneinrichtung angeordnet ist, welche dazu ausgebildet ist, zumindest eine Eigenschaft des Produktes zu ermitteln und insbesondere die Oberfläche des Produktes optisch zu untersuchen. Insbesondere kann die Scaneinrichtung dabei an einem Bandübergang zwischen zwei in Förderrichtung aufeinanderfolgenden Förderbändern angeordnet sein.

Der Scanvorgang kann gestartet werden, wenn das Produkt an den Übergang zwischen der Verteileinrichtung und der Fördereinrichtung gelangt, wobei während des Vorschubs des Produktes auf die Fördereinrichtung das gesamte Produkt gescannt werden kann. Dabei kann der Scanvorgang entsprechend gestoppt werden, wenn das Produkt vollständig an die Fördereinrichtung übergeben wurde.

Insbesondere ist es möglich, die Scaneinrichtung mit einem den Vorschub des Produktes von der Verteileinrichtung auf eine jeweilige Spur der Fördereinrichtung erzeugenden Mittel zu verbinden. Dadurch kann erreicht werden, dass die momentane Geschwindigkeit des Produktes stets an die Scaneinrichtung übermittelt werden kann, so dass auch bei einer beschleunigten Übergabe des Produktes von der Verteileinrichtung an die Fördereinrichtung ein örtlich exakt aufgelöstes Bild des Produktes erstellt werden kann.

Die Verteileinrichtung kann somit neben einer reinen Verteilung der Produkte auf mehrere Spuren und einem möglichen Wiegen der Produkte auch dazu genutzt werden, ein beschleunigtes Scannen und die damit einhergehende Informationsgewinnung über das Produkt zu ermöglichen. Insbesondere ist es durch eine beschleunigte Übergabe von der Verteileinrichtung auf die Fördereinrichtung möglich, einem im Vergleich zu dem Pressvorgang verlangsamten Bearbeitungsschritt, der jedoch mehrspurig durchgeführt wird, kontinuierlich Produkte zuzuführen. Mittels der zwischengeschalteten Fördereinrichtung kann entsprechend eine Entkopplung der beschleunigten Übergabe der Verteileinrichtung und des im Vergleich dazu verlangsamt und kontinuierlich erfolgenden Bearbeitungsschrittes ermöglicht werden. Insbesondere kann die Zeit, die zu einem Aufschneiden von Fleischprodukten in Scheiben erforderlich ist, die zum Pressen der Produkte notwendige Zeit übersteigen, sodass durch das Verteilen der Produkte auf zwei Spuren nach dem Pressen insbesondere ein möglichst großer Produktdurchsatz von in Scheiben zu schneidenden Produkte wie Bacon erreicht werden kann.

Eine derartige Verteileinrichtung ermöglicht entsprechend eine flexible Verteilung der Produkte bei gleichzeitiger verbesserter Informationsgewinnung, wobei insbesondere durch das Integrieren einer Wägezelle in die Verteileinrichtung eine in Förderrichtung kurze Bauweise des Systems erreicht werden kann.

Ferner kann, unabhängig von dem beschriebenen System zum Pressen und Weitergeben von Fleischprodukten mit einer Presseinrichtung, auch eine Verteileinrichtung mit einer Produktauflagefläche für zumindest ein Produkt vorgesehen sein, welche dazu ausgebildet ist, die Produkte entlang einer Förderrichtung zu fördern, wobei die Produktauflagefläche senkrecht zu der Förderrichtung bewegbar ist, und wobei die Verteileinrichtung wenigstens eine Wägezelle umfasst, welche dazu ausgebildet ist, das Gewicht des zumindest einen auf der Auflagefläche aufliegenden Produktes zu bestimmen.

Ferner kann bei einem Verfahren zum Pressen und Verarbeiten von Fleischprodukten, insbesondere gefrorenen und/oder angefrorenen Fleischprodukten, bevorzugt Frischfleischprodukten und/oder Bacon, vorgesehen sein, dass die Produkte in eine Presskammer einer Presseinrichtung, insbesondere einer Presseinrichtung wie hierin offenbart, eingebracht werden und in der Presskammer durch zumindest ein verfahrbares Kontaktelement gepresst werden, wobei das Kontaktelement mittels eines Servomotors verfahren wird. Insbesondere kann das Kontaktelement dabei mit einer Kontaktfläche ausgebildet sein, deren wirksame Länge und wirksame Breite, wie hierin offenbart, veränderlich ist.

Indem zum Verfahren des Kontaktelements ein Servomotor verwendet wird, kann ein präziser Pressvorgang erfolgen. Der Servomotor ermöglicht es dabei insbesondere, in jeder Position des Kontaktelements eine Information über die auf das Kontaktelement wirkende, von dem Produkt ausgeübte Gegenkraft und entsprechend die von dem Kontaktelement erzeugte Presskraft zu gewinnen. Dazu kann das Kontaktelement insbesondere über einen Linearantrieb, beispielsweise einen Spindeltrieb, einen Zahnriemenantrieb, einen Kettenantrieb oder einen Zahnstangenantrieb, mit dem Servomotor verbunden sein, mittels dessen ein konstanter Wirkungsgrad bei einer Umwandlung von einer von dem Servomotor erzeugten Antriebsdrehbewegung in eine lineare Antriebsbewegung des Kontaktelements erreicht werden kann. Während bei anderweitigen Antrieben, beispielsweise Kurbelantrieben oder Hydraulikantrieben, grundsätzlich zwar höhere Presskräfte erzeugt werden können, insbesondere in einem Totpunkt, variiert dabei die Übersetzung zwischen dem Motorstrom und der erzeugten Presskraft abhängig beispielsweise von einer Streckung eines Kniehebels. Ferner weist die Presskraft in Abhängigkeit von der Position eines mittels solcher Antriebe verfahrenen Kontaktelementes große Gradienten auf, so dass in der Regel das betreffende Kontaktelement lediglich in eine vorgegebene Position verfahren werden kann, ohne den Pressvorgang speziell auf ein jeweiliges Produkt abstimmen zu können. Die bei einem Servomotor, insbesondere in Kombination mit einem Linearantrieb, der einen positionsunabhängigen Wirkungsgrad hinsichtlich der Übersetzung der von dem Servomotor generierten Drehbewegung in eine lineare Bewegung des Kontaktelements ermöglicht, positionsunabhängige Übersetzung zwischen dem Motorstrom und der ausgeübten Kraft des Kontaktelements hingegen erlaubt es, das Kontaktelement möglichst optimal an ein jeweiliges Produkt angepasst zu verfahren und ein wunschgemäßes Resultat beim Pressvorgang zu erhalten.

Ferner ermöglicht das Verfahren des Kontaktelements mittels eines Servomotors eine dauerhafte und präzise Überprüfung der Position des Kontaktelements, so dass beispielsweise direkt Information über das Volumen eines gepressten Produkts bzw. dessen Erstreckung in einer Richtung ermittelt werden können. Insbesondere durch die Möglichkeit, die während des Pressens wirkenden Kräfte präzise zu bestimmen bzw. mittels des Servomotor in präziser und wunschgemäßer Weise zu erzeugen, kann erreicht werden, dass für ein jeweiliges Produkt, insbesondere für ein Produkt mit einer bestimmten Größe, exakt die notwendigen Presskräfte aufgebracht werden. Ferner kann sichergestellt werden, dass produktabhängige Maximalkräfte nicht überschritten werden und eine daraus folgende Beschädigung des Produktes kann vermieden werden.

Grundsätzlich kann durch ein Verfahren des Kontaktelementes mittels eines Servomotors eine Überprüfung und Steuerung des Pressprozesses direkt anhand von Signalen des Servomotors, insbesondere anhand des Motorstromes, erfolgen, so dass auf aufwendige und komplexe Sensorik zur Überprüfung der wirkenden Kräfte verzichtet werden kann.

Es kann vorgesehen sein, dass das Kontaktelement in Abhängigkeit von einem Signal des Servomotors verfahren wird. Insbesondere kann es vorgesehen sein, den Motorstrom des Servomotors stets zu überprüfen und die von dem Kontaktelement übertragene Presskraft daraus zu ermitteln. Dabei kann das Kontaktelement beispielsweise bei einem Erreichen einer gewünschten Presskraft gestoppt werden. Dies kann zum einen ein wunschgemäßes Pressen und Formen des Produkts ermöglichen, während insbesondere auch verhindert werden kann, dass das Produkt aufgrund zu hoher Presskräfte beschädigt und beispielsweise für weitere Bearbeitungsschritte oder einen Verkauf unbrauchbar wird. Dies kann dabei unabhängig von der Größe des Produktes erreicht werden, so dass ebenfalls unabhängig von der Produktgröße an ein jeweiliges Produkt angepasst optimale Resultate des Pressvorgangs erreicht werden können.

Bei einigen Ausführungsformen kann zumindest eine Eigenschaft der Produkte vor dem Einbringen in die Presskammer mittels einer Messeinrichtung ermittelt werden und das Kontaktelement kann in Abhängigkeit von den Eigenschaften des Produktes verfahren werden, wobei die Messeinrichtung insbesondere einen Produktscanner, eine Kamera, eine Waage, ein Impedanzmessgerät, ein Röntgengerät und/oder eine Wärmebildkamera umfassen kann.

Insbesondere kann es vorgesehen sein, die Größe der Produkte vor deren Einbringen in die Presskammer zu ermitteln, so dass das Kontaktelement beispielsweise bereits vor dem Pressen in Richtung eines Gegenelementes verfahren werden kann. Dadurch kann der Weg, den das Kontaktelement zurücklegen muss, bevor es in Kontakt mit dem zu pressenden Produkt gelangt und eine Presswirkung entfalten kann, verkürzt werden, sodass der Pressvorgang beschleunigt erfolgen kann.

Ferner kann es vorgesehen sein, insbesondere mittels einer Impedanzmessung, vor dem Einbringen der Produkte in die Presskammer oder unmittelbar vor dem Pressen in der Presskammer den Fett- und/oder Salzgehalt der Produkte zu bestimmen und den Pressvorgang in Abhängigkeit von diesen Eigenschaften durchzuführen. Ebenso kann es vorgesehen sein, beispielsweise mittels einer Wärmebildkamera oder eines Röntgengeräts, das Produkt vor dem Pressen auf etwaige Fremdkörper zu untersuchen. Aufgrund einer solchen Messung können beispielsweise die während des Pressens wirkenden Presskräfte angepasst werden oder das Produkt kann an der Presse vorbei und beispielsweise in einen Ausschussbereich geführt werden. Ebenso kann es vorgesehen sein, insbesondere mittels eines Röntgengeräts, die Lage eines Knochens in einem Fleischprodukt bzw. einem Frischfleischprodukt zu bestimmen und die Presskräfte bzw. deren Richtungen entsprechend anzupassen, um ein Splittern des Knochens während des Pressvorgangs zu verhindern.

Dabei kann die Presseinrichtung mit einer Steuereinrichtung verbunden sein, welche dazu ausgebildet ist, in Abhängigkeit von der ermittelten Eigenschaft des Produkts automatisch an das jeweilige Produkt angepasste Parameter zu bestimmen und den Pressvorgang mit diesen Parametern durchzuführen. Beispielsweise kann es vorgesehen sein, dass die Steuereinrichtung Endpositionen für das Kontaktelement bzw. die Kontaktelemente oder in verschiedenen Richtungen zu erreichende Presskräfte als Parameter festlegt.

Ferner kann es vorgesehen sein, mittels der Messeinrichtung weitere Eigenschaften der Produkte, die beispielsweise Rückschlüsse auf deren Qualität ermöglichen, zu ermitteln. Dies kann insbesondere durch eine Kamera und eine Bildverarbeitungseinrichtung erfolgen. Dabei können auch ein etwaiger Verschleiß bzw. Verluste oder Beschädigungen der Produkte während vorhergehender Bearbeitungsschritte oder während eines Lagerns der Produkte quantifiziert und rückgemeldet werden. Ferner kann es vorgesehen sein, die Produkte nach dem Pressen weiteren Bearbeitungsschritten zuzuführen, wobei diese beispielsweise in Abhängigkeit von der Qualität der Produkte erfolgen können bzw. eine Sortierung der Produkte in Abhängigkeit von deren Qualität erfolgen kann.

Das Kontaktelement kann während des Pressens in Abhängigkeit von vorhergehenden Pressvorgängen verfahren werden. Das Verfahren des Kontaktelements kann somit beispielsweise nicht nur unter Berücksichtigung vorgegebener Parameter oder beispielsweise aufgrund einer Eigenschaft des Produkte ermittelter Parameter verfahren werden, sondern es kann vorgesehen sein, die Resultate vorhergehender Pressvorgänge zu berücksichtigen. Beispielsweise kann eine zunächst vorgegebene Presskraft für darauffolgende Pressvorgänge herabgesetzt werden, wenn eine Beschädigung des Produktes aufgrund des Pressens, wie eine Rissbildung an der Produktoberfläche oder das Splittern eines Knochens, erfasst wird. Insbesondere kann dabei eine Steuereinrichtung der Presseinrichtung vorgesehen sein, welche dazu ausgebildet ist, für ein jeweiliges zu pressendes Produkt angepasste Parameter des Pressvorgangs zu bestimmen und das Kontaktelement entsprechend zu verfahren, wobei die Steuereinrichtung dazu ausgebildet sein kann, die Resultate vorhergehender Pressprozesse bei der Bestimmung der Parameter zu berücksichtigen. Die Steuereinrichtung kann entsprechend dazu ausgebildet sein, einen selbstlernenden Algorithmus auszuführen, wobei die für jeweilige Produkte ermittelten Parameter des Pressvorgangs beständig optimiert werden können.

Es kann vorgesehen sein, dass das Volumen des Produktes anhand der Signale des Servomotors ermittelt wird. Insbesondere kann das Volumen dabei durch eine Erfassung des Motorstroms bzw. eine Positions- und/oder Drehwinkelbestimmung des Kontaktelements bzw. des Servomotors ermittelt werden. Dies ermöglicht es zum einen, ein Produkt bis zu einem vorgegebenen oder vorgebbaren Volumen zu komprimieren, wobei der Pressvorgang zum anderen in Abhängigkeit von dem Volumen des Produktes bzw. dessen Erstreckung in jeweiligen Richtungen gesteuert werden kann. Dabei können mittels des Kontaktelements beispielsweise Presskräfte erzeugt werden, die eine gewünschte Komprimierung in der Richtung, in welche das Kontaktelement verfahrbar ist, bedingen. Auch dies kann insbesondere an ein jeweiliges Produkt angepasst erfolgen, wobei bei den in der Regel vorgesehenen gefrorenen und/oder angefrorenen Fleischprodukten, insbesondere Frischfleischprodukten und/oder Bacon, Komprimierungen von 10% bis 30% typischerweise erreichbar sein können und derartige Komprimierungen beispielsweise als Prozessparameter bzw. zu erreichende Resultate vorgegeben werden können.

Ferner kann bei einigen Ausführungsformen eine Produktsteifigkeit anhand der Signale des Servomotors, insbesondere eines Verlaufs eines Motorstroms des Servomotors, ermittelt werden.

Aus der Produktsteifigkeit kann beispielsweise eine Temperatur des Produkts ermittelt werden.

Indem aus dem gemessenen Motorstrom des Servomotors eine entfaltete Presskraft ermittelt und gleichzeitig die Position des Kontaktelements jederzeit überprüft werden kann, kann eine jeweilige Komprimierung des Produktes durch das Pressen mit den dazu erforderlichen Presskräften in Relation gesetzt werden. Dies kann dazu genutzt werden, eine Steifigkeit bzw. eine Verformbarkeit des Produktes zu bestimmen, indem beispielsweise hohe Presskräfte bei einer geringen Komprimierung auf eine hohe Produktsteifigkeit hinweisen. Dabei können beispielsweise Zuordnungen zwischen einer Produktsteifigkeit und einer Temperatur für bestimmte zu pressende bzw. zu verarbeitende Produkte bereitgestellt werden, anhand derer aus der ermittelten Produktsteifigkeit Rückschlüsse auf die Temperatur des Produkts gezogen werden können. Beispielsweise kann die so ermittelte Temperatur an eine der Presseinrichtung vorgelagerte oder nachgelagerte Kühleinrichtung gemeldet werden und/oder zur Steuerung einer solchen Kühleinrichtung verwendet werden, indem die Kühleinrichtung beispielsweise derart geregelt bzw. gesteuert werden kann, dass die Produkte mit einer vorgegebenen Temperatur und/oder Produktsteifigkeit in die Presseinrichtung gelangen.

Grundsätzlich kann auch die ermittelte Produktsteifigkeit direkt zur Steuerung oder Regelung einer Kühleinrichtung genutzt werden, ohne dass eine Temperatur anhand des Verlaufs des Motorstroms ermittelt wird. Dabei kann beispielsweise die Temperatur einer der Presseinrichtung vorgelagerten Kühleinrichtung erhöht werden, wenn eine für einen optimalen Pressvorgang zu hohe Produktsteifigkeit festgestellt wird.

Ferner kann die ermittelte Produktsteifigkeit bei einigen Ausführungsformen dazu genutzt werden, Fremdkörper, insbesondere Metallteile, in dem Produkt zu erkennen. Dabei können beispielsweise Erwartungswerte für die Produktsteifigkeit eines jeweiligen Produkts vorliegen bzw. bereitgestellt werden, wobei ein Abweichen von solchen Erwartungswerten als ein Indiz für einen Fremdkörper in einem gepressten Produkt erfasst werden kann. Beispielsweise kann ein in das Produkt gelangtes Metallteil eine höhere ermittelte Produktsteifigkeit zur Folge haben, so dass solche fehlerhaften Produkte durch das Überprüfen der Produktsteifigkeit erkannt und gegebenenfalls ausgesondert werden können. Insbesondere können Produkte mit einer von einem Sollwert abweichenden Produktsteifigkeit einem Kontrollprozess zugeführt werden, in welchem überprüft wird, ob das betreffende Produkt für die weitere Bearbeitung geeignet ist oder ausgesondert werden muss.

Bei einigen Ausführungsformen kann das Kontaktelement austauschbar sein, wobei vor einem Pressvorgang eine Referenzfahrt durchgeführt werden kann, um das eingesetzte Kontaktelement zu überprüfen. Die Referenzfahrt kann dabei insbesondere mit im Vergleich zu dem Pressvorgang reduzierter Kraft durchgeführt werden, um Informationen über das eingesetzte Kontaktelement gewinnen zu können. Insbesondere können dabei verschiedenartige, insbesondere verschiedenförmige und/oder verschiedengroße, Kontaktelemente zum Pressen der Produkte in die Presseinrichtung einsetzbar sein, um das Kontaktelement optimal an ein jeweiliges zu pressendes Produkt anpassen zu können. Ferner kann es das Austauschen des Kontaktelements ermöglichen, ein genutztes Kontaktelement zum Reinigen aus der Presseinrichtung zu entnehmen und nach dem Reinigen wieder einzusetzen, oder durch ein sauberes, insbesondere gleichartiges, Kontaktelement zu ersetzen.

Insbesondere kann vor dem Pressen eines ersten Produktes, beispielsweise nach einem Wechsel bzw. Einsetzen des Kontaktelements, eine Referenzfahrt durchgeführt werden, um beispielsweise ein falsch eingesetztes Kontaktelement zu erkennen und eine Kollision des Kontaktelements mit weiteren Abschnitten der Presseinrichtung, insbesondere etwaigen weiteren Kontaktelementen, während eines Pressvorgangs zu vermeiden. Eventuelle Beschädigungen der Presseinrichtung aufgrund solcher falsch eingesetzter Kontaktelemente können dadurch vermieden werden. Ein falsch eingesetztes Kontaktelement bzw. eine Kollision des Kontaktelements kann dabei beispielsweise anhand des Verlaufs des Motorstroms des Servomotors ermittelt werden und ein Nutzer kann beispielsweise durch ein Warnsignal dazu aufgefordert werden, das falsch eingesetzte Kontaktelement bzw. dessen Position zu überprüfen.

Ferner kann es vorgesehen sein, dass eine Fehlbeladung der Presskammer anhand der Signale des Servomotors, insbesondere des Motorstroms, erkannt wird. Widersprüchliche Motorstromsignale können beispielsweise eine Fehlbeladung der Presskammer indizieren, indem beispielsweise bei für eine gewisse Charge zu kleinen Produkten erst gegenüber einem erwarteten Zeitpunkt bzw. gegenüber einer erwarteten Position verspätet ein Anstieg des Motorstroms registriert wird, wenn das Kontaktelement mit dem unerwartet und ungewünscht kleinen Produkt in Kontakt gerät. Wie vorstehend erwähnt, ist es auch möglich, anhand des Motorstroms Fremdkörper über eine ermittelte Produktsteifigkeit zu erkennen, so dass unbrauchbare Produkte erkannt werden können. Bei einer erfassten Fehlbeladung kann ein Signal an einen Nutzer ausgegeben werden, so dass der Nutzer das fälschlicherweise in die Presskammer gelangte Produkt aussondern kann. Alternativ dazu kann es vorgesehen sein, dass ein als eine Fehlbeladung erkanntes Produkt automatisch ausgesondert wird.

Es kann vorgesehen sein, dass die Produkte nach dem Pressen in Abhängigkeit eines Qualitätskriteriums und/oder ihres Gewichtes auf verschiedene Spuren verteilt werden, in welchen die Produkte nachfolgenden Bearbeitungsschritten zugeführt werden.

Sämtliche Produkte können somit zunächst in der Presseinrichtung gepresst werden, welche insbesondere durch das Antreiben des Kontaktelements mittels eines Servomotors dazu ausgebildet ist, den Pressvorgang an jedes der Produkte speziell angepasst durchzuführen. Darauffolgend kann eine Sortierung der Produkte in Abhängigkeit von zumindest einem Kriterium erfolgen.

Beispielsweise kann es vorgesehen sein, die Produkte in einem folgenden Bearbeitungsschritt, bei dem die Produkte insbesondere mittels einer Aufschneidevorrichtung wie einem Hochgeschwindigkeitsslicer in Scheiben geschnitten werden können, mehrspurig weiter zu verarbeiten, wobei es gewünscht sein kann, in den mehreren Spuren des folgenden Bearbeitungsschrittes Produkte eines annähernd gleichen Gesamtgewichtes zu verarbeiten. Entsprechend kann ein relativ schweres Produkt nach dem Pressen auf eine Spur verteilt werden, in der bis dahin Produkte eines relativ geringeren Gesamtgewichts den folgenden Bearbeitungsschritten zugeführt wurden, während ein relativ leichtes Produkt nach dem Pressen auf eine Spur verteilt werden kann, auf der bis dahin Produkte eines relativ höheren Gesamtgewichts den nachfolgenden Bearbeitungsschritten zugeführt wurden.

Ferner kann es vorgesehen sein, insbesondere mittels einer wie vorstehend beschriebenen Messeinrichtung, zumindest eine Eigenschaft des Produktes zu ermitteln, aus welcher Rückschlüsse auf die Qualität des Produktes gezogen werden können. Dazu kann beispielsweise mittels einer Kamera ein Bild der Produktoberfläche aufgenommen und durch eine Bildauswerteeinrichtung ausgewertet werden, um etwaige ungewünschte Verformungen des Produktes oder Risse in dessen Oberfläche festzustellen. Ebenso kann es vorgesehen sein, die Produkte in Abhängigkeit von dem Fettgehalt oder dem Salzgehalt, die beispielsweise mittels einer Impedanzmessung bestimmt werden können, auf verschiedene Spuren zu verteilen.

Es kann vorgesehen sein, dass die Produkte vor dem Pressen in Abhängigkeit eines Qualitätskriteriums und/oder ihres Gewichtes sortiert werden und nacheinander in Abhängigkeit eines Qualitätskriteriums und/oder ihres Gewichtes in die Presskammer eingebracht werden.

Beispielsweise können die Produkte in einem Produktmagazin gelagert sein, wobei eine Einbringeinrichtung vorgesehen sein kann, welche dazu ausgebildet ist, die Produkte in die Presskammer einzubringen. Dieses Einbringen kann beispielsweise in Abhängigkeit des Gewichtes der Produkte erfolgen, so dass beispielsweise, wenn in einem nachfolgenden Bearbeitungsschritt ein relativ schwereres Produkt benötigt wird, gezielt ein relativ schwereres Produkt in die Presskammer eingebracht und gepresst werden kann. Insbesondere kann dies auch vorgesehen sein, wenn eine Sortierung der Produkte in Abhängigkeit von ihrem Gewicht auf mehrere Spuren nach dem Pressvorgang vorgesehen ist, wobei die Produkte beispielsweise in Abhängigkeit von dem Bedarf in einer als nächstes frei werdenden Spur in die Presskammer eingebracht werden können.

Gleichermaßen kann es vorgesehen sein, die Produkte nach einem Qualitätskriterium sortiert in die Presskammer einzubringen, um beispielsweise die Anforderungen eines folgenden Bearbeitungsschrittes bereits mit dem Einbringen in die Presskammer berücksichtigen zu können. Ebenso kann auch dabei einer vorgesehenen Qualität der Produkte in derjenigen Spur, welcher als nächstes ein Produkt zu übergeben ist, Rechnung getragen werden.

Bei einigen Ausführungsformen können die gepressten Produkte in einem nachfolgenden Schritt mittels einer Aufschneidevorrichtung, insbesondere eines Hochgeschwindigkeitsslicers, in Scheiben geschnitten werden. Die Presseinrichtung bildet entsprechend einen Teil einer Verarbeitungslinie, wobei das Schneiden in Scheiben insbesondere einen abschließenden Schritt der Produktverarbeitung darstellen kann und aus den abgetrennten Scheiben Portionen gebildet werden können. Diese Portionen, die zumindest eine Scheibe umfassen können, können in der Folge beispielsweise an eine Verpackungsmaschine transportiert und an diese übergeben werden, so dass die Portionen fertig verpackt an einen Kunden bzw. einen Verbraucher geliefert werden können.

Ferner kann die Verwendung eines Servomotors zum Verfahren zumindest eines Kontaktelementes einer Presseinrichtung zum Pressen von Fleischprodukten, insbesondere gefrorenen und/oder angefrorenen Fleischprodukten, bevorzugt Frischfleischprodukten und/oder Bacon, in Richtung eines Gegenelementes vorgesehen sein, wobei das Kontaktelement und das Gegenelement zusammenwirken, um das Produkt zu komprimieren. Wie vorstehend beschrieben, ermöglicht diese Verwendung von Servomotoren zum Antrieb eines solchen Kontaktelementes eine äußerst präzise Steuerung und Durchführung des Pressvorgangs ohne die Notwendigkeit aufwendiger und komplexer Sensorik.

Die Erfindung wird im Folgenden rein beispielhaft anhand der Zeichnungen näher erläutert. Weitere Ausführungsformen sind der Beschreibungseinleitung und den abhängigen Ansprüchen zu entnehmen.

Es zeigen:
- Fig. 1A bis 1C: eine perspektivische Ansicht, eine Seitenansicht und eine Draufsicht auf ein System zum Pressen und Weitergeben von Fleischprodukten, mit einer Presseinrichtung, einer Verteilereinrichtung, einer Fördereinrichtung und einer Aufschneidevorrichtung.
- Fig. 2A bis 2D: zwei perspektivische Ansichten, eine Vorderansicht und eine Schnittdarstellung in der Horizontalen der Presseinrichtung,
- Fig. 3A und 3B: eine jeweilige Vorderansicht auf die Presseinrichtung mit versperrtem Längsausgang und mit freigegebenem Längsausgang,
- Fig. 4A und 4B: eine jeweilige Seitenansicht auf die Presseinrichtung mit freigegebenem seitlichen Einlass und mit versperrtem seitlichen Einlass,
- Fig. 5A und 5B: eine Schnittdarstellung der Presseinrichtung durch die Presskammer in einer Vertikalebene sowie eine perspektivische Vorderansicht der Presseinrichtung bei freigegebenem Längsausgang,
- Fig. 6A bis 6C: jeweilige perspektivische Ansichten auf die Servomotoren zum Antrieb dreier verfahrbarer Kontaktelemente der Presseinrichtung,
- Fig. 7: eine perspektivische Ansicht eines verfahrbaren Kontaktelements mit einer Kontaktfläche für ein Produkt, deren wirksame Länge und wirksame Breite veränderbar sind,
- Fig. 8A bis 8D: jeweilige Frontalansichten auf das Kontaktelement und die Kontaktfläche bei verschiedenen wirksamen Längen und wirksamen Breiten der Kontaktfläche,
- Fig. 9A bis 9D: jeweilige Schnittdarstellungen in einer Vertikalebene durch das Kontaktelement bei verschiedenen wirksamen Breiten der Kontaktfläche,
- Fig. 10A und 10B: jeweilige Draufsichten auf das Kontaktelement bei verschiedenen wirksamen Längen,
- Fig. 11: eine perspektivische Schnittansicht der Presseinrichtung mit eingesetztem Kontaktelement, welches eine Kontaktfläche mit veränderbarer wirksamer Länge und veränderbarer wirksamer Breite aufweist,
- Fig. 12: eine perspektivische Ansicht der Verteileinrichtung, und
- Fig. 13A und 13B: eine perspektivische Ansicht eines Tragelements der Verteileinrichtung und eine perspektivische Ansicht eines mit dem Tragelement verbundenen Förderbandes, welches eine Produktauflagefläche für die Produkte bildet.

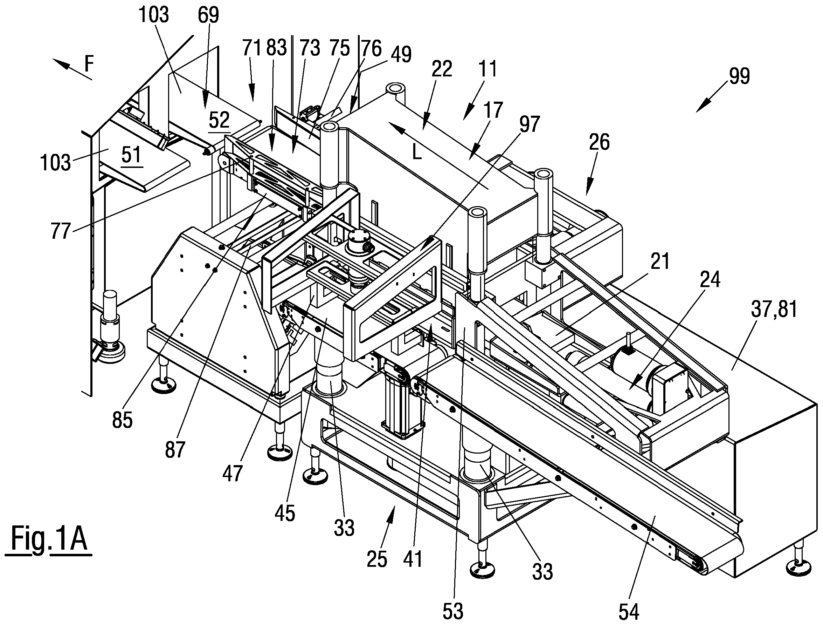

Die Fig. 1A bis 1C zeigen Darstellungen eines Systems 99 zum Pressen und Weitergeben von Produkten 15, wobei die in diesen Figuren nicht gezeigten Produkte 15 im Wesentlichen entlang einer Förderrichtung F an mehrere Stationen 11, 71, 69 und 89 geführt werden.

Ein jeweiliges Produkt 15 gelangt zunächst über ein Zuführband 54, welches als in Förderrichtung F umlaufendes Förderband ausgebildet ist, auf einen gleichermaßen als Förderband ausgebildeten Einfuhrabschnitt 45. Im Bereich des Einfuhrabschnitts 45 ist eine Einbringeinrichtung 47 angeordnet, welche dazu ausgebildet ist, ein sich in bzw. auf dem Einfuhrabschnitt 45 befindendes Produkt 15 mittels eines Schiebeelements 48 in eine Presskammer 17 einer Presseinrichtung 11 einzubringen, in welcher das Produkt 15 komprimiert und/oder geformt werden kann.

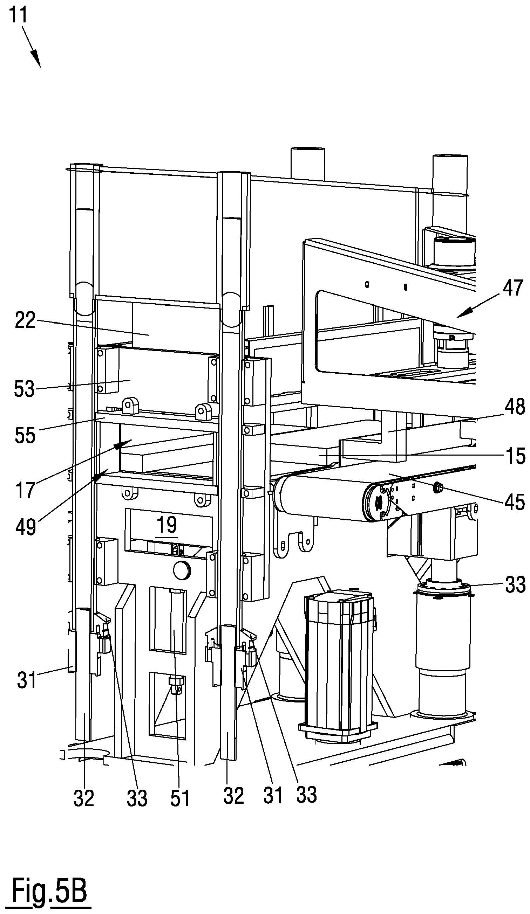

Dabei erstreckt sich die Presskammer 17 in Richtung einer Längsachse L, welche parallel zu der Förderrichtung F verläuft, und ist in einer zu der Förderrichtung F senkrechten Richtung versetzt zu dem Einfuhrabschnitt 45 und dem Zuführband 54 angeordnet. Zum einen ermöglicht dies, das System 99 in Förderrichtung F verhältnismäßig kompakt zu bauen, indem die sich vornehmlich in Richtung der Förderrichtung F erstreckende Presseinrichtung 11 seitlich versetzt angeordnet und nicht beispielsweise in Förderrichtung F an das Zuführband 54 angeschlossen ist. Ferner ermöglicht das seitliche Einschieben der Produkte 15 in die Presseinrichtung 11 mittels des Schiebeelements 48 ein sich vornehmlich entlang bzw. in Richtung der Längsachse L der Presskammer 17 erstreckendes Produkt 15, wie einen Bacon, über die senkrecht zu der Längsachse L stehende Richtung in die Presskammer 17 einzubringen. Entsprechend ist lediglich eine der in dieser Richtung schmalen Ausdehnung eines solchen Produktes 15 entsprechende Wegstrecke zu überbrücken, um das Produkt 15 in die Presskammer 17 einzubringen (vgl. insbesondere auch Fig. 5B). Dadurch kann ein schnelles Einbringen der Produkte 15 in das Innere der Presskammer 17 erreicht werden, so dass die erforderliche Zeit, um ein Produkt 15 in die Presskammer 17 einzubringen und zu pressen, und somit die Zeit eines vollständigen Pressvorgangs möglichst minimiert werden kann.

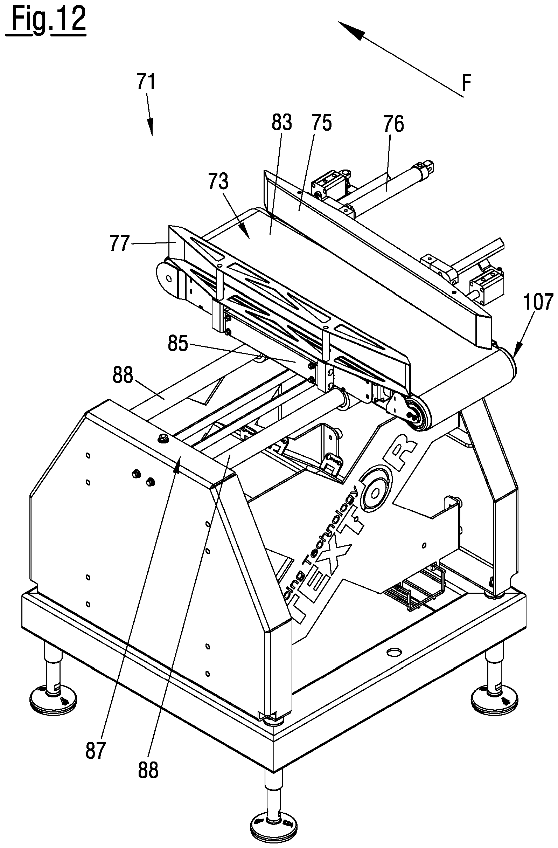

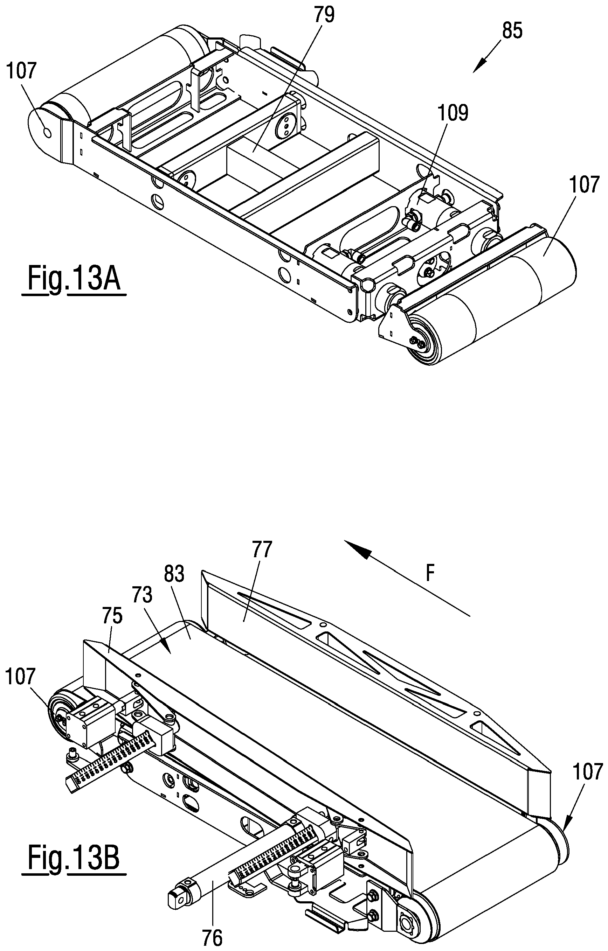

Ausgehend von der Presseinrichtung 11 gelangen die gepressten Produkte 15 in Förderrichtung F auf eine Verteileinrichtung 71, welche ein in Förderrichtung F umlaufendes Förderband 83 aufweist, das eine Produktauflagefläche 73 für die Produkte 15 bildet. Diese Verteileinrichtung 71 ist dabei dazu ausgebildet, die Produktauflagefläche 73 senkrecht zu der Förderrichtung F zu verfahren, um die Produkte 15 an zwei Spuren S1 und S2 einer nachgelagerten Fördereinrichtung 69 zu übergeben. Insbesondere ist das Förderband 83 dazu von einem Tragelement 85 getragen, welches senkrecht zu der Förderrichtung F bewegbar in einer Führung 87 gelagert ist (vgl. auch Fig. 12, 13A und 13B).

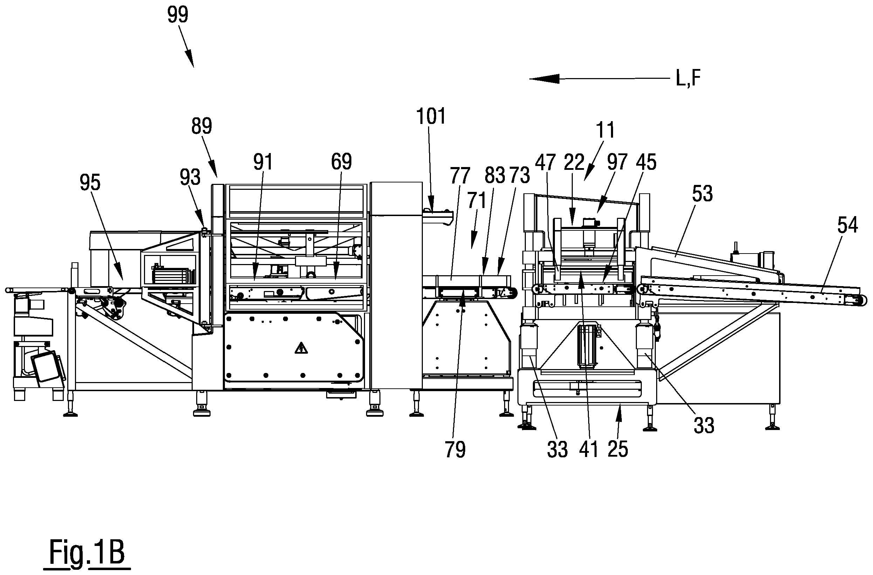

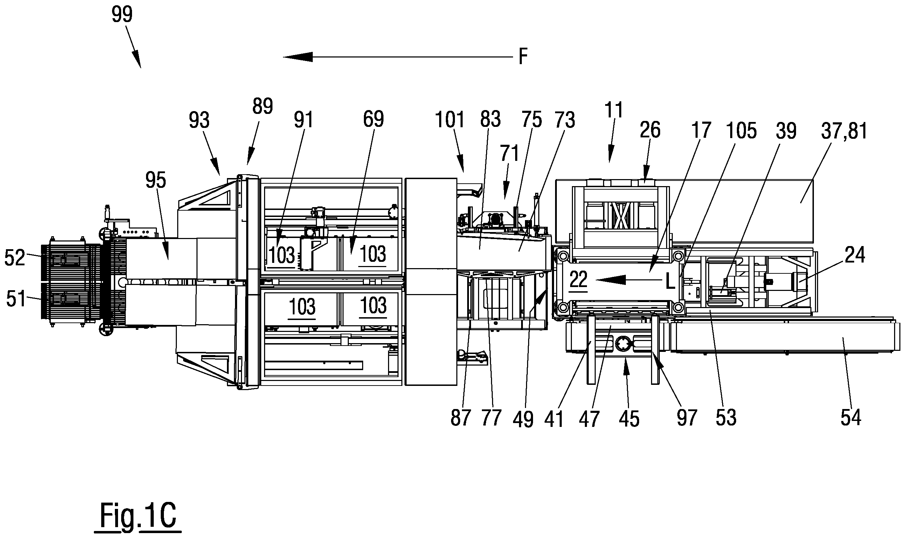

Die Fördereinrichtung 69 weist in beiden Spuren S1 und S2 ein jeweiliges Förderband 103 auf, mittels dessen die Produkte 15 weiter in Förderrichtung F transportiert werden können. Wie die Fig. 1B und 1C zeigen, gelangen die Produkte 15 von der Fördereinrichtung 69 bzw. deren Förderbänder 103 auf eine Produktzufuhr 91 einer Aufschneidevorrichtung 89, die ebenfalls für beide Spuren S1 und S2 ein jeweiliges Förderband 103 aufweist. Diese Aufschneidevorrichtung 89 kann insbesondere als Hochgeschwindigkeitsslicer ausgebildet sein, wobei die Produktzufuhr 91 dazu vorgesehen ist, die Produkte 15 in einen Schneidbereich 93 der Aufschneidevorrichtung 89 zu führen, in welchem mittels eines nicht sichtbaren, insbesondere umlaufenden und/oder rotierenden, Messers von den Produkten 15 Scheiben abgetrennt und aus den Scheiben Portionen gebildet werden können, die mindestens eine Scheibe umfassen.

Die gebildeten Portionen gelangen in der Folge auf eine Portionsfördereinrichtung 95, welche beispielsweise dazu ausgebildet sein kann, die Portionen an eine nicht gezeigte Verpackungsmaschine zu übergeben, so dass die Portionen verpackt an einen Kunden bzw. an einen sonstigen Verbraucher geliefert werden können. Ferner ist zwischen der Verteileinrichtung 71 und der Fördereinrichtung 69 eine Scaneinrichtung 101 angeordnet, welcher dazu ausgebildet ist, die Oberfläche eines von der Verteileinrichtung 71 an die Fördereinrichtung 69 übergebenen Produktes 15 zu analysieren. Darüber hinaus ist im Bereich des Einfuhrabschnitts 45 eine Messeinrichtung 97 vorgesehen, die dazu ausgebildet ist, zumindest eine Eigenschaft eines in die Presseinrichtung 11 einzubringenden Produktes 15 zu bestimmen. Um die mittels der Messeinrichtung 97 bzw. der Scaneinrichtung 101 gewonnenen Informationen insbesondere bei dem Pressvorgang oder bei dem Aufschneidevorgang berücksichtigen zu können, ist eine Auswerte- und Steuereinrichtung 37 für die Presseinrichtung 11 sowie eine Steuereinrichtung 81 für die Verteileinrichtung 71 vorgesehen. Auch diese ist, wie insbesondere Fig. 1A und 1C zeigen, parallel versetzt zu dem Zuführband 54 und dem Einfuhrabschnitt 45 angeordnet, so dass die Ausdehnung des Systems 99 in Förderrichtung F minimiert werden kann.

Im Folgenden werden die einzelnen Komponenten des Systems 99 genauer beschrieben.

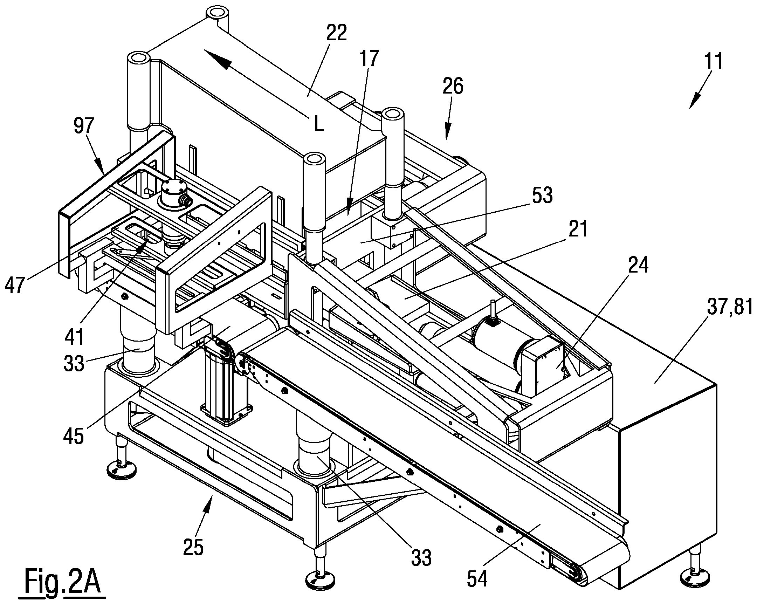

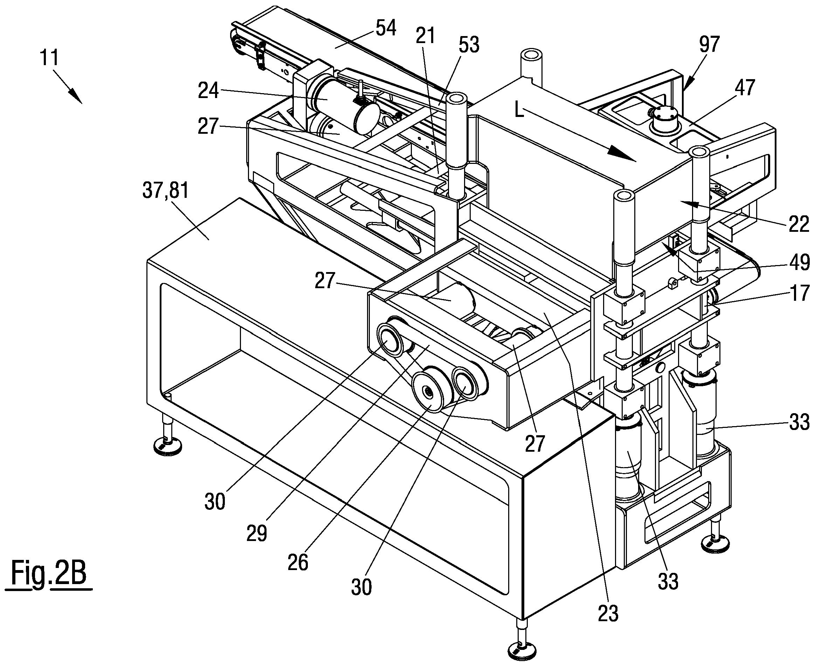

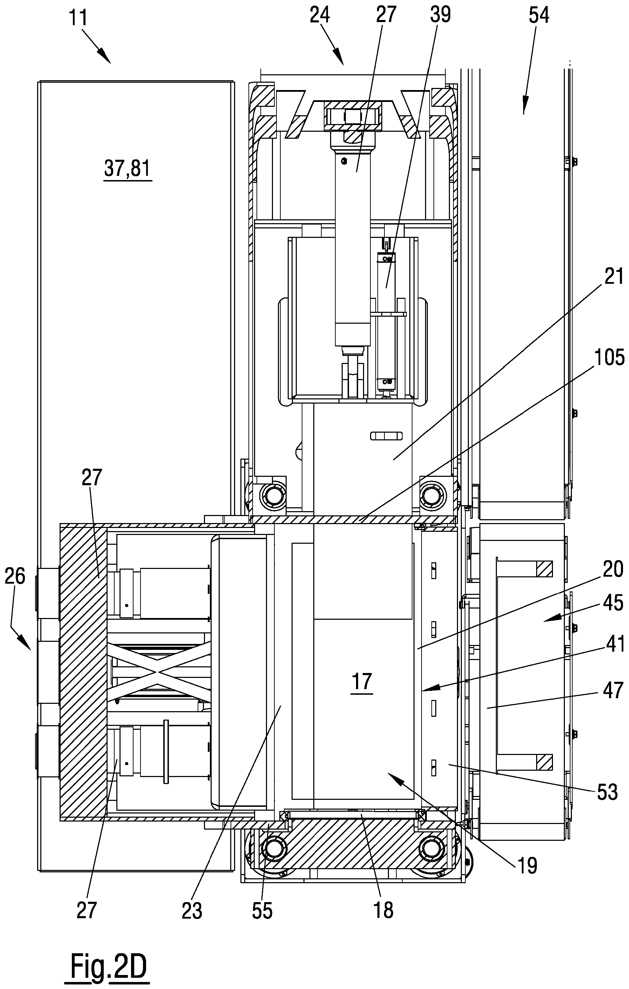

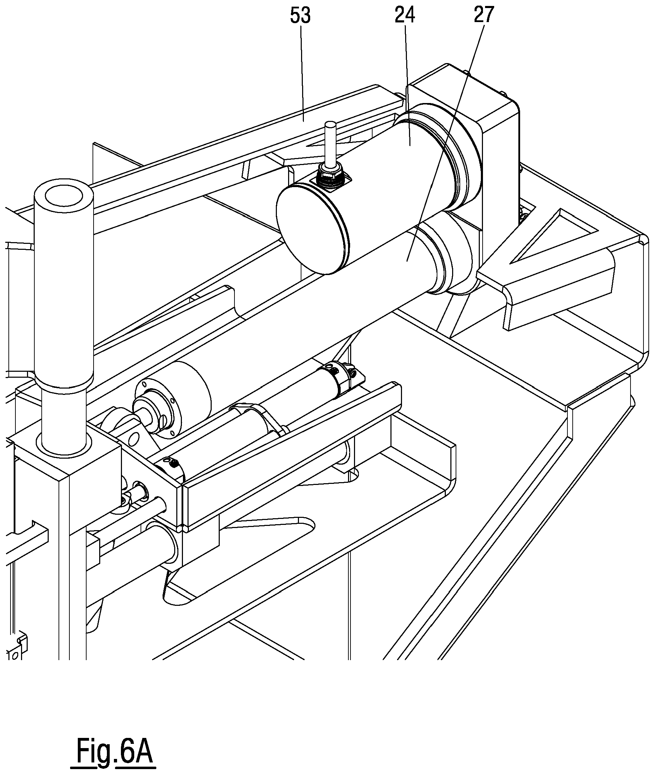

Die Fig. 2A bis 6C veranschaulichen dabei den Aufbau der Presseinrichtung 11. Diese weist eine Presskammer 17 auf, welche von einer Haltestruktur 53 getragen ist. Die Haltestruktur 53 ist gitterartig bzw. käfigartig ausgebildet und weist mehrere Streben auf, um während des Pressens eines Produktes 15 auf die äußeren Begrenzungen der Presskammer 17 wirkende Presskräfte aufnehmen und ableiten zu können. Entgegen der Förderrichtung F erstreckt sich die Haltestruktur 53 keilförmig nach hinten und trägt einen ersten Servomotor 24 sowie einen Spindeltrieb 27 zum Übertragen einer von dem Servomotor 24 generierten Antriebsleistung auf ein erstes Kontaktelement 21, welches entlang der Längsachse L verfahrbar ist (vgl. auch Fig. 6A). Dieses Kontaktelement 21, welches entsprechend als verfahrbarer Längsstempel ausgebildet ist, wirkt mit einem ersten Gegenelement 18, zusammen, um das in die Presskammer 17 eingebrachte Produkt 15 in Richtung der Längsachse L zu komprimieren (vgl. insbesondere Fig. 2A, 2B und 2D). Das Gegenelement 18 ist dabei als während des Pressens nicht verfahrbares Wandelement ausgebildet.

Auch das Zuführband 54 und der Einfuhrabschnitt 45 sowie die Einbringeinrichtung 47 sind von der Haltestruktur 53 getragen.

Ferner weist die Presskammer 17 ein zweites Gegenelement 19 auf, welches eine Auflagefläche 19 für die in die Presskammer 17 eingebrachten Produkte 15 bildet. Mit diesem zweiten Gegenelement 19 wirkt ein in vertikaler Richtung nach unten verfahrbares zweites Kontaktelement 22 zusammen, um das Produkt 15 in vertikaler Richtung zu komprimieren (vgl. insbesondere Fig. 2A bis 2D). Das Gegenelement 19 kann dabei insbesondere als eine Stahlplatte ausgebildet sein, welche von Streben der Haltestruktur 53 getragen ist, so dass eine stabile Fachwerkstruktur entsteht und die ein vertikaler Richtung auf das Produkt 15 und das Gegenelement 19 wirkenden Presskräfte zuverlässig auf die Haltestruktur 53 abgeleitet werden können.

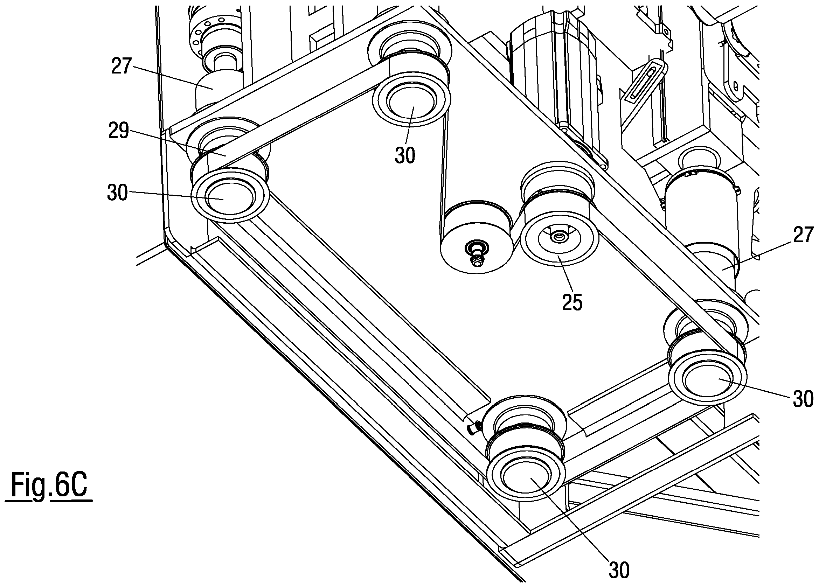

Auch für den Antrieb des zweiten Kontaktelementes 22, welches als Vertikalstempel ausgebildet ist, ist ein zweiter Servomotor 25 vorgesehen (vgl. auch Fig. 6C). Dieser Servomotor 25 ist unterhalb der Auflagefläche 19 angeordnet und dazu ausgebildet, das Kontaktelement 22 mittels vierer synchronisierter Spindeltriebe 27 vertikal nach unten zu ziehen, wie nachstehend noch erläutert wird.

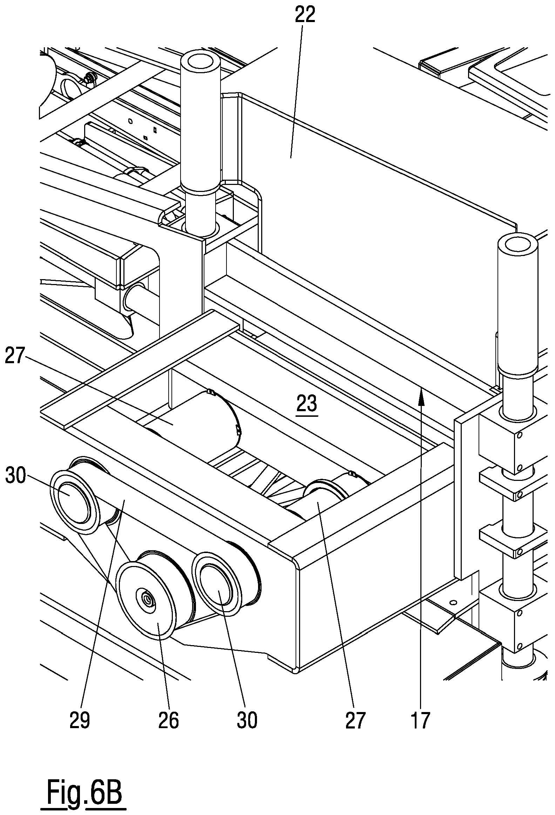

Ferner weist die Presseinrichtung 11 ein drittes verfahrbares Kontaktelement 23 auf, welches mit einem dritten Gegenelement 20 zusammenwirkt, um das in die Presskammer 17 eingebrachte Produkt 15 in einer Richtung senkrecht zu der Längsachse L der Presskammer 17 und senkrecht zu der Vertikalen zu komprimieren (vgl. insbesondere Fig. 2A bis 2D). Zum Verfahren dieses als Breitenstempel ausgebildeten Kontaktelementes 23 ist ein dritter Servomotor 26 vorgesehen, dessen Antriebsleistung über zwei synchronisierte Spindeltriebe 27 auf das Kontaktelement 23 übertragen wird (vgl. Fig. 6B).

In der hier beschriebenen Ausführungsform sind die Gegenelemente 18, 19 und 20 als während des Pressens unbewegte Wandelemente ausgebildet, wobei es auch vorgesehen sein kann, sowohl die Kontaktelemente 21, 22 und 23 als auch die Gegenelemente 18, 19 und 20 verfahrbar auszubilden, so dass die jeweiligen zusammenwirkenden Elemente beispielsweise während des Pressens gegeneinander verfahren werden können.

Um die Kontaktelemente 21, 22 und 23 in Richtung des zugeordneten Gegenelements 18, 19 oder 20 zu verfahren, sind die genannten Servomotoren 24, 25 und 26 vorgesehen. Wie insbesondere Fig. 6A zeigt, ist der zum Verfahren des entlang der Längsachse L der Presskammer 17 verfahrbaren Kontaktelementes 21 vorgesehene Servomotor 24 in Förderrichtung F hinter der Presskammer 17 angeordnet. Dieser Servomotor 24 treibt einen Spindeltrieb 27 an, welcher mit dem Kontaktelement 21 verbunden ist.

Zum Verfahren des senkrecht zu der Längsachse L der Presskammer 17 und senkrecht zu der Vertikalen verfahrbaren Kontaktelementes 23 treibt der Servomotor 26, welcher auf der dem Einfuhrabschnitt 45 gegenüberliegenden Seite der Presskammer 17 angeordnet ist, ein als Zahnriemen ausgebildetes Synchronisationselement 29 an (vgl. insbesondere Fig. 6B). Dieses Synchronisationselement 29 überträgt die von dem Servomotor empfangene Antriebsleistung gleichmäßig auf zwei mit jeweiligen Spindeltrieben 27 bzw. deren Spindeln drehfest verbundene Riemenscheiben 30. Das Kontaktelement 23 kann dabei mit den auf den Spindeln laufenden Spindelmuttern der Spindeltriebe 27 verbunden sein, sodass das Kontaktelement 23 durch den Servomotor 26 mittels der Spindeltriebe 27 verfahrbar ist. Durch den direkten Antrieb des Synchronisationselements 29 kann in einfacher Weise eine Synchronisation der Spindeltriebe 27 erreicht werden, um ein eventuelles Verkippen oder Verkeilen des Kontaktelementes 23 während eines Verfahrens und eine damit einhergehende Beschädigung des Kontaktelementes 23 bzw. der Presseinrichtung 11 verhindern zu können.

Wie Fig. 6C zeigt, ist für den Antrieb des in vertikaler Richtung verfahrbaren Kontaktelements 22 der Servomotor 25 vorgesehen, welcher unterhalb der Presskammer 17 angeordnet ist. Dieser Servomotor 25 treibt ein ebenfalls als Zahnriemen ausgebildetes Synchronisationselement 29 an, welches dazu ausgebildet ist, die empfangene Antriebsleistung gleichmäßig auf vier Riemenscheiben 30 zu übertragen, die mit jeweiligen Spindeltrieben 27 gekoppelt sind. Wie insbesondere aus Fig. 5B hervorgeht, sind die Riemenscheiben 30 mit Spindeln 32 der Spindeltriebe 27 drehfest verbunden, sodass diese durch den Servomotor 25 in Rotation versetzbar sind. Das Kontaktelement 22 weist vier sich vertikal nach unten erstreckende Rundführungen 33 auf, die mit jeweiligen Spindelmuttern 31 der Spindeltriebe 27 verbunden sind und gemeinsam mit den Spindelmuttern 31 auf den Spindeln 32 laufen, sodass das Kontaktelement 22 durch den Servomotor 25 vertikal nach unten gezogen werden kann. Durch die synchronisierte Übertragung der von dem Servomotor 25 empfangenen Antriebsleistung auf die Riemenscheiben 30 und entsprechend auf die Spindeln 32 kann eine gleichmäßige Bewegung der vier Spindelmuttern 31 in vertikaler Richtung erreicht werden. Entsprechend kann auch an den vier Ecken des Kontaktelementes 22, an welchen die mit den Spindelmuttern 31 verbundenen Rundführungen 33 ausgebildet sind, eine gleichmäßige Kraft in vertikaler Richtung entfaltet werden.

Indem das Kontaktelement 23 mit zwei Spindeltrieben 27 und das Kontaktelement 22 mit vier Spindeltrieben 27 bewegt wird, kann eine gleichmäßige Bewegung des jeweiligen Kontaktelements 23 bzw. 22 erreicht werden, ohne dass etwaige Drehmomente während des Pressens auf diese Elemente 23 bzw. 22 wirken. Ein eventuelles Verkanten und eine damit einhergehende mögliche Beschädigung des Kontaktelementes 22 bzw. 23 oder sonstiger Elemente der Presseinrichtung 11 aufgrund derartiger Drehmomente, die insbesondere bei verhältnismäßig breiten Kontaktelementen auftreten können, die an lediglich einem Punkt angetrieben werden, kann entsprechend verhindert werden.

Grundsätzlich ist es auch möglich, insbesondere in Bezug auf das in vertikaler Richtung verfahrbare Kontaktelement 22, an jeder der Ecken einen gesonderten Servomotor vorzusehen und diese vier Servomotoren beispielsweise über eine Steuereinrichtung zu synchronisieren. Dabei kann jedoch die Gefahr einer Beschädigung des Kontaktelements 22 oder der Presseinrichtung 11 durch eine mangelhafte Synchronisation der Servomotoren oder einen Ausfall eines der Motoren bestehen.

Indem die Kontaktelemente 21, 22 und 23 über jeweilige Servomotoren 24, 25 und 26 bzw. durch die Servomotoren 24, 25 und 26 angetriebene Spindeltriebe 27 verfahren werden, kann eine präzise und kontrollierte Steuerung und Durchführung des Pressvorgangs erreicht werden. Insbesondere erlauben die Servomotoren 24, 25 und 26, unabhängig von der Position des jeweiligen Kontaktelements 21, 22 und 23 anhand des gemessenen Motorstroms die auf das jeweilige Kontaktelement 21, 22 oder 23 wirkende Gegenkraft und entsprechend die Presskraft, die auf das Produkt 15 wirkt, zu ermitteln. Dabei kann der Motorstrom der Servomotoren 24, 25 und 26 insbesondere von der Auswerte- und Steuereinrichtung 37 ausgewertet und die jeweiligen Presskräfte anhand dieses Signals ermittelt werden, wobei die Auswerte- und Steuereinrichtung dazu ausgebildet sein kann, die Kontaktelemente 21, 22 und 23 in Abhängigkeit von den ausgewerteten Signalen der jeweiligen Servomotoren 24, 25 und 26 zu verfahren.

Beispielsweise kann es vorgesehen sein, ein Produkt 15 möglichst maximal in den drei Raumrichtungen oder in zumindest einer Richtung zu komprimieren, wobei die erreichbare Komprimierung insbesondere dadurch begrenzt sein kann, dass eine Anwendung zu hoher Presskräfte Beschädigungen des Produktes 15 zur Folge haben kann. Insbesondere bei gefrorenen und/oder angefrorenen Fleischprodukten wie Frischfleisch oder Bacon, die einen gefrorenen Rand mit einer Oberflächentemperatur von etwa -20° C aufweisen können, kann es bei einer Beaufschlagung mit einer zu hohen Presskraft zur Bildung von Rissen oder zu einem vollständigen Zerreißen der inneren Strukturen des Fleischproduktes kommen.

Indem die wirkenden Presskräfte direkt und unabhängig von der Position der Kontaktelemente 21, 22 und 23 aus dem gemessenen Motorstrom der Servomotoren 24, 25 und 26 ermittelt werden können, kann der Pressvorgang somit präzise kontrolliert und gesteuert werden. Beispielsweise kann das Verfahren der Kontaktelemente 21, 22 und 23 zuverlässig unmittelbar vor dem Erreichen der maximalen Presskraft gestoppt werden, um ein optimales Resultat des Pressvorgangs zu erreichen. Ferner können derartige optimale Resultate unabhängig von der Größe des gepressten Produktes 15 erzielt werden, indem auch beispielsweise kleinere Produkte 15 komprimiert werden könne, ohne dass sich Einschränkungen in der Prozesssteuerung durch das notwendige weitere Verfahren der Kontaktelemente 21, 22 und 23 ergeben. Ferner ist es durch die präzise Steuerbarkeit der Servomotoren 24, 25 und 26 auch möglich, den Produkten 15 in der Presskammer 17 flexibel eine wunschgemäße Form zu verleihen.

Darüber hinaus kann es vorgesehen sein, mittels der Messeinrichtung 97 vor dem Einbringen der Produkte 15 in die Presskammer 17 zumindest eine Eigenschaft der Produkte 15, beispielsweise deren Größe, zu ermitteln und die Kontaktelemente 21, 22 und 23 oder zumindest eines dieser in Abhängigkeit von der ermittelten Eigenschaft zu verfahren. Beispielsweise kann es vorgesehen sein, die Kontaktelemente 21, 22 und 23 bereits in Richtung der jeweiligen Gegenelemente 18, 19 und 20 zu verfahren, wenn ein relativ kleines Produkt 15 in die Presskammer 17 eingebracht wird. Dadurch können die zurückzulegenden Wege der Kontaktelemente 21, 22 und 23, bis diese in Kontakt mit dem Produkt 15 gelangen und eine Presswirkung entfalten können, minimiert und die Dauer eines Pressvorgangs verringert werden, was insbesondere einen erhöhten Produktdurchsatz ermöglichen kann.

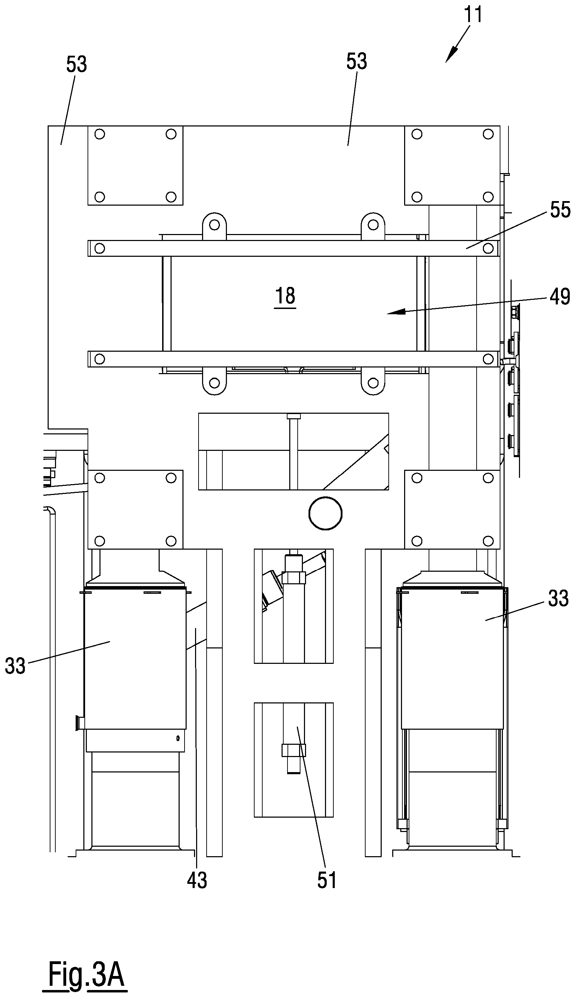

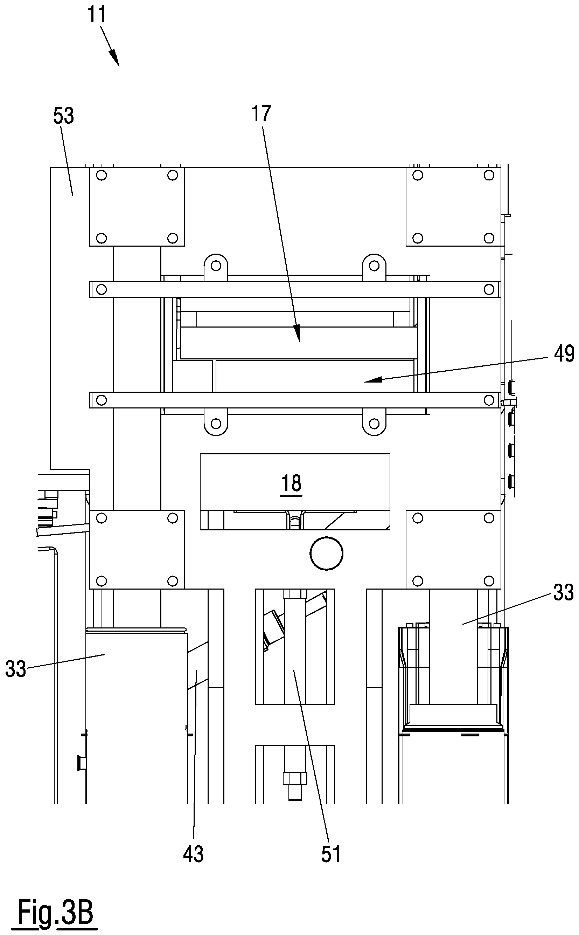

Wie insbesondere aus den Vorderansichten der Fig. 3A und 3B hervorgeht, ist das mit dem Kontaktelement 21 zusammenwirkende Gegenelement 18 in vertikaler Richtung verfahrbar, um einen Längsausgang 49 selektiv zu versperren (vgl. Fig. 3A) oder freizugeben (vgl. Fig. 3B). Um diese Bewegung zu ermöglichen, ist das Gegenelement 18 mit einem Pneumatikzylinder 51 verbunden, welcher das Gegenelement 18 zu einem Freigeben des Längsausgangs 49 nach unten bewegt.

Ein gepresstes Produkt 15 kann somit durch den Längsausgang 49 in Fördereinrichtung F aus der Presseinrichtung 11 bzw. der Presskammer 17 herausbefördert werden, wobei durch das nach unten geführte Gegenelement 18 insbesondere ein Spalt, welcher notwendig ist, um diese vertikale Bewegung des Gegenelementes 18 zu ermöglichen, verschlossen werden kann. Das Produkt 15 kann entsprechend über eine im Wesentlichen ebene Fläche geführt und an die Verteileinrichtung 71 übergeben werden, ohne dass die Gefahr sich an einer Kante des Spalts lösender Produktteile besteht.

Um das Produkt 15 durch den Längsausgang 49 zu befördern, ist das entlang der Längsachse L verfahrbare Kontaktelement 21 mit einem Pneumatikzylinder 39 verbunden, welcher während des Pressens gemeinsam mit dem Kontaktelement 21 durch den Servomotor 24 verfahrbar ist. Dieser Pneumatikzylinder 39 ist dazu ausgebildet, nach einem Pressvorgang eine Druckplatte 105 entlang der Längsachse L der Presskammer 17 zu bewegen, um das Produkt 15 durch den Längsausgang 49 zu schieben. Dabei ermöglicht der Pneumatikzylinder 39 insbesondere ein schnelles Ausschieben des Produktes 15. Ferner muss das Ausschieben entsprechend nicht mittels des Spindeltriebs 27 erfolgen, sodass die mittels des Spindeltriebs 27 zurückzulegende Strecke auf die Anforderungen des Pressvorgangs begrenzt werden kann.

Der Pneumatikzylinder 39 kann darüber hinaus dazu genutzt werden, das Kontaktelement 21 vor oder insbesondere unmittelbar nach einem Einbringen eines Produktes 15 in die Presskammer 17 zu positionieren, um beispielsweise das Produkt 15 in Richtung der Längsachse L der Presskammer 17 auszurichten und in Kontakt mit dem Gegenelement 18 zu bringen. Diese Ausrichtung kann insbesondere durch den Pneumatikzylinder 39 beschleunigt erfolgen, wobei der Pressvorgang darauffolgend durch ein Verfahren des Kontaktelements 21 mittels des Servomotors 24 durchgeführt werden kann.

Alternativ zu dem Pneumatikzylinder 39 ist es auch möglich, für das Ausstoßen und/oder das Vorpositionieren eines Produkts 15 einen Servomotor, beispielsweise den Servomotor 24 oder einen weiteren Servomotor, vorzusehen, der insbesondere mit einem Linearriemenantrieb verbunden sein kann. Dabei können insbesondere eine schnelle, weniger kräftige Servoachse und eine langsamere, kräftige Servoachse vorgesehen sein, wobei das Vorpositionieren und/oder Ausstoßen eines Produkts 15 mittels der schnellen, der eigentliche Pressvorgang hingegen mittels der langsamen Servoachse erfolgen kann. Dies kann es beispielsweise ermöglichen, die Position eines vorpositionierten Produktes 15 genau zu bestimmen und die kräftigere Servoachse in einem Eilgang auf diese Position zu verfahren, so dass der Pressvorgang unmittelbar beginnen kann und Taktzeiten bzw. die Dauer eines Pressvorgangs minimiert werden können.

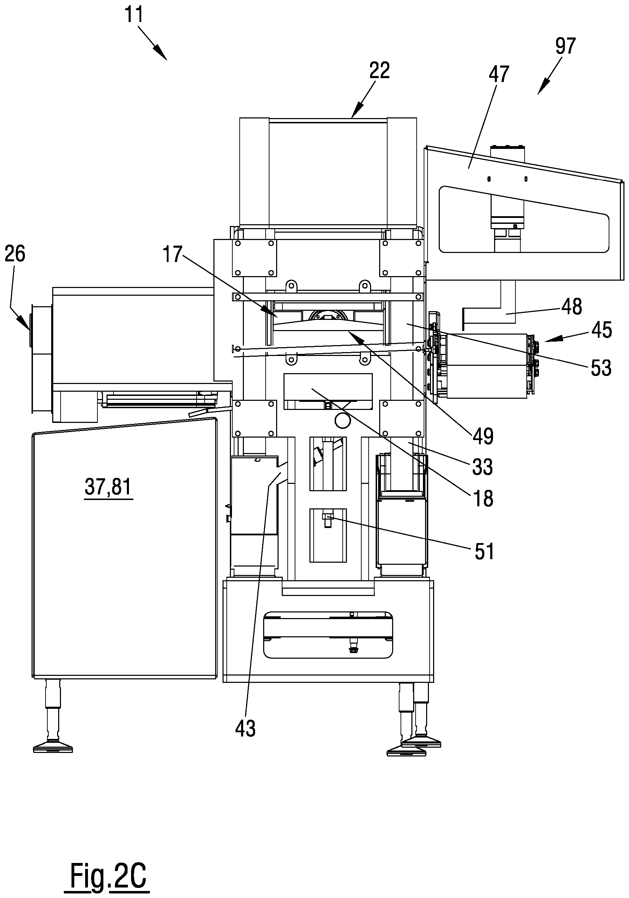

Ferner ist zwischen dem den Längsausgang 49 versperrenden Gegenelement 18 und der Haltestruktur 53 ein Zwischenrahmen 55 angeordnet, welcher dazu ausgebildet ist, während des Pressens auf das Gegenelement 18 wirkende Presskräfte auf die Haltestruktur 53 abzuleiten (vgl. insbesondere Fig. 2C, 2D, 3A und 3B). Die Haltestruktur 53 und der Zwischenrahmen 55 können dabei als jeweiliges Frästeil ausgebildet sein, wobei durch diese zweiteilige Ausbildung insbesondere ein schmaler Spalt zwischen dem Zwischenrahmen 55 und dem eine Auflagefläche für die Produkte 15 bildenden Gegenelement 19 erreicht werden kann, welcher durch das Gegenelement 18 passgenau verschlossen werden kann. Einem eventuellen Austritt von Produktteilen oder Flüssigkeit durch diesen Spalt kann durch eine derart präzise und passgenaue Ausbildung entsprechend entgegengewirkt werden. Dabei kann der Zwischenrahmen 55 insbesondere mit der Haltestruktur 53 verschraubt sein.

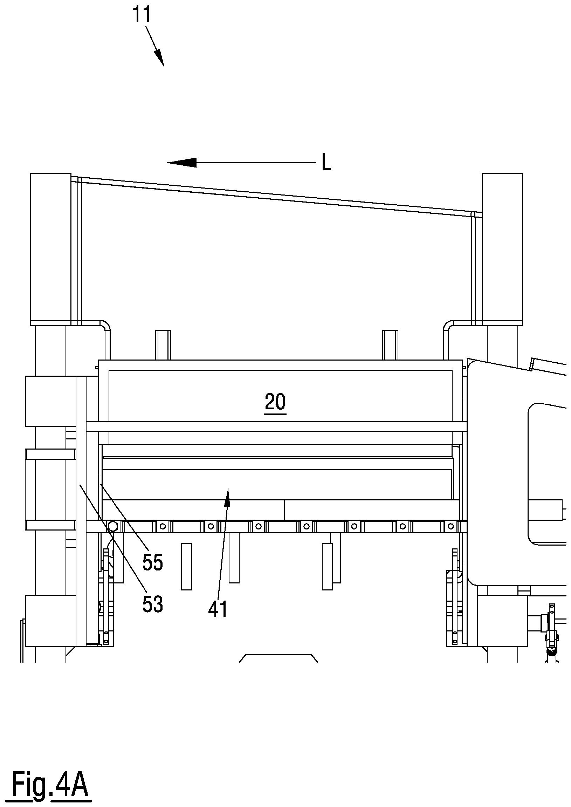

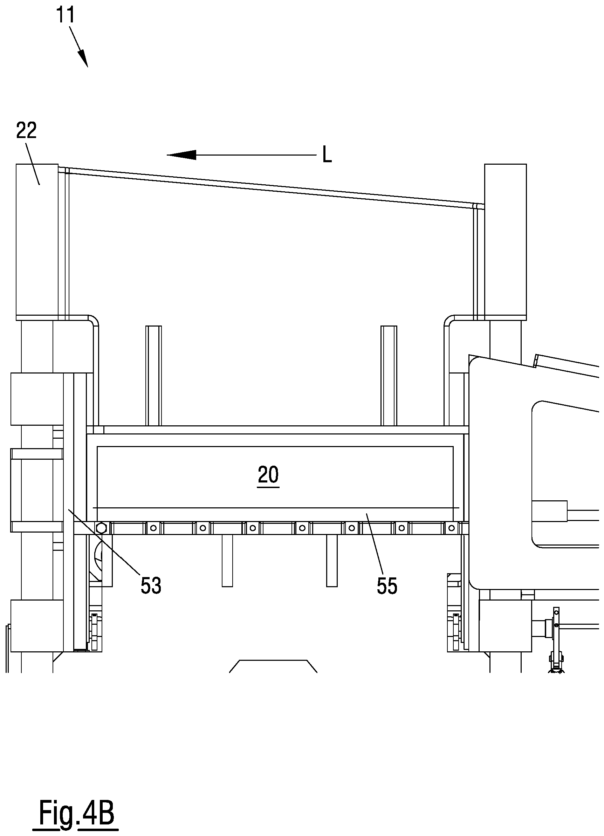

Wie die Fig. 4A und 4B zeigen, ist auch das mit dem Kontaktelement 23 zusammenwirkende Gegenelement 20 in vertikaler Richtung verfahrbar, um einen seitlichen Einlass 41, durch welchen die Produkte 15 in die Presskammer 17 gelangen, selektiv freizugeben oder zu versperren. Zu einem Freigeben des seitlichen Einlasses 41 kann, wie Fig. 4A zeigt, das Gegenelement 20 dabei vertikal nach oben gefahren werden, um insbesondere eine stabile Struktur der Presskammer 17 im Bereich der Auflagefläche 19 zu erreichen. Um die vertikale Bewegung zu ermöglichen, ist das Gegenelement 20 dabei mit einem Pneumatikzylinder 43 verbunden (vgl. Fig. 3A und 3B).

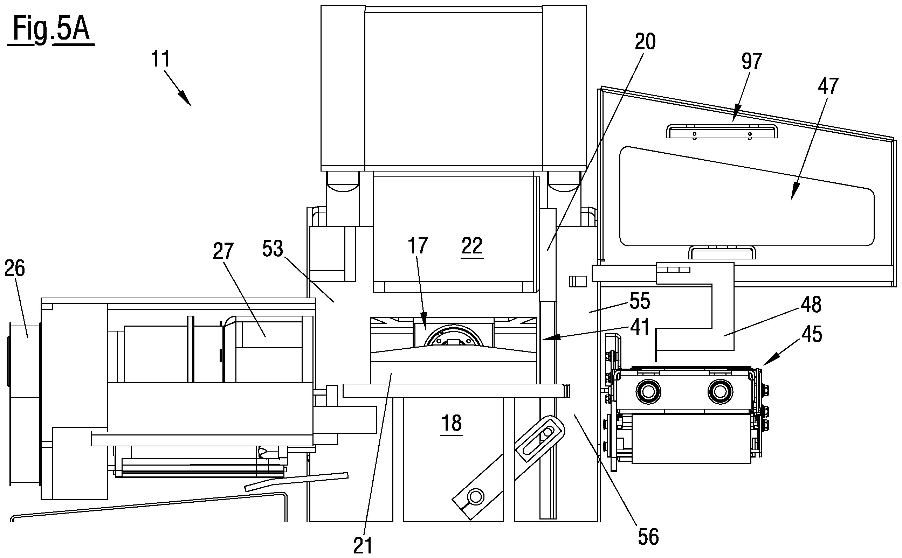

Auch zwischen dem Gegenelement 20 und der Haltestruktur 53 ist ein Zwischenrahmen 55 angeordnet, um während des Pressens auf das Gegenelement 20 wirkende Kräfte auf die Haltestruktur 53 ableiten zu können. Wie Fig. 5A zeigt, weist der Zwischenrahmen 55 ferner sich schräg nach unten erstreckende Drehmomentstützen 56 auf, um auch etwaige während des Pressens auf das Gegenelement 20 wirkende Drehmomente auf die Haltestruktur 53 übertragen zu können, sodass diese von der Haltestruktur 53 aufgenommen werden können.

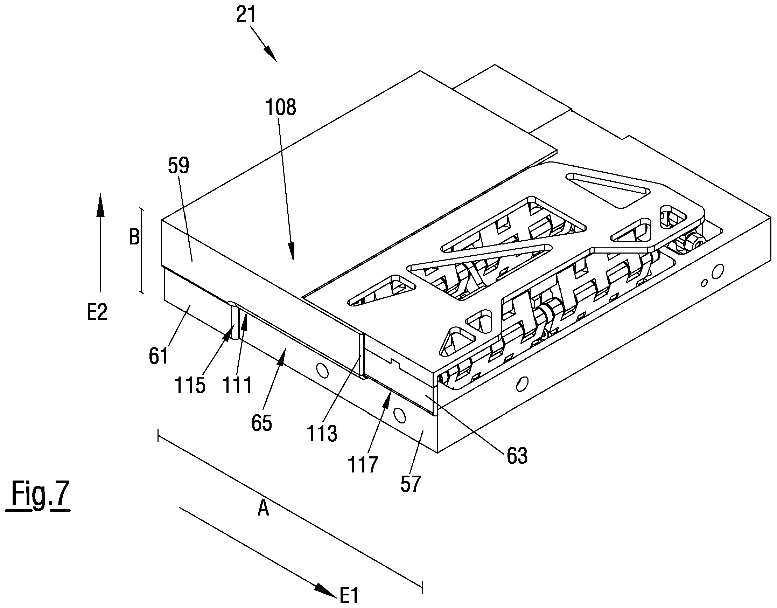

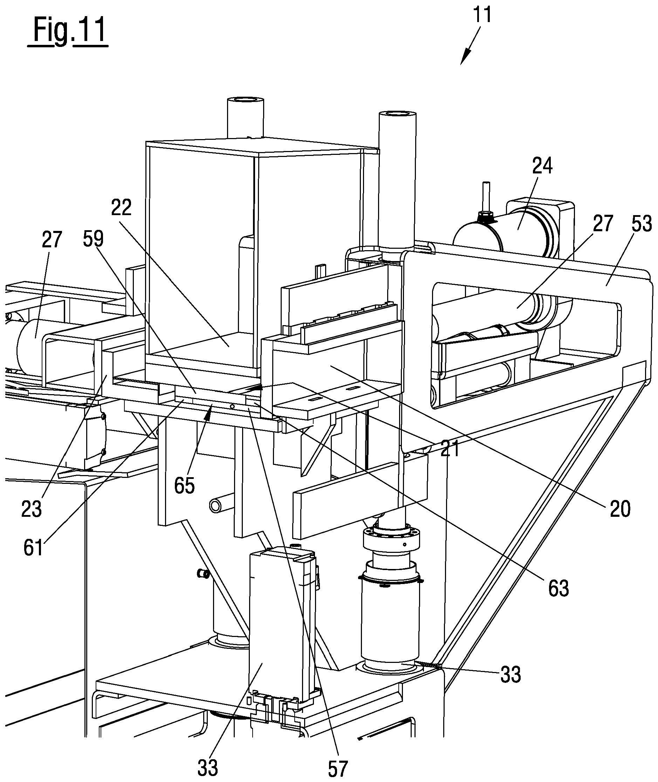

Fig. 7 zeigt eine perspektivische Ansicht des Kontaktelements 21, das in die Presseinrichtung 11 eingesetzt sein kann (vgl. Fig. 11), um ein in die Presskammer 17 eingebrachtes Produkt entlang der Längsachse L zu komprimieren. Das Kontaktelement 21 weist dabei ein Basisteil 57, ein Querverschiebeteil 61, ein Aufsatzteil 59 und ein Höhenteil 63 auf, die an einer Seite eine Kontaktfläche 65 für ein Produkt 15 während des Pressens bilden. Dabei weist die Kontaktfläche 65 entlang einer ersten Erstreckungsrichtung E1 eine wirksame Länge A und entlang einer zweiten Erstreckungsrichtung E2 eine wirksame Breite B auf, wobei die erste Erstreckungsrichtung E1 hier senkrecht zu der Längsachse L und in der Ebene der Auflagefläche 19 der Presskammer 17 und die zweite Erstreckungsrichtung E2 senkrecht zu der ersten Erstreckungsrichtung E1 und in Vertikalrichtung verlaufen. Dabei ist sowohl die wirksame Breite B als auch die wirksame Länge Ader Kontaktfläche 65 veränderbar.

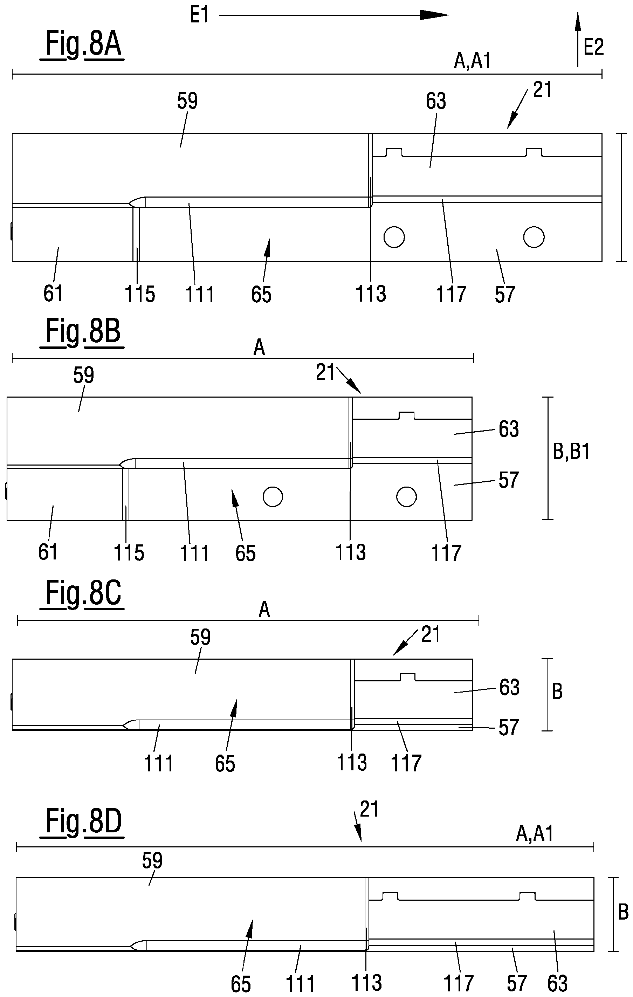

Die Kontaktfläche 65 ist dabei abschnittsweise uneben ausgebildet, um ein Verschieben der Teile 57, 59, 61 und 63 relativ zueinander zu ermöglichen. Dabei überlappt das Aufsatzteil 59 das Querverschiebeteil 61 und das Basisteil 57 mit einem ersten Dichtabschnitt 111 sowie das Höhenteil 63 mit einem senkrecht dazu ausgerichteten zweiten Dichtabschnitt 113. Auch das Querverschiebeteil 61 weist einen Dichtabschnitt 115 auf, welcher das Basisteil 57 überlappt, und das Höhenteil 63 überlappt das Basisteil 57 mit einem Dichtabschnitt 117 (vgl. auch Fig. 8A bis 8D). Diese Dichtabschnitte 111, 113, 115 und 117 können dazu vorgesehen sein, bei einem auf die Kontaktfläche 65 und entsprechende die jeweiligen Teile 59, 61 und 63 wirkenden Druck während des Pressens die Verbindungsstellen der Teile 57, 59, 61 und 63 abzudichten.

Insbesondere können die Dichtabschnitte 111, 113, 115 und 117 dabei elastisch verformbar ausgebildet sein, um bei einer Beaufschlagung mit Druck in Richtung eines der Teile 57, 61 oder 63, welches der jeweilige Dichtabschnitt 111, 113, 115 oder 117 überlappt, verformt zu werden. Zwischen den Teilen 57, 59, 61 und 63 vorhandene Spalte zur Ermöglichung einer leichtgängigen Bewegung der Teile 57, 59, 61, 63 relativ zueinander können somit während des Pressens durch die Dichtabschnitte 111, 113, 115 und 117 zuverlässig abgedichtet werden, sodass ein etwaiges bzw. mögliches Durchtreten von Produktteilen oder Flüssigkeiten durch diese Spalte verhindert werden kann. Alternativ oder zusätzlich dazu kann es auch vorgesehen sein, das Aufsatzteil 59, das Querverschiebeteil 61, das Höhenteil 63 und/oder das Basisteil 57 mit jeweiligen, insbesondere elastisch verformbaren, Dichtelementen vorzusehen, um eine solche Abdichtung der Verbindungsstellen zu erreichen.

Wie Fig. 8A zeigt, kann die Kontaktfläche 65 in einen Zustand mit einer maximalen wirksamen Länge A1 und einer maximalen wirksamen Breite B1 gebracht werden.

Das Querverschiebeteil 61 und gemeinsam mit diesem das Aufsatzteil 59 können dabei relativ zu dem Basisteil 57 und dem Höhenteil 63 entlang der ersten Erstreckungsrichtung E1 verschoben werden, so dass die wirksame Länge Ader Kontaktfläche 65, wie in Fig. 8B gezeigt, verringert werden kann.

Wie Fig. 8C zeigt, ist das Aufsatzteil 59 synchronisiert mit dem Höhenteil 63 relativ zu dem Basisteil 57 und dem Querverschiebeteil 61 entlang der zweiten Erstreckungsrichtung E2 verstellbar, so dass auch die wirksame Breite B der Kontaktfläche 65 veränderbar ist. Ferner ist es möglich, das Aufsatzteil 59 synchronisiert mit dem Höhenteil 63 entlang der zweiten Erstreckungsrichtung E2 zu verschieben, ohne dass das Aufsatzteil 59 zuvor gemeinsam mit dem Querverschiebeteil 61 entlang der ersten Erstreckungsrichtung E1 verschoben wurde. Es ist folglich auch möglich, die Kontaktfläche 65 in einen Zustand zu überführen, in welchem diese die maximale wirksame Länge A1, jedoch eine gegenüber der maximal wirksamen Breite B1 reduzierte wirksame Breite B aufweist (vgl. Fig. 8D).

Durch diese Ausbildung des Kontaktelements 21 mit einem relativ zu den anderen Teilen unbewegten Basisteil 57, einem in Richtung der ersten Erstreckungsrichtung E1 verschiebbaren Querverschiebeteil 61, einem in Richtung der zweiten Erstreckungsrichtung E2 verschiebbaren Höhenteil 63 und einem sowohl entlang der ersten Erstreckungsrichtung E1 als auch entlang der zweiten Erstreckungsrichtung E2 verschiebbaren Aufsatzteil 59 kann die Ausdehnung der Kontaktfläche 65 folglich in zwei Dimensionen angepasst werden. Dies ermöglicht es, das Kontaktelement 21 bzw. dessen Kontaktfläche 65 flexibel an jeweilige zu pressende Produkte 15 anzupassen, so dass beispielsweise Produkte 15 verschiedener Größe gleichermaßen und mit gleichen Resultaten in der Presseinrichtung 11 gepresst werden können, indem das Kontaktelement 21 bzw. dessen Kontaktfläche 65 in eine an das jeweilige Produkt 15 angepasste Dimensionierung gebracht wird. Diese Flexibilität des Kontaktelementes 21 ermöglicht es insbesondere, verschieden große Produkte 15 flexibel in der-Presseinrichtung 11 zu pressen bzw. zu formen, ohne dass beispielsweise verschiedene Presseinrichtungen für verschiedenartige bzw. -große Produkte vorzusehen sind.

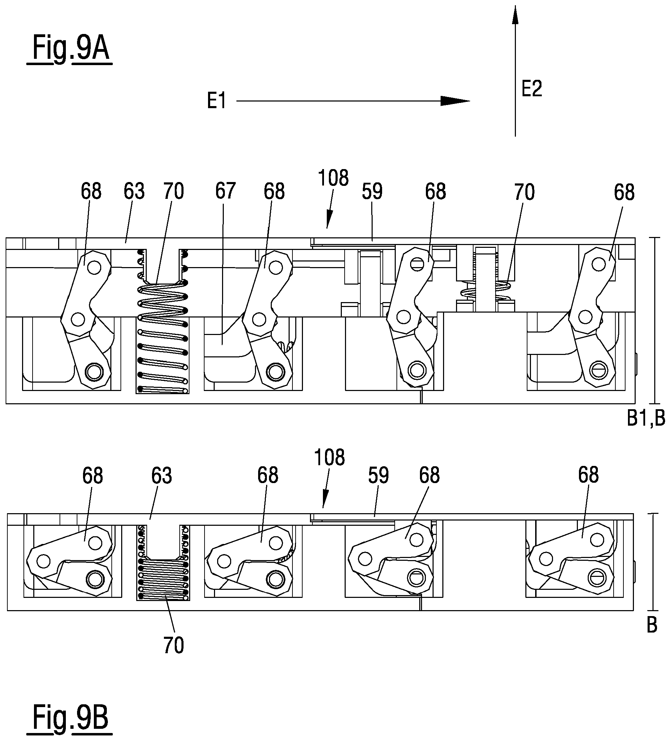

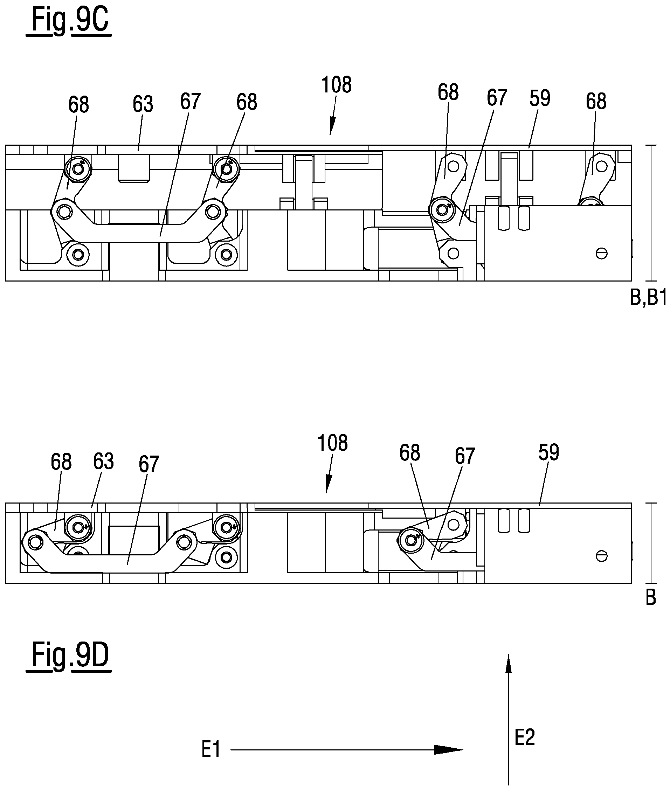

Wie die Fig. 9A bis 9D zeigen, weist das Kontaktelement 21 jeweilige Kniehebelgelenke 68 auf, welche mit dem Höhenteil 63 bzw. mit dem Aufsatzteil 59 verbunden sind, um eine gleichmäßige Bewegung dieser Teile während einer Anpassung der wirksamen Breite der Kontaktfläche 65 zu ermöglichen. Dabei sind sowohl für das Höhenteil 63 als auch für das Aufwärtsteil 59 jeweilige Paare von Kniehebelgelenken 68 vorgesehen, die entlang der ersten Erstreckungsrichtung E1 voneinander beabstandet sind. Diese Paare sind mittels eines Synchronisationselements 67, welches als Lenker ausgebildet ist, verbunden, um eine synchronisierte Bewegung zu erreichen. Ferner liegt das Aufsatzteil 59 in einem Überlappungsabschnitt 108 auf dem Höhenteil 63 auf, so dass auch deren Bewegungen in Richtung der zweiten Erstreckungsrichtung E2 synchronisiert erfolgen können.

Darüber hinaus weisen das Höhenteil 63 und das Aufsatzteil 59 jeweilige Federn 70 auf, mittels derer das Höhenteil 63 und das Aufsatzteil 59 in Richtung der maximalen wirksamen Breite B1 vorgespannt sind. Eine Anpassung der wirksamen Breite B kann folglich durch eine Ausübung eines Drucks, insbesondere mittels eines in vertikaler Richtung verfahrbaren Kontaktelements 22 erfolgen (vgl. Fig. 11). Dabei kann durch die mittels der Federn 70 erzeugte Vorspannung insbesondere erreicht werden, dass der zwischen dem Kontaktelement 22 und dem Kontaktelement 21 entstehende Spalt zuverlässig während des Pressens abgedichtet werden kann, so dass einem möglichen Durchtritt von Produktteilen oder Flüssigkeit durch diesen Spalt entgegengewirkt werden kann.

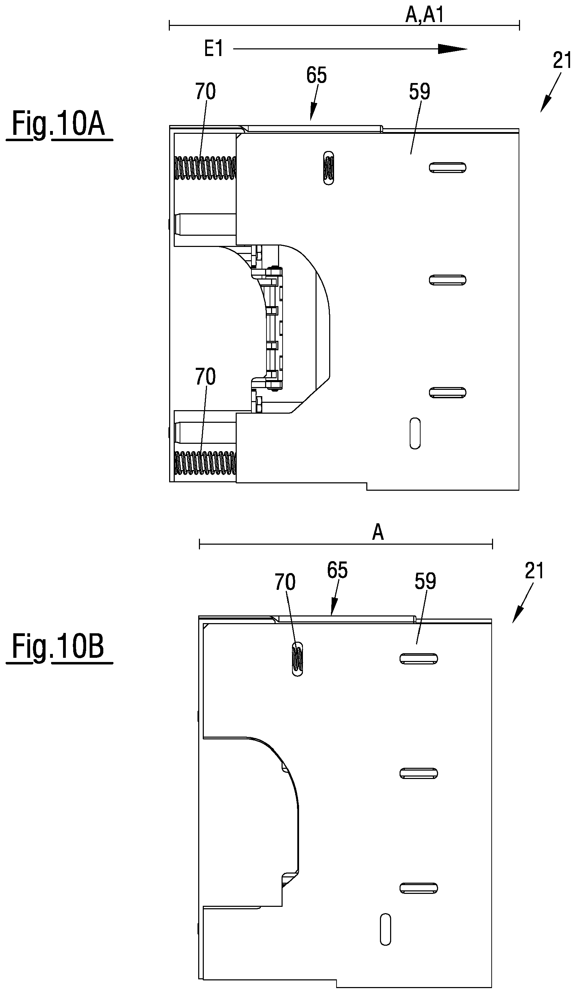

Wie die Fig. 10A und 10B zeigen, ist auch das Querverschiebeteil 61 und entsprechend gemeinsam mit diesem das Aufsatzteil 59 in der ersten Erstreckungsrichtung E1 in Richtung der maximalen wirksamen Länge A1 der Kontaktfläche 65 mittels zweier Federn 70 vorgespannt. Eine Verringerung dieser maximalen wirksamen Länge A1 kann dabei wiederum durch eine Entfaltung von Druck, insbesondere durch das senkrecht zu der Längsachse L der Presskammer 17 verfahrbare Kontaktelement 23 erzeugt werden, wobei der Spalt zwischen dem Kontaktelement 21 und dem Kontaktelement 23 bzw. zwischen dem Kontaktelement 21 und dem Gegenelement 20 wiederum aufgrund der Vorspannung des Kontaktelements 21 in Richtung der maximalen wirksamen Länge A1 während des Pressens zuverlässig versperrt werden kann.

Fig. 12 zeigt eine perspektivische Ansicht der Verteileinrichtung 71. Diese weist ein in Förderrichtung F über zwei Umlenkrollen 107 umlaufendes Förderband 83 auf, welches eine Produktauflagefläche 73 für die Produkte 15 bildet. Dabei ist ein mittels eines Antriebs 76 senkrecht zu der Förderrichtung F bewegbarer Schieber 75 vorgesehen, welcher mit einem senkrecht zu der Förderrichtung F feststehenden Anschlag 77 zusammenwirkt, um ein Produkt 15 senkrecht zu der Förderrichtung F auf der Produktauflagefläche 73 zu positionieren.

Um ein Produkt 15 auf eine jeweilige Spur S1 oder S2 der Fördereinrichtung 69 zu verteilen (vgl. Fig. 1A bis 1C), ist das Förderband 83 von einem Tragelement 85 getragen, welches mittels einer Führung 87 über zwei Führungsrohre 88 senkrecht zu der Förderrichtung F verschiebbar ist.

Wie Fig. 13A zeigt, weist das Tragelement 85 darüber hinaus einen Antrieb 109 zur Bewegung des Förderbandes 83 in Förderrichtung F auf. Ferner umfasst das Tragelement 85 eine Wägezelle 79, welche dazu ausgebildet ist, das Gewicht eines oder gegebenenfalls mehrerer auf der Produktauflagefläche 73 aufliegender Produkte 15 zu bestimmen.

Entsprechend kann mittels der Verteileinrichtung sowohl das Gewicht eines aufliegenden Produktes 15 bestimmt als auch eine Verteilung auf die Spuren S1 und S2 der nachfolgenden Fördereinrichtung 69 erreicht werden. Auch dadurch kann die Erstreckung des in den Fig. 1A bis 1C gezeigten Systems 99 zum Pressen und Weitergeben von Produkten 15 in Förderrichtung F minimiert werden, indem diese beiden Bearbeitungsschritte, das Wiegen der Produkte 15 und das Verteilen der Produkte 15 auf die Spuren S1 und S2, mittels eines einzigen Bauelementes, der Verteileinrichtung 71, erfolgen.

Insbesondere kann es vorgesehen sein, dass die Steuereinrichtung 81 der Verteileinrichtung 71 diese in Abhängigkeit von dem mittels der Wägezelle 79 bestimmten Gewicht eines auf der Produktauflagefläche 73 aufliegenden Produkts 15 steuert. Beispielsweise kann es vorgesehen sein, im Zuge eines Verarbeitungsprozesses Produkte eines annähernd gleichen Gesamtgewichts auf die Spuren S1 und S2 zu verteilen und der Aufschneidevorrichtung 89 zuzuführen. Entsprechend kann die Verteileinrichtung 71 von der Steuereinrichtung 81 dazu angesteuert werden, ein relatives schweres Produkt 15, insbesondere ein Produkt 15 mit einem über dem Durchschnittsgewicht der bis dahin verarbeiteten Produkte 15 liegenden Gewicht, auf eine der Spuren S1 oder S2 zu verteilen, auf der bis dahin Produkte 15 eines relativ geringeren Gesamtgewichtes gefördert wurden.

Es ist möglich, dass die Verteileinrichtung 71 die Produkte 15 beschleunigt in Förderrichtung F bewegt. Dadurch kann erreicht werden, dass der im Vergleich zu dem Pressvorgang langsamer, jedoch in zwei Spuren S1 und S2 parallel erfolgende Aufschneidevorgang mittels der Aufschneidevorrichtung 89 kontinuierlich durchgeführt werden kann und die Produkte 15 zuführseitig ausreichend schnell auf die beiden Spuren S1 und S2 verteilt werden können. Mittels der Fördereinrichtung 69 kann dabei insbesondere erreicht werden, die beschleunigte Bewegung der Produkte 15 im Zuge der Übergabe von der Verteileinrichtung 71 auf die Fördereinrichtung 69 von der im Vergleich dazu verlangsamten und kontinuierlichen Zuführung der Produkte 15 mittels der Produktzufuhr 91 zu entkoppeln und diese Bewegungen auszugleichen.

Ferner kann die Verteileinrichtung 71, beispielsweise über die Steuereinrichtung 81 mit einer an dem Übergang von der Verteileinrichtung 71 zu der Fördereinrichtung 69 angeordneten Scaneinrichtung 101 verbunden sein, so dass dieser unter Berücksichtigung der von der Verteileinrichtung 71 gemeldeten Beschleunigungen bzw. Geschwindigkeiten des Produktes 15 in Förderrichtung F ein örtlich exakt aufgelöstes Bild der Produktoberfläche erstellen kann, welches bei der weiteren Verarbeitung berücksichtigt werden kann. Dazu ist die Scaneinrichtung 101 an dem Übergang zwischen dem Förderband 83 der Verteileinrichtung 71 und den Förderbändern 103 der Spuren S1 und S2 der Fördereinrichtung 69 angeordnet, sodass der Scanvorgang gestartet werden kann, wenn das Produkt 15 den Übergang erreicht, und das gesamte Produkt 15 im Zuge der Übergabe an die Fördereinrichtung 69 untersucht werden kann.

In der voranstehenden Beschreibung der Figuren wurde insbesondere das Zusammenwirken der einzelnen Komponenten des Systems 99 zum Pressen und Weitergeben von Produkten 15 beschrieben. Dennoch wird für jede der beschriebenen Komponenten, für die beschriebene Presseinrichtung 11, für das detailliert beschriebene Kontaktelement 21 mit einer in zwei Dimensionen veränderbaren Kontaktfläche 65 sowie für die Verteileinrichtung 71, auch unabhängig von dem System 99 Schutz beansprucht.

### Bezugszeichenliste

- 11: Presseinrichtung
- 15: Produkt
- 17: Presskammer
- 18: erstes Gegenelement, Längswand
- 19: zweites Gegenelement, Auflagefläche
- 20: drittes Gegenelement, Breitenwand
- 21: erstes Kontaktelement, Längsstempel
- 22: zweites Kontaktelement, Vertikalstempel
- 23: drittes Kontaktelement, Breitenstempel
- 24: erster Servomotor
- 25: zweiter Servomotor
- 26: dritter Servomotor
- 27: Spindeltrieb
- 29: Synchronisationselement der Spindeltriebe
- 30: Riemenscheibe
- 31: Spindelmutter
- 32: Spindel
- 33: Rundführung
- 37: Auswerte- und Steuereinrichtung der Presseinrichtung
- 39: Pneumatikzylinder des Längsstempels
- 41: seitlicher Einlass
- 43: Pneumatikzylinder zum Versperren/Freigeben des seitlichen Einlasses
- 45: Einfuhrabschnitt
- 47: Einbringeinrichtung
- 48: Schiebeelement
- 49: Längsausgang
- 51: Pneumatikzylinder zum Versperren/Freigeben des Längsausgangs
- 53: Haltestruktur
- 54: Zuführband
- 55: Zwischenrahmen
- 57: Basisteil
- 59: Aufsatzteil
- 61: Querverschiebeteil
- 63: Höhenteil
- 65: Kontaktfläche
- 67: Synchronisationselement
- 68: Kniehebelgelenk
- 69: Fördereinrichtung
- 70: Feder
- 71: Verteileinrichtung
- 73: Produktauflagefläche
- 75: Schieber
- 76: Antrieb
- 77: Anschlag
- 79: Wägezelle
- 81: Steuereinrichtung
- 83: Förderband der Verteileinrichtung
- 85: Tragelement
- 87: Führung des Tragelementes
- 88: Führungsrohr
- 89: Aufschneidevorrichtung
- 91: Produktzufuhr
- 93: Schneidbereich
- 95: Portionsfördereinrichtung
- 97: Messeinrichtung
- 99: System zum Pressen und Weitergeben von Fleischprodukten
- 101: Scaneinrichtung
- 103: Förderband
- 105: Druckplatte
- 107: Umlenkrolle
- 108: Überlappungsabschnitt
- 109: Antrieb
- 111: erster Dichtabschnitt des Aufsatzteils
- 113: zweiter Dichtabschnitt des Aufsatzteils
- 115: Dichtabschnitt des Querverschiebeteils
- 117: Dichtabschnitt des Höhenteils

- A: wirksame Länge
- A1: maximale wirksame Länge
- B: wirksame Breite
- B1: maximale wirksame Breite
- E1: erste Erstreckungsrichtung
- E2: zweite Erstreckungsrichtung
- F: Förderrichtung
- L: Längsachse
- S1: erste Spur
- S2: zweite Spur

## Patentansprüche

1. Presseinrichtung (11) zum Pressen von Fleischprodukten (15), insbesondere gefrorenen und/oder angefrorenen Fleischprodukten, bevorzugt Frischfleischprodukten und/oder Bacon, mit einer sich entlang einer Längsachse (L) erstreckenden Presskammer (17), in welche ein zu pressendes Produkt (15) einbringbar ist,
wobei die Presskammer (17) zumindest ein Gegenelement (18, 19, 20) und wenigstens ein in Richtung des Gegenelementes (18, 19, 20) verfahrbares Kontaktelement (21, 22, 23) umfasst, die derart zusammenwirken, dass das in die Presskammer (17) eingebrachte Produkt (15) zwischen dem zumindest einen Gegenelement (18, 19, 20) und dem zumindest einen Kontaktelement (21, 22, 23) komprimierbar ist,
**dadurch gekennzeichnet, dass**
die Presseinrichtung (11) zumindest einen Servomotor (24, 25, 26) umfasst, welcher dazu ausgebildet ist, das wenigstens eine Kontaktelement (21, 22, 23) zu verfahren,
wobei das Kontaktelement (21) ferner mit einem weiteren Servomotor verbunden ist, welcher dazu ausgebildet ist, das Kontaktelement (21) vor dem Pressen in Richtung des Gegenelements (18) zu positionieren und nach dem Pressen auszustoßen,
und dass
das Kontaktelement (21) über eine schnelle Servoachse und eine langsame Servoachse antreibbar ist, wobei die schnelle Servoachse zu einer schnellen Vorpositionierung des Produkts (15) vor dem eigentlichen Pressvorgang durch Ausrichten des Produkts (15) in Richtung des Gegenelements (18) und zu einem Ausstoßen des Produkts (15) nach dem Pressen aus der Presskammer (17) dient, und wobei die langsame Servoachse dazu vorgesehen ist, das Kontaktelement (21) während des eigentlichen Pressvorgangs zu verfahren.

2. Presseinrichtung (11) zum Pressen von Fleischprodukten (15), insbesondere gefrorenen und/oder angefrorenen Fleischprodukten, bevorzugt Frischfleischprodukten und/oder Bacon, mit einer sich entlang einer Längsachse (L) erstreckenden Presskammer (17), in welche ein zu pressendes Produkt (15) einbringbar ist,
wobei die Presskammer (17) zumindest ein Gegenelement (18, 19, 20) und wenigstens ein in Richtung des Gegenelementes (18, 19, 20) verfahrbares Kontaktelement (21, 22, 23) umfasst, die derart zusammenwirken, dass das in die Presskammer (17) eingebrachte Produkt (15) zwischen dem zumindest einen Gegenelement (18, 19, 20) und dem zumindest einen Kontaktelement (21, 22, 23) komprimierbar ist,
**dadurch gekennzeichnet, dass**
die Presseinrichtung (11) zumindest einen Servomotor (24, 25, 26) umfasst, welcher dazu ausgebildet ist, das wenigstens eine Kontaktelement (21, 22, 23) zu verfahren,
wobei das Kontaktelement (21) ferner mit einem Pneumatikzylinder (39) verbunden ist,
wobei der Pneumatikzylinder (39) dazu ausgebildet ist, das Kontaktelement (21) vor dem Pressen in Richtung des Gegenelementes (18) zu positionieren und das Produkt (15) nach dem Pressen mittels des Kontaktelements (21) aus der Presskammer (17) hinauszuschieben.

3. Presseinrichtung (11) nach Anspruch 1 oder 2,
wobei das Kontaktelement (21, 22, 23) mit zumindest einem Linearantrieb, insbesondere Spindeltrieb (27), verbunden ist, wobei der Servomotor (24, 25, 26) dazu ausgebildet ist, den zumindest einen Linearantrieb, insbesondere Spindeltrieb (27), anzutreiben.

4. Presseinrichtung (11) nach einem der vorhergehenden Ansprüche,
wobei das Kontaktelement (22, 23) mit mehreren, insbesondere zwei, drei oder vier, Linearantrieben, insbesondere Spindeltrieben (27), verbunden ist, welche mittels des Servomotors (24, 25, 26) antreibbar sind,
insbesondere wobei die mehreren Linearantriebe, insbesondere Spindeltriebe (27), über wenigstens ein Synchronisationselement (29), insbesondere über einen Zahnriemen, miteinander verbunden sind, wobei der Servomotor (24, 25) dazu ausgebildet ist, das wenigstens eine Synchronisationselement (29) anzutreiben, und wobei das wenigstens eine Synchronisationselement (29) dazu ausgebildet ist, eine von dem Servomotor (24, 25) empfangene Antriebsleistung gleichmäßig auf die mehreren Linearantriebe, insbesondere Spindeltriebe (29), zu übertragen, insbesondere wobei genau ein Synchronisationselement (29) zum Verbinden der mehreren Linearantriebe, insbesondere Spindeltriebe (27), vorgesehen ist oder insbesondere wobei genau zwei Synchronisationselemente (29) zum Verbinden der mehreren Linearantriebe, insbesondere Spindeltriebe (27), vorgesehen sind.

5. Presseinrichtung (11) nach einem der vorhergehenden Ansprüche,
wobei die Presskammer (17) eine im Wesentlichen in einer Horizontalebene ausgerichtete Auflagefläche (35) aufweist, auf welcher das eingebrachte Produkt (15) aufliegt, wobei der Servomotor (24, 25, 26) unterhalb der Auflagefläche (35) angeordnet ist.

6. Presseinrichtung (11) nach einem der vorhergehenden Ansprüche,
wobei der Servomotor (24, 25, 26) mit einer Auswerte- und Steuereinrichtung (37) verbunden ist, welche zu einem Auswerten von Signalen des Servomotors (24, 25, 26) und einem Steuern des Servomotors (24, 25, 26) in Abhängigkeit der ausgewerteten Signale ausgebildet ist.

7. Presseinrichtung (11) nach einem der vorhergehenden Ansprüche,
wobei die Presskammer (17) einen sich in Richtung deren Längsachse (L) erstreckenden seitlichen Einlass (41) aufweist, durch welchen das zu pressende Produkt (15) in die Presskammer (17) einbringbar ist, wobei das Gegenelement (20) und/oder das Kontaktelement dazu ausgebildet sind, den seitlichen Einlass (41) selektiv freizugeben oder zu versperren,
insbesondere wobei das Gegenelement (20) und/oder das Kontaktelement in im Wesentlichen vertikaler Richtung bewegbar sind, um den seitlichen Einlass (41) selektiv freizugeben oder zu versperren, wobei das Gegenelement (20) und/oder das Kontaktelement insbesondere mittels eines Pneumatikzylinders (43) vertikal bewegbar sind;

8. Presseinrichtung (11) nach Anspruch 7,
wobei die Presseinrichtung (11) einen Einfuhrabschnitt (45) aufweist, auf welchen das zu pressende Produkt (15) auflegbar ist, und wobei die Presseinrichtung (11) eine Einbringeinrichtung (47) aufweist, welche dazu ausgebildet ist, das zu pressende Produkt (15) durch den seitlichen Einlass (41) in die Presskammer (17) einzubringen, insbesondere einzuschieben.

9. Presseinrichtung (11) nach einem der vorhergehenden Ansprüche,
wobei die Presskammer (17) einen Längsausgang (49) aufweist, durch welchen das gepresste Produkt (15) entlang der durch die Längsachse (L) der Presskammer (17) definierten Richtung aus der Presskammer (17) führbar ist, wobei das Gegenelement (18) und/oder das Kontaktelement dazu ausgebildet sind, den Längsausgang (49) selektiv freizugeben oder zu versperren,
insbesondere wobei das Gegenelement (18) und/oder das Kontaktelement in im Wesentlichen vertikaler Richtung bewegbar sind, um den Längsausgang (49) selektiv freizugeben oder zu versperren, wobei das Gegenelement (18) und/oder das Kontaktelement insbesondere mittels eines Pneumatikzylinders (51) vertikal bewegbar sind.

10. Presseinrichtung (11) nach einem der vorhergehenden Ansprüche,
wobei das Kontaktelement (21) in die durch die Längsachse (L) der Presskammer (17) definierte Richtung verfahrbar ist und/oder wobei das Kontaktelement (22) in im Wesentlichen vertikaler Richtung verfahrbar ist und/oder wobei das Kontaktelement (23) senkrecht zu der durch die Längsachse (L) der Presskammer (17) definierten Richtung und senkrecht zu der Vertikalen verfahrbar ist.

11. Presseinrichtung (11) nach einem der vorhergehenden Ansprüche,
wobei die Presseinrichtung (11) drei verfahrbare Kontaktelemente (21, 22, 23) aufweist, die mit jeweiligen Gegenelementen (18, 19, 20) zusammenwirken, insbesondere wobei die drei Kontaktelemente (21, 22, 23) mittels jeweiliger Servomotoren (24, 25, 26) verfahrbar sind.

12. Presseinrichtung (11) nach einem der vorhergehenden Ansprüche,
wobei die Presseinrichtung (11) eine Haltestruktur (53) aufweist, innerhalb derer die Presskammer (17) gelagert ist,
insbesondere wobei die Haltestruktur (53) zumindest in einer Richtung über die Abmessung der Presskammer (17) hinaus erweitert ist, und wobei an dieser Erweiterung das Kontaktelement (21) über seinen den Servomotor (24) umfassenden Verfahrantrieb abgestützt ist,
und/oder insbesondere wobei die Presskammer (17) einen seitlichen Einlass (41), durch welchen das zu pressende Produkt (15) in die Presskammer (17) einbringbar ist, und einen Längsausgang (49) aufweist, durch welchen das gepresste Produkt (15) entlang der durch die Längsachse (L) der Presskammer (17) definierten Richtung aus der Presskammer (17) führbar ist, wobei zwischen der Haltestruktur (53) und dem seitlichen Einlass (41) und zwischen der Haltestruktur (53) und dem Längsausgang (49) ein Zwischenrahmen (55) zur Aufnahme und Weiterleitung der Presskräfte auf die Haltestruktur (53) angeordnet ist.

13. Presseinrichtung (11) nach einem der vorhergehenden Ansprüche, wobei das verfahrbare Kontaktelement (21) ein Basisteil (57), ein Aufsatzteil (59), ein Querverschiebeteil (61) und ein Höhenteil (63) umfasst, die an jeweiligen Verbindungsstellen miteinander verbunden sind und an einer Seite des Kontaktelementes (21) eine Kontaktfläche (65) für ein Produkt (15) während des Pressens bilden, wobei die Kontaktfläche (65) entlang einer ersten Erstreckungsrichtung (E1) eine wirksame Länge (A) und entlang einer zu ersten Erstreckungsrichtung (E2) senkrecht stehenden zweiten Erstreckungsrichtung (E2) eine wirksamen Breite (B) aufweist, wobei die wirksame Länge (A) und die wirksame Breite (B) der Kontaktfläche (65) veränderbar sind.

14. Presseinrichtung (11) nach Anspruch 13,
wobei die jeweiligen Verbindungsstellen des Basisteils (57), des Aufsatzteils (59), des Querverschiebeteils (61) und des Höhenteils (63) derart gestaltet sind, dass der während eines Pressens auf die Kontaktfläche (65) wirkende Druck eine Abdichtung der Verbindungsstellen bewirkt, insbesondere wobei an den Verbindungsstellen elastisch verformbare Dichtelemente vorgesehen sind, welche durch einen während des Pressens auf die Kontaktfläche (65) wirkenden Druck die Verbindungsstellen abdichtend verformbar sind, und/oder insbesondere wobei das Basisteil (57), das Aufsatzteil (59), das Querverschiebeteil (61) und/oder das Höhenteil (63) zumindest einen elastisch verformbaren Dichtabschnitt aufweisen, welcher durch einen während des Pressens auf die Kontaktfläche (65) wirkenden Druck die jeweilige Verbindungsstelle abdichtend verformbar ist;
und/oder
wobei das Querverschiebeteil (61) relativ zu dem Basisteil (57) entlang der ersten Erstreckungsrichtung (E1) verschiebbar ist;
und/oder
wobei das Querverschiebeteil (61) entlang der ersten Erstreckungsrichtung (E1) in Richtung einer maximalen wirksamen Länge (A1) vorgespannt ist; und/oder
wobei das Aufsatzteil (59) gemeinsam mit dem Querverschiebeteil (61) entlang der ersten Erstreckungsrichtung (E1) relativ zu dem Basisteil (57) verschiebbar ist, und wobei das Aufsatzteil (59) relativ zu dem Querverschiebeteil (61) und dem Basisteil (57) entlang der zweiten Erstreckungsrichtung (E2) verstellbar ist;
und/oder
wobei das Höhenteil (63) relativ zu dem Basisteil (57) und dem Querverschiebeteil (61) entlang der zweiten Erstreckungsrichtung (E2) verstellbar ist;
und/oder
wobei das Aufsatzteil (59) und das Höhenteil (63) entlang der zweiten Erstreckungsrichtung (E2) verstellbar und in Richtung einer maximalen wirksamen Breite (B2) vorgespannt sind, wobei zumindest ein Synchronisationselement (67) vorgesehen ist, welches dazu ausgebildet ist, eine Verstellung des Aufsatzteils (59) und des Höhenteils (63) entlang der zweiten Erstreckungsrichtung (E2) zu synchronisieren.

## Claims

1. A pressing device (11) for pressing meat products (15), in particular frozen and/or partly frozen meat products, preferably fresh meat products and/or bacon, comprising a pressing chamber (17) which extends along a longitudinal axis (L) and into which a product to be pressed (15) can be inserted,
wherein the pressing chamber (17) comprises at least one counter-element (18, 19, 20) and at least one contact element (21, 22, 23), the at least one contact element being movable in the direction of the counter-element (18, 19, 20), the at least one contact element and the at least one counter-element cooperating such that the product (15) inserted into the pressing chamber (17) can be compressed between the at least one counter-element (18, 19, 20) and the at least one contact element (21, 22, 23), **characterized in that**
the pressing device (11) comprises at least one servomotor (24, 25, 26) which is configured to move the at least one contact element (21, 22, 23), wherein the contact element (21) is further connected to a further servomotor which is configured to position the contact element (21) in the direction of the counter-element (18) before the pressing and to eject the contact element (21) after the pressing;
and **in that**
the contact element (21) can be driven via a fast servo axle and a slow servo axle,
wherein the fast servo axle serves for a fast pre-positioning of the product (15) before the actual pressing process by orienting the product (15) in the direction of the counter-element (18) and for an ejection of the product (15) from the pressing chamber (17) after the pressing, and
wherein the slow servo axle is provided to move the contact element (21) during the actual pressing process.

2. A pressing device (11) for pressing meat products (15), in particular frozen and/or partly frozen meat products, preferably fresh meat products and/or bacon, comprising a pressing chamber (17) which extends along a longitudinal axis (L) and into which a product to be pressed (15) can be inserted,
wherein the pressing chamber (17) comprises at least one counter-element (18, 19, 20) and at least one contact element (21, 22, 23), the at least one contact element being movable in the direction of the counter-element (18, 19, 20), the at least one contact element and the at least one counter-element cooperating such that the product (15) inserted into the pressing chamber (17) can be compressed between the at least one counter-element (18, 19, 20) and the at least one contact element (21, 22, 23), **characterized in that**
the pressing device (11) comprises at least one servomotor (24, 25, 26) which is configured to move the at least one contact element (21, 22, 23), wherein the contact element (21) is further connected to a pneumatic cylinder (39);
wherein the pneumatic cylinder (39) is configured to position the contact element (21) in the direction of the counter-element (18) before the pressing and to push the product (15) out of the pressing chamber (17) after the pressing by means of the contact element (21).

3. A pressing device (11) according to claim 1 or 2,
wherein the contact element (21, 22, 23) is connected to at least one linear drive, in particular a spindle drive (27), with the servomotor (24, 25, 26) being configured to drive the at least one linear drive, in particular a spindle drive (27).

4. A pressing device (11) according to any one of the preceding claims,
wherein the contact element (22, 23) is connected to a plurality of linear drives, in particular two, three or four linear drives, in particular spindle drives (27), which can be driven by means of the servomotor (24, 25, 26), in particular wherein the plurality of linear drives, in particular spindle drives (27), are connected to one another via at least one synchronization element (29), in particular via a toothed belt; wherein the servomotor (24, 25) is configured to drive the at least one synchronization element (29); and wherein the at least one synchronization element (29) is configured to uniformly transmit a drive power received by the servomotor (24, 25) to the plurality of linear drives, in particular spindle drives (29), in particular with exactly one synchronization element (29) being provided to connect the plurality of linear drives, in particular spindle drives (27), or in particular with exactly two synchronization elements (29) being provided to connect the plurality of linear drives, in particular spindle drives (27).

5. A pressing device (11) according to any one of the preceding claims, wherein the pressing chamber (17) has a support surface (35) which is substantially oriented in a horizontal plane and on which the inserted product (15) is disposed, with the servomotor (24, 25, 26) being arranged beneath the support surface (35).

6. A pressing device (11) according to any one of the preceding claims, wherein the servomotor (24, 25, 26) is connected to an evaluation and control device (37) which is configured to evaluate signals of the servomotor (24, 25, 26) and to control the servomotor (24, 25, 26) in dependence on the evaluated signals.

7. A pressing device (11) according to any one of the preceding claims, wherein the pressing chamber (17) has a lateral inlet (41) which extends in the direction of the longitudinal axis (L) of the pressing chamber (17) and through which the product (15) to be pressed can be inserted into the pressing chamber (17), with the counter-element (20) and/or the contact element being configured to selectively release or block the lateral inlet (41),
in particular wherein the counter-element (20) and/or the contact element is/are movable in a substantially vertical direction to selectively release or block the lateral inlet (41), wherein the counter-element (20) and/or the contact element is/are in particular vertically movable by means of a pneumatic cylinder (43).

8. A pressing device (11) according to claim 7,
wherein the pressing device (11) has an introduction section (45) onto which the product (15) to be pressed can be placed; and wherein the pressing device (11) has an insertion device (47) which is configured to insert, in particular to push, the product (15) to be pressed through the lateral inlet (41) into the pressing chamber (17).

9. A pressing device (11) according to any one of the preceding claims, wherein the pressing chamber (17) has a longitudinal outlet (49) through which the pressed product (15) can be guided out of the pressing chamber (17) along the direction defined by the longitudinal axis (L) of the pressing chamber (17), with the counter-element (18) and/or the contact element being configured to selectively release or block the longitudinal outlet (49), in particular wherein the counter-element (18) and/or the contact element is/are movable in a substantially vertical direction to selectively release or block the longitudinal outlet (49), with the counter-element (18) and/or the contact element in particular being vertically movable by means of a pneumatic cylinder (51).

10. A pressing device (11) according to any one of the preceding claims, wherein the contact element (21) is movable in the direction which is defined by the longitudinal axis (L) of the pressing chamber (17); and/or wherein the contact element (22) is movable in a substantially vertical direction; and/or wherein the contact element (23) is movable perpendicular to the direction defined by the longitudinal axis (L) of the pressing chamber (17) and perpendicular to the vertical.

11. A pressing device (11) according to any one of the preceding claims, wherein the pressing device (11) has three movable contact elements (21, 22, 23) which cooperate with respective counter-elements (18, 19, 20), in particular with the three contact elements (21, 22, 23) being movable by means of respective servomotors (24, 25, 26).

12. A pressing device (11) according to any one of the preceding claims,
wherein the pressing device (11) has a holding structure (53) within which the pressing chamber (17) is supported;
in particular wherein the holding structure (53) is extended in at least one direction beyond the dimension of the pressing chamber (17), and wherein the contact element (21) is supported at this extent via its travel drive comprising the servomotor (24);
and/or in particular wherein the pressing chamber (17) has a lateral inlet (41), through which the product (15) to be pressed can be inserted into the pressing chamber (17), and a longitudinal outlet (49) through which the pressed product (15) can be guided out of the pressing chamber (17) along the direction defined by the longitudinal axis (L) of the pressing chamber (17); and wherein an intermediate frame (55) for receiving and transmitting the pressing forces to the holding structure (53) is arranged between the holding structure (53) and the lateral inlet (41) and between the holding structure (53) and the longitudinal outlet (49).

13. A pressing device (11) according to any one of the preceding claims, wherein the movable contact element (21) comprises a base part (57); an attachment part (59); a transverse sliding part (61); and a height part (63) which are connected to one another at respective connection points and which form a contact surface (65) for a product (15) at one side of the contact element (21) during the pressing; wherein the contact surface (65) has an effective length (A) along a first direction of extent (E1) and an effective width (B) along a second direction of extent (E2) perpendicular to the first direction of extent (E2); and wherein the effective length (A) and the effective width (B) of the contact surface (65) are variable.

14. A pressing device according to claim 13,
wherein the respective connection points of the base part (57), of the attachment part (59), of the transverse sliding part (61), and of the height part (63) are designed such that the pressure acting on the contact surface (65) during a pressing brings about a sealing of the connection points; in particular wherein elastically deformable sealing elements are provided at the connection points and can be deformed, while sealing the connection points, by a pressure acting on the contact surface (65) during the pressing; and/or in particular wherein the base part (57), the attachment part (59), the transverse sliding part (61), and/or the height part (63) have at least one elastically deformable sealing section which can be deformed, while sealing the respective connection point, by a pressure acting on the contact surface (65) during the pressing;
and/or
wherein the transverse sliding part (61) is displaceable relative to the base part (57) along the first direction of extent (E1);
and/or
wherein the transverse sliding part (61) is preloaded along the first direction of extent (E1) in the direction of a maximum effective length (A1); and/or wherein the attachment part (59) is displaceable together with the transverse sliding part (61) relative to the base part (57) along the first direction of extent (E1); and wherein the attachment part (59) is adjustable relative to the transverse sliding part (61) and to the base part (57) along the second direction of extent (E2);
and/or
wherein the height part (63) is adjustable relative to the base part (57) and to the transverse sliding part (61) along the second direction of extent (E2); and/or
wherein the attachment part (59) and the height part (63) are adjustable along the second direction of extent (E2) and are preloaded in the direction of a maximum effective width (B2), with at least one synchronization element (67) being provided which is configured to synchronize an adjustment of the attachment part (59) and of the height part (63) along the second direction of extent (E2).

## Revendications

1. Dispositif de pressage (11) pour presser des produits carnés (15), en particulier des produits carnés surgelés et/ou congelés, de préférence des produits carnés frais et/ou du bacon, comprenant une chambre de pressage (17) qui s'étend le long d'un axe longitudinal (L) et dans laquelle un produit à presser (15) peut être introduit,
la chambre de pressage (17) comprenant au moins un contre-élément (18, 19, 20) et au moins un élément de contact (21, 22, 23) déplaçable en direction du contre-élément (18, 19, 20), qui coopèrent de telle sorte que le produit (15) introduit dans la chambre de pressage (17) peut être comprimé entre ledit au moins un contre-élément (18, 19, 20) et ledit au moins un élément de contact (21, 22, 23),
**caractérisé en ce que**
le dispositif de pressage (11) comprend au moins un servomoteur (24, 25, 26) conçu pour déplacer ledit au moins un élément de contact (21, 22, 23), ledit élément de contact (21) étant en outre relié à un autre servomoteur conçu pour positionner, avant le pressage, l'élément de contact (21) en direction du contre-élément (18) et pour l'éjecter après le pressage,
et **en ce que**
l'élément de contact (21) peut être entraîné par l'intermédiaire d'un servo-axe rapide et d'un servo-axe lent, le servo-axe rapide servant à un pré-positionnement rapide du produit (15), avant l'opération de pressage proprement dite, en orientant le produit (15) en direction du contre-élément (18), et à une éjection du produit (15) hors de la chambre de pressage (17) après le pressage, et le servo-axe lent étant prévu pour déplacer l'élément de contact (21) pendant l'opération de pressage proprement dite.

2. Dispositif de pressage (11) pour presser des produits carnés (15), en particulier des produits carnés surgelés et/ou congelés, de préférence des produits carnés frais et/ou du bacon, comprenant une chambre de pressage (17) qui s'étend le long d'un axe longitudinal (L) et dans laquelle un produit à presser (15) peut être introduit,
la chambre de pressage (17) comprenant au moins un contre-élément (18, 19, 20) et au moins un élément de contact (21, 22, 23) déplaçable en direction du contre-élément (18, 19, 20), qui coopèrent de telle sorte que le produit (15) introduit dans la chambre de pressage (17) peut être comprimé entre ledit au moins un contre-élément (18, 19, 20) et ledit au moins un élément de contact (21, 22, 23),
**caractérisé en ce que**
le dispositif de pressage (11) comprend au moins un servomoteur (24, 25, 26) conçu pour déplacer ledit au moins un élément de contact (21, 22, 23), ledit élément de contact (21) étant en outre relié à un vérin pneumatique (39),
le vérin pneumatique (39) étant conçu pour positionner, avant le pressage, l'élément de contact (21) en direction du contre-élément (18) et pour pousser le produit (15), après le pressage, hors de la chambre de pressage (17) au moyen de l'élément de contact (21).

3. Dispositif de pressage (11) selon la revendication 1 ou 2,
dans lequel l'élément de contact (21, 22, 23) est relié à au moins un entraînement linéaire, en particulier à un entraînement à broche (27), le servomoteur (24, 25, 26) étant conçu pour entraîner ledit au moins un entraînement linéaire, en particulier ledit entraînement à broche (27).

4. Dispositif de pressage (11) selon l'une des revendications précédentes, dans lequel l'élément de contact (22, 23) est relié à plusieurs, en particulier à deux, trois ou quatre, entraînements linéaires, en particulier à des entraînements à broche (27), qui peuvent être entraînés au moyen du servomoteur (24, 25, 26),
en particulier, lesdits plusieurs entraînements linéaires, en particulier les entraînements à broche (27), sont reliés entre eux par l'intermédiaire d'au moins un élément de synchronisation (29), en particulier par l'intermédiaire d'une courroie crantée,
le servomoteur (24, 25) est conçu pour entraîner ledit au moins un élément de synchronisation (29), et
ledit au moins un élément de synchronisation (29) est conçu pour transmettre régulièrement auxdits plusieurs entraînements linéaires, en particulier aux entraînements à broche (29), une puissance d'entraînement encaissée provenant du servomoteur (24, 25),
en particulier, il est prévu exactement un élément de synchronisation (29) pour relier lesdits plusieurs entraînements linéaires, en particulier les entraînements à broche (27), ou
en particulier, il est prévu exactement deux éléments de synchronisation (29) pour relier lesdits plusieurs entraînements linéaires, en particulier les entraînements à broche (27).

5. Dispositif de pressage (11) selon l'une des revendications précédentes, dans lequel la chambre de pressage (17) présente une surface de support (35) orientée sensiblement dans un plan horizontal, sur laquelle repose le produit (15) introduit, le servomoteur (24, 25, 26) étant disposé en dessous de la surface de support (35).

6. Dispositif de pressage (11) selon l'une des revendications précédentes, dans lequel le servomoteur (24, 25, 26) est relié à un dispositif d'évaluation et de commande (37) qui est conçu évaluer des signaux du servomoteur (24, 25, 26) et pour commander le servomoteur (24, 25, 26) en fonction des signaux évalués.

7. Dispositif de pressage (11) selon l'une des revendications précédentes, dans lequel la chambre de pressage (17) présente une entrée latérale (41) s'étendant dans la direction de son axe longitudinal (L), à travers laquelle le produit à presser (15) peut être introduit dans la chambre de pressage (17), le contre-élément (20) et/ou l'élément de contact étant conçues pour libérer ou bloquer sélectivement l'entrée latérale (41),
en particulier, le contre-élément (20) et/ou l'élément de contact peuvent être déplacés dans une direction sensiblement verticale, afin de libérer ou de bloquer sélectivement l'entrée latérale (41),
le contre-élément (20) et/ou l'élément de contact peuvent être déplacés verticalement, en particulier au moyen d'un vérin pneumatique (43).

8. Dispositif de pressage (11) selon la revendication 7,
dans lequel le dispositif de pressage (11) présente une section d'introduction (45) sur laquelle le produit à presser (15) peut être posé, et
le dispositif de pressage (11) présente un dispositif d'introduction (47) qui est conçu pour introduire, en particulier pour pousser, le produit à presser (15) dans la chambre de pressage (17) à travers l'entrée latérale (41).

9. Dispositif de pressage (11) selon l'une des revendications précédentes, dans lequel la chambre de pressage (17) présente une sortie longitudinale (49) à travers laquelle le produit pressé (15) peut être mené hors de la chambre de pressage (17) le long de la direction définie par l'axe longitudinal (L) de la chambre de pressage (17),
le contre-élément (18) et/ou l'élément de contact sont conçus pour libérer ou bloquer sélectivement la sortie longitudinale (49),
en particulier, le contre-élément (18) et/ou l'élément de contact peuvent être déplacés dans une direction sensiblement verticale, afin de libérer ou de bloquer sélectivement la sortie longitudinale (49),
le contre-élément (18) et/ou l'élément de contact peuvent être déplacés verticalement, en particulier au moyen d'un vérin pneumatique (51).

10. Dispositif de pressage (11) selon l'une des revendications précédentes, dans lequel l'élément de contact (21) est déplaçable dans la direction définie par l'axe longitudinal (L) de la chambre de pressage (17), et/ou l'élément de contact (22) est déplaçable dans une direction sensiblement verticale, et/ou
l'élément de contact (23) est déplaçable perpendiculairement à la direction définie par l'axe longitudinal (L) de la chambre de pressage (17) et perpendiculairement à la verticale.

11. Dispositif de pressage (11) selon l'une des revendications précédentes, dans lequel le dispositif de pressage (11) comprend trois éléments de contact déplaçables (21, 22, 23) qui coopèrent avec des contre-éléments respectifs (18, 19, 20),
en particulier, les trois éléments de contact (21, 22, 23) peuvent être déplacés au moyen de servomoteurs respectifs (24, 25, 26).

12. Dispositif de pressage (11) selon l'une des revendications précédentes, dans lequel le dispositif de pressage (11) présente une structure de maintien (53) à l'intérieur de laquelle est montée la chambre de pressage (17), en particulier, la structure de maintien (53) est élargie au moins dans une direction au-delà de la dimension de la chambre de pressage (17), et l'élément de contact (21) est supporté sur cet élargissement par son entraînement de déplacement comprenant le servomoteur (24), et/ou en particulier, la chambre de pressage (17) présente une entrée latérale (41) à travers laquelle le produit à presser (15) peut être introduit dans la chambre de pressage (17), et une sortie longitudinale (49) à travers laquelle le produit pressé (15) peut être mené hors de la chambre de pressage (17) le long de la direction définie par l'axe longitudinal (L) de la chambre de pressage (17),
un cadre intermédiaire (55) est disposé entre la structure de maintien (53) et l'entrée latérale (41) et entre la structure de maintien (53) et la sortie longitudinale (49), qui est destiné à encaisser et à transmettre les forces de pressage à la structure de maintien (53).

13. Dispositif de pressage (11) selon l'une des revendications précédentes, dans lequel l'élément de contact déplaçable (21) comprend une partie de base (57), une partie rapportée (59), une partie de translation transversale (61) et une partie en hauteur (63) qui sont reliées entre elles au niveau de points de liaison respectifs et qui forment une surface de contact (65) pour un produit (15) pendant le pressage, sur un côté de l'élément de contact (21),
la surface de contact (65) présente une longueur efficace (A) le long d'une première direction d'extension (E1) et une largeur efficace (B) le long d'une deuxième direction d'extension (E2) perpendiculaire à la première direction d'extension (E1),
la longueur efficace (A) et la largeur efficace (B) de la surface de contact (65) sont variables.

14. Dispositif de pressage (11) selon la revendication 13,
dans lequel les points de liaison respectifs de la partie de base (57), de la partie rapportée (59), de la partie de translation transversale (61) et de la partie en hauteur (63) sont conçus de telle sorte que la pression agissant sur la surface de contact (65) pendant un pressage assure une étanchéifi-cation des points de liaison,
en particulier, des éléments d'étanchéité élastiquement déformables sont prévus au niveau des points de liaison, qui peuvent être déformés par une pression agissant sur la surface de contact (65) pendant le pressage pour rendre étanches les points de liaison, et/ou
en particulier, la partie de base (57), la partie rapportée (59), la partie de translation transversale (61) et/ou la partie en hauteur (63) présentent au moins une section d'étanchéité élastiquement déformable qui peut être déformée par une pression agissant sur la surface de contact (65) pendant le pressage pour rendre étanche le point de liaison respectif ;
et/ou
la partie de translation transversale (61) peut être déplacée par rapport à la partie de base (57) le long de la première direction d'extension (E1) ; et/ou
la partie de translation transversale (61) est précontrainte le long de la première direction d'extension (E1) en direction d'une longueur effective maximale (A1) ; et/ou
la partie rapportée (59) peut être déplacée conjointement avec la partie de translation transversale (61) le long de la première direction d'extension (E1) par rapport à la partie de base (57), et
la partie rapportée (59) est réglable le long de la deuxième direction d'extension (E2) par rapport à la partie de translation transversale (61) et à la partie de base (57) ;
et/ou
la partie en hauteur (63) est réglable le long de la deuxième direction d'extension (E2) par rapport à la partie de base (57) et à la partie de translation transversale (61) ;
et/ou
la partie rapportée (59) et la partie en hauteur (63) sont réglables le long de la deuxième direction d'extension (E2) et sont précontraintes en direction d'une largeur efficace maximale (B2),
il est prévu au moins un élément de synchronisation (67) conçu pour synchroniser un réglage de la partie rapportée (59) et de la partie en hauteur (63) le long de la deuxième direction d'extension (E2).
